# EUROPEAN PATENT APPLICATION

(11) **EP 4 506 100 A1**
(43) Date of publication of application: **12.02.2025**
(21) Application number: 22936495.5
(22) Date of filing: 06.04.2022
(51) Int. Cl.: B23K 26/342, B23K 26/08, B23K 26/10, B23K 26/34

(54) **MACHINING METHOD, MACHINING SYSTEM, AND INFORMATION ACQUIRING METHOD**

(71) Applicant: Nikon Corporation, Tokyo 140-8601 (JP)
(72) Inventor: TAKIGUCHI, Norihito, Tokyo 140-8601 (JP); NAKAUNE, Yusuke, Tokyo 140-8601 (JP); WATANABE, Shun, Tokyo 140-8601 (JP); ENDO, Yu, Tokyo 140-8601 (JP); KIMURA, Yuji, Tokyo 140-8601 (JP); NAKAGAWA, Tomoya, Tokyo 140-8601 (JP)
(74) Representative: Hoffmann Eitle
(86) International application number: PCT/JP2022/017163
(87) International publication number: WO 2023/195095

(57) **Abstract**

A processing method is a processing method for processing a processing target object held by a holding tool, and acquires holding tool information related to a position of a reference part of the holding tool placed in the processing apparatus, in a processing coordinate system; sets the holding tool in a measurement apparatus; acquires, by using the measurement apparatus, measurement information including information related to a three-dimensional shape of the processing target object in a measurement coordinate system and information related to a position of the reference part in the measurement coordinate system; generates processing path information based on the measurement information and the holding tool information; places the holding tool, which has been taken out of the measurement apparatus, in the processing apparatus; and processes the processing target object on the holding tool placed in the processing apparatus based on the processing path information.

## Description

### Technical Field

The present invention relates to a processing method and a processing system that are capable of processing a processing target object, and an information acquisition method that is capable of acquiring information related to a position of a holding tool for holding the processing target object, for example.

### Background Art

A Patent Literature 1 discloses one example of a processing method that processes a processing target object by using a processing apparatus. One technical problem of the processing method is to accurately process the processing target object.

### Citation List

### Patent Literature

Patent Literature 1: US2015/0034266A1

### Summary of Invention

A first aspect provides a processing method that processes a processing target object by using a processing apparatus configured to process the processing target object by irradiating the processing target object held by a holding tool with a processing beam, wherein the processing method includes: acquiring holding tool information that includes information related to a position of a reference part of the holding tool, which is placed at a reference placement position of the processing apparatus, in a processing coordinate system of the processing apparatus; setting the holding tool holding the processing target object in a measurement apparatus; acquiring, by using the measurement apparatus, measurement information that includes information related to a three-dimensional shape of the processing target object on the holding tool in a measurement coordinate system of the measurement apparatus and information related to a position of the reference part in the measurement coordinate system; taking the holding tool holding the processing target object out of the measurement apparatus; generating processing path information indicating a target irradiation position, which should be irradiated with the processing beam to process the processing target object, in the processing coordinate system based on the measurement information and the holding tool information that has been acquired before setting the holding tool, which holds the processing target object and which has been taken out of the measurement apparatus, in the processing apparatus; placing the holding tool, which holds the processing target object and which has been taken out of the measurement apparatus, at the reference placement position of the processing apparatus; and processing the processing target object on the holding tool, which is placed at the reference placement position of the processing apparatus, based on the processing path information.

A second aspect provides a processing method that processes a processing target object by using a processing apparatus configured to process the processing target object by irradiating the processing target object held by a holding tool with a processing beam, wherein the processing method includes: acquiring holding tool information that includes information related to a position of a reference part of the holding tool, which is placed at a reference placement position of the processing apparatus, in a processing coordinate system of the processing apparatus; setting the holding tool holding the processing target object in a measurement apparatus; acquiring, by using the measurement apparatus, measurement information that includes information related to a three-dimensional shape of the processing target object on the holding tool in a measurement coordinate system of the measurement apparatus and information related to a position of the reference part in the measurement coordinate system; taking the holding tool holding the processing target object out of the measurement apparatus; generating processing path information indicating a target irradiation position, which should be irradiated with the processing beam to process the processing target object, in the processing coordinate system based on the holding tool information and the measurement information; placing the holding tool, which holds the processing target object and which has been taken out of the measurement apparatus, at the reference placement position of the processing apparatus; irradiating the processing target object with a non-processing beam, which is different from the processing beam, based on the generated processing path information; detecting an irradiation state of the non-processing beam to the processing target object; and processing the processing target object on the holding tool, which is placed at the reference placement position of the processing apparatus, based on the generated processing path information and a detected result of the irradiation state.

A third aspect provides an information acquisition method that acquires holding tool information related to a holding tool, which is used to process a processing target object by a processing apparatus that is configured to process the processing target object by irradiating the processing target object held by the holding tool with a processing beam, wherein the information acquisition method includes: placing the holding tool at a reference placement position of the processing apparatus; performing a processing on a surface of a reference member, which is positioned in the holding tool to have a predetermined positional relationship with respect to a reference part of the holding tool placed at the reference placement position, by irradiating a specific coordinate in a processing coordinate system of the processing apparatus with the processing beam by using the processing beam; measuring a position of a processed part of the surface of the reference member; and acquiring, based on a result of the measuring, the holding tool information that includes information related to a position of the reference part of the holding tool, which is placed at the reference placement position, in the processing coordinate system.

A fourth aspect provides a processing method that processes a processing target object by using a processing apparatus configured to process the processing target object by irradiating the processing target object with a processing beam, wherein the processing method includes: acquiring processing path information indicating a target movement path of a target irradiation position, which should be irradiated with the processing beam to process the processing target object; irradiating the processing target object with a beam from the processing apparatus based on the acquired processing path information; detecting an irradiation state in which the processing target object is irradiated with the beam; correcting the acquired processing path information in a case where it is determined based on a detected result of the irradiation state that an object different from the processing target object is irradiated with the processing beam; and processing the processing target object by irradiating the processing target object with the processing beam based on the corrected processing path information.

A fifth aspect provides a processing system that is configured to perform the processing method provided by the first aspect, the second aspect or the fourth aspect.

A sixth aspect provides a processing method that processes a processing target object by using a processing apparatus configured to process the processing target object by irradiating the processing target object held by a holding tool with a processing beam, wherein the processing method comprises: setting the holding tool holding the processing target object in a measurement apparatus; acquiring, by using the measurement apparatus, measurement information that includes information related to a three-dimensional shape of the processing target object on the holding tool in a measurement coordinate system of the measurement apparatus; taking the holding tool holding the processing target object out of the measurement apparatus; generating processing path information indicating a target irradiation position, which should be irradiated with the processing beam to process the processing target object, in a processing coordinate system of the processing apparatus based on the measurement information; placing the holding tool, which holds the processing target object and which has been taken out of the measurement apparatus, at a reference placement position of the processing apparatus; and processing the processing target object on the holding tool, which is placed at the reference placement position of the processing apparatus, based on the processing path information.

An operation and another advantage of the present invention will be apparent from an example embodiment described below.

### Brief Description of Drawings

[FIG. 1] FIG. 1 is a block diagram that illustrates an entire configuration of a processing system in a present example embodiment.
[FIG. 2] FIG. 2 is a block diagram that illustrates a system configuration of a processing apparatus in the present example embodiment.
[FIG. 3] FIG. 3 is a cross-sectional view that illustrates a configuration of the processing apparatus in a present example embodiment.
[FIG. 4] FIG. 4A is a perspective view that illustrates a structure of a holding tool that does not actually hold a workpiece, and FIG. 4B is a perspective view that illustrates a structure of the holding tool that actually holds the workpiece..
[FIG. 5] FIG. 5A is a top view that illustrates a plate fixing member, and FIG. 5B is a cross-sectional view of the plate fixing member (specifically, an A-A' cross-sectional view of FIG. 5A).
[FIG. 6] FIG. 6 is a block diagram that illustrates a configuration of a measurement system.
[FIG. 7] FIG. 7 is a block diagram that illustrates a configuration of a shape measurement apparatus.
[FIG. 8] FIG. 8 is a block diagram that illustrates a configuration of a path generation apparatus.
[FIG. 9] FIG. 9 illustrates a data structure of a calibration information DB.
[FIG. 10] Each of FIG. 10A to FIG 10E is a cross-sectional view that illustrates an aspect in which a certain area on a workpiece is irradiated with processing light and a build material is supplied thereto.
[FIG. 11] Each of FIG. 11A to FIG. 11C is a cross-sectional view that illustrates a process for forming a three-dimensional structural object.
[FIG. 12] FIG. 12A is a cross-sectional view that illustrates a processing head irradiating a first directional surface of the workpiece with the processing light, and FIG. 12B is a cross-sectional view that illustrates the processing head irradiating a second directional surface of the workpiece with the processing light,
[FIG. 13] FIG. 13 is a flowchart that illustrates a flow of a calibration operation.
[FIG. 14] FIG. 14 is a cross-sectional view that illustrates one example of a base plate.
[FIG. 15] FIG. 15A is a cross-sectional view that illustrates the base plate processed by the processing apparatus, and FIG. 15B is a top view that illustrates the base plate processed by the processing apparatus.
[FIG. 16] FIG. 16A is a cross-sectional view that illustrates one example of the base plate, and
FIG. 16B is a top view that illustrates one example of the base plate.
[FIG. 17] Each of FIG. 17A and FIG. 17C is a cross-sectional view that illustrates the base plate that is irradiated with a plurality of guide lights, and each of FIG. 17B and FIG. 17D is a top view that illustrates the base plate that is irradiated with the plurality of guide lights.
[FIG. 18] FIG. 18 is a top view that illustrates a positional relationship between a processed portion of the base plate and a reference part of the holding tool.
[FIG. 19] FIG. 19 is a cross-sectional view that illustrates the positional relationship between the processed portion of the base plate and the reference part of the holding tool.
[FIG. 20] FIG. 20 is a flowchart that illustrates a flow of a processing path generation operation.
[FIG. 21] FIG. 21 illustrates a measurement model, a target model, and a processing model.
[FIG. 22] FIG. 22 illustrates the measurement model, the target model, and the processing model.
[FIG. 23] FIG. 23 is a flowchart that illustrates a flow of a processing path evaluation operation.
[FIG. 24] FIG. 24 illustrates a validation movement path.
[FIG. 25] Each of FIG. 25A and FIG. 25B illustrates an actual movement path of an irradiation position of validation light in a case where the workpiece is irradiated with the validation light along the validation movement path illustrated in FIG. 24.
[FIG. 26] FIG. 26 illustrates a positional relationship between the processing path and the workpiece.
[FIG. 27] FIG. 27A illustrates a relationship between a movement path of the validation light that is estimated from the validation movement path and the actual movement path of the irradiation position of the validation light, and FIG. 27B illustrates a corrected processing path.
[FIG. 28] Each of FIG. 28A to FIG. 28C is a cross-sectional view that illustrates the workpiece held by the holding tool.
[FIG. 29] FIG. 29 illustrates the validation movement path.
[FIG. 30] Each of FIG. 30A and FIG. 30B illustrates a positional relationship between the workpiece W (specifically, an estimated outer edge of the workpiece W) and the processing path.
[FIG. 31] FIG. 31 illustrates the validation movement path.

### Example Embodiments

Next, with reference to drawings, an example embodiment of a processing method, a processing system, and an information acquisition method will be described. In the below-described description, the example embodiment of the processing method, the processing system, and the information acquisition method will be described by using a processing system SYS that is configured to process a workpiece W that is one example of a processing target object.

### (1) Configuration of Processing System SYS

First, a configuration of the processing system SYS will be described.

### (1-1) Entire Configuration of Processing System SYS

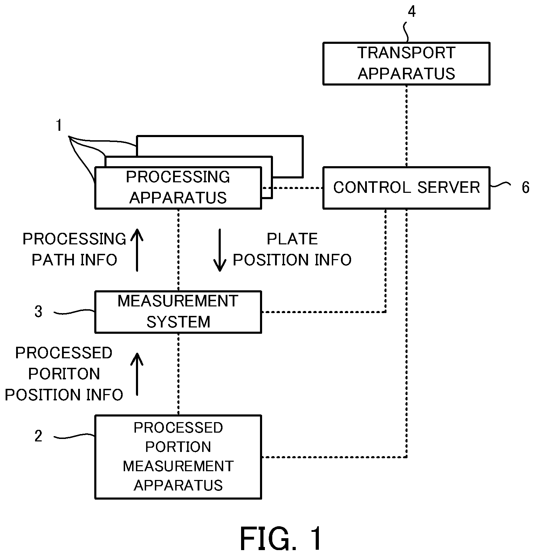

First, with reference to FIG. 1, an entire configuration of the processing system SYS will be described. FIG. 1 is a block diagram that illustrates the entire configuration of the processing system SYS.

As illustrated in FIG. 1, the processing system SYS includes a plurality of processing apparatuses 1, a processed portion measurement apparatus 2, a measurement system 3, and a transport apparatus 4. Incidentally, the processing system SYS includes the plurality of processing apparatuses 1 in an example illustrated in FIG. 1, however, it may include a single processing apparatus 1. The processing system SYS includes a single processed portion measurement apparatus 2, however, it may include a plurality of processed portion measurement apparatuses 2. The processing system SYS includes a single measurement system 3, however, it may include a plurality of measurement systems 3. The processing system SYS includes a single transport apparatus 4, however, it may include a plurality of transport apparatuses 4. The processing system SYS may not include the transport apparatus 4.

Each of the plurality of processing apparatuses 1 is configured to process the workpiece W. In the present example embodiment, an example in which each of the plurality of processing apparatuses 1 is a processing apparatus that is configured to process the workpiece W by irradiating the workpiece W with processing light EL (namely, an energy beam in the form of light). However, at least one of the plurality of processing apparatuses 1 may process the workpiece W without using the processing light EL.

At least one of the plurality of processing apparatuses 1 may be an additive manufacturing apparatus that is configured to perform an additive manufacturing on the workpiece W. Namely, at least one of the plurality of processing apparatuses 1 may be a build apparatus that is configured to build a build object on the workpiece W by performing the additive manufacturing on the workpiece W. Specifically, the additive manufacturing apparatus is configured to build the build object that is integrated with or separable from the workpiece W by performing the additive processing on the workpiece W. The build object that is built by the additive manufacturing apparatus may mean any object that is built by the additive manufacturing apparatus. For example, the additive manufacturing apparatus may build a three-dimensional structural object ST (namely, a three-dimensional structure having a size in each of three-dimensional directions, a solid object, in other words, an object having a size in an X-axis direction, a Y-axis direction, and a Z-axis direction) as one example of the build object.

The additive manufacturing apparatus may perform the additive processing by using any additive manufacturing method (namely, a build method) that is capable of building the build object. At least one of a Laser Metal Deposition (LMD), a Powder Bed Fusion (PBF) such as a Selective Laser Sintering (SLS), a Binder Jetting (BJ), a Material Jetting, a Stereo Lithography, and a Laser Metal Fusion (LMF) is one example of the additive manufacturing method. Incidentally, the Laser Metal Deposition may be referred to as a Directed Energy Deposition (DED).

The workpiece W may be an item that needs to be repaired having a missing part. In this case, the additive manufacturing apparatus may perform a repair processing for repairing (in other words, restoring) the item that needs to be repaired by performing the additive manufacturing for building the build object for filling in the missing part. Namely, the additive manufacturing performed by the additive manufacturing apparatus may include the additive manufacturing for adding, to the workpiece W, the build object for filling in the missing part.

At least a part of a worn turbine is one example of the item that needs to be repaired having the missing part. For example, a turbine blade included in the turbine is one example of the item that needs to be repaired having the missing part. At least one of a turbine for a power generation and a turbine for an engine for an aircraft is one example of the turbine. In this case, the additive manufacturing apparatus may repair (in other words, restore) the worn turbine. A worn propeller-shaped component is another example of the item that needs to be repaired having the missing part. A body component of a vehicle such as a car, a motorcycle, an electric vehicle, and a train is another example of the item that needs to be repaired having the missing part. A component of an engine such as an engine for a car, an engine for a motorcycle, and an engine for an aerospace plane is another example of the item that needs to be repaired having the missing part. A component of a battery of an electric vehicle is another example of the item that needs to be repaired having the missing part. The additive manufacturing apparatus may repair this item that needs to be repaired.

The workpiece W may be a base for building the three-dimensional structural object ST. In this case, the additive manufacturing apparatus may manufacture the three-dimensional structural object ST from scratch by performing the additive manufacturing for building the three-dimensional structural object ST on the workpiece W. As one example, the additive manufacturing apparatus may manufacture the turbine from scratch by performing the additive manufacturing for building the three-dimensional structural object ST corresponding to the turbine on the workpiece W.

The workpiece W may be an intermediate product manufactured in a process of building the three-dimensional structural object ST. In this case, the additive manufacturing apparatus may manufacture the three-dimensional structural object ST from the intermediate product by performing the additive manufacturing for completing the three-dimensional structural object ST on the workpiece W that is the intermediate product of the three-dimensional structural object ST. As one example, the additive manufacturing apparatus may manufacture a completed product of the turbine from the intermediate product of the turbine by performing the additive manufacturing for completing the turbine on the workpiece W that is the intermediate product of the turbine.

The workpiece W may be a base for building the three-dimensional structural object ST. In this case, the additive manufacturing apparatus may manufacture the three-dimensional structural object ST from scratch by performing the additive manufacturing for building the three-dimensional structural object ST on the workpiece W. Namely, the additive manufacturing performed by the additive manufacturing apparatus may include the additive manufacturing for adding, to the workpiece W, the build object for filling in the missing part.

At least one of the plurality of processing apparatuses 1 may be a subtractive manufacturing apparatus that is configured to perform a subtractive manufacturing on the workpiece W. Namely, at least one of the plurality of processing apparatuses 1 may be a subtractive manufacturing apparatus that is configured to perform the subtractive manufacturing for removing a part of the workpiece W. Incidentally, the subtractive manufacturing apparatus may perform the subtractive manufacturing on the build object built on the workpiece W by the additive manufacturing apparatus, in addition to or instead of performing the subtractive manufacturing on the workpiece W.

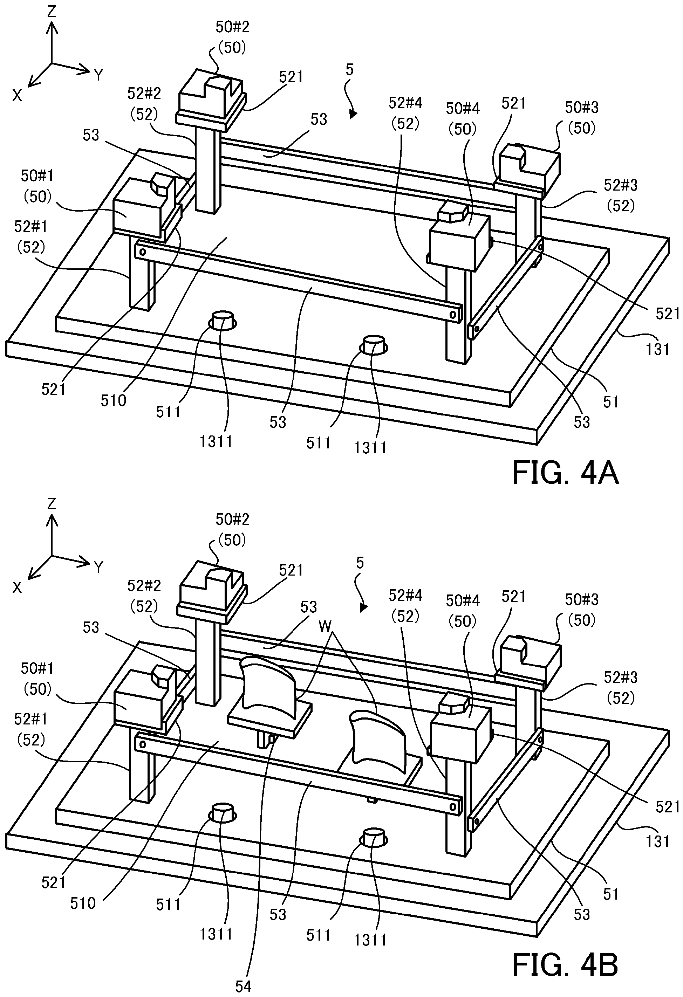

In the present example embodiment, each of the plurality of processing apparatuses 1 processes the workpiece W held by a holding tool 5 (see FIG. 4A to FIG. 4B and so on) described below. Therefore, the workpiece W is placed in the processing apparatus 1 in a state where it is held by the holding tool 5. Incidentally, the holding tool 5 may be referred to as a jig, a holder, a holding member, an attachment member, a fixing member (a holding member, a mounting member), or a clamp. A structure of the holding tool 5 will be described in detail later with reference to the drawings.

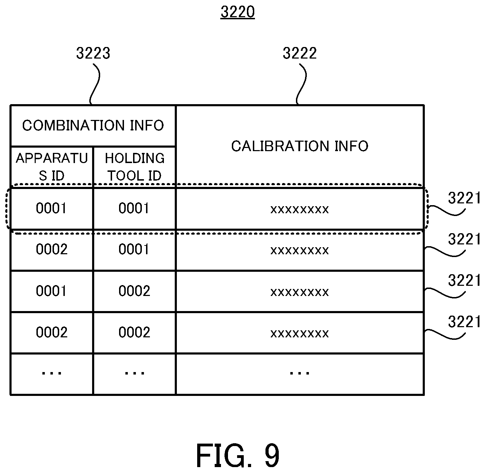

Abase plate 50 (see FIG. 4A to FIG. 4B) that is used to generate calibration information 3222 (see FIG. 9), which is one example of "holding tool information", is positioned on the holding tool 5, as described in detail later. The base plate 50 positioned on the holding tool 5 may be considered to be a part of the holding tool 5. Incidentally, the base plate 50 may be referred to as a reference member. The calibration information 3222 is information that is used for processing the workpiece W by the processing apparatus 1. Therefore, the calibration information 3222 may be typically generated in advance before the processing apparatus 1 actually starts processing the workpiece W.

In order to generate the calibration information 3222, the processing apparatus 1 measures a position of the base plate 50 positioned on the holding tool 5, as described in detail later. Specifically, the processing apparatus 1 measures the position of the base plate 50 in a processing coordinate system of the processing apparatus 1. Plate position information indicating a measured result of the position of the base plate 50 in the processing coordinate system of the processing apparatus 1 is transmitted from the processing apparatus 1 to the measurement system 3 through a non-illustrated communication network.

In order to generate the calibration information 3222, the processing apparatus 1 further processes the base plate 50 positioned on the holding tool 5, as described in detail later. The base plate 50 processed by the processing apparatus 1 is transported from the processing apparatus 1 to the processed portion measurement apparatus 2. For example, the base plate 50 may be transported from the processing apparatus 1 to the processed portion measurement apparatus 2 by the transport apparatus 4. For example, the base plate 50 may be transported from the processing apparatus 1 to the processed portion measurement apparatus 2 by a transport apparatus that is different from the transport apparatus 4. For example, the base plate 50 may be transported from the processing apparatus 1 to the processed portion measurement apparatus 2 by a user of the processing system SYS.

The processed portion measurement apparatus 2 measures the base plate 50 processed by the processing apparatus 1. More specifically, the processed portion measurement apparatus 2 measures a position of a portion of the base plate 50 processed by the processing apparatus 1 (namely, a processed portion). The processed portion position information indicating a measured result of the position of the processed portion is transmitted from the processed portion measurement apparatus 2 to the measurement system 3 through a non-illustrated communication network.

The processed portion measurement apparatus 2 may be any measurement apparatus as long as it is configured to measure the position of the processed portion of the base plate 50. For example, the processed portion measurement apparatus 2 may be a measurement apparatus that is configured to measure the position of processed portion by imaging the base plate 50.

The measurement system 3 receives (namely, acquires) the plate position information transmitted from the processing apparatus 1. Furthermore, the measurement system 3 receives (namely, acquires) the processed portion position information transmitted from the processed portion measurement apparatus 2. The measurement system 3 generates the calibration information 3222 based on the plate position information and the processed portion position information. The calibration information 3222 includes information related to a position of the holding tool 5 in the processing coordinate system, as described in detail later.

The measurement system 3 further measures the holding tool 5 that actually holds the workpiece W before the processing apparatus 1 actually starts processing the workpiece W. Specifically, the measurement system 3 measures the holding tool 5 and the workpiece W actually held by the holding tool 5. Therefore, the holding tool 5 that actually holds the workpiece W is set to (in other words, placed in or attached to) the measurement system 3 before the processing apparatus 1 actually starts processing the workpiece W. Namely, the holding tool 5 that actually holds the workpiece W is set to the measurement system 3 before the holding tool 5 is set to (in other words, placed in or attached to) the processing apparatus 1.

In the present example embodiment, the measurement system 3 measures a three-dimensional shape of each of the holding tool 5 and the workpiece W. Incidentally, when the three-dimensional shape of the holding tool 5 is known, a position of the holding tool 5 (for example, a position of a surface of the holding tool 5) in a three-dimensional space is also known. Therefore, measuring the three-dimensional shape of the holding tool 5 may be considered to be substantially equivalent to measuring a position of the holding tool 5 in a measurement coordinate system of the measurement system 3. Similarly, measuring the three-dimensional shape of the workpiece W may be considered to be substantially equivalent to measuring a position of the workpiece W in the measurement coordinate system.

Then, the measurement system 3 generates processing path information in the processing coordinate system of the processing apparatus 1 based on measurement information indicating a measured result of the three-dimensional shape of each of the holding tool 5 and the workpiece W and the calibration information 3222. The processing path information indicates a target irradiation position that should be irradiated with the processing light EL to process the workpiece W. Specifically, the processing path information indicates a target movement path that is a path of the target irradiation position that should be irradiated with the processing light EL to process the workpiece W. The processing path information generated by the measurement system 3 is transmitted from the measurement system 3 to the processing apparatus 1 through a non-illustrated communication network.

The processing apparatus 1 receives (namely, acquires) the processing path information transmitted from the measurement system 3. The processing apparatus 1 that has received the processing path information processes the workpiece W held by the holding tool 5 based on the received processing path information. Therefore, the holding tool 5 holding the workpiece W is transported from the measurement system 3 to the processing apparatus 1 after the measurement system 3 measures the three-dimensional shapes of the holding tool 5 and the workpiece W. Specifically, the holding tool 5 is removed from the measurement system 3, and the removed holding tool 5 is transported to the processing apparatus 1. For example, the holding tool 5 may be transported from the measurement system 3 to the processing apparatus 1 by the transport apparatus 4. For example, the holding tool 5 may be transported from the measurement system 3 to the processing apparatus 1 by a transport apparatus that is different from the transport apparatus 4. For example, the holding tool 5 may be transported from the measurement system 3 to the processing apparatus 1 by the user of the processing system SYS. The holding tool 5 transported to the processing apparatus 1 is set to (in other words, placed in or attached to) the processing apparatus 1. As a result, the processing apparatus 1 can process the workpiece W held by the holding tool 5.

Incidentally, in the example illustrated in FIG. 1, the processing system SYS includes the processing apparatus 1 and the measurement system 3, which are separate apparatuses, respectively. However, the processing system SYS may include an apparatus in which the processing apparatus 1 and the measurement system 3 are integrated. Namely, the processing apparatus 1 and the measurement system 3 may be integrated. Similarly, the processing system SYS may include an apparatus in which the processing apparatus 1 and the processed portion measurement apparatus 2 are integrated. Namely, the processing apparatus 1 and the processed portion measurement apparatus 2 may be integrated. Similarly, the processing system SYS may include an apparatus in which the processed portion measurement apparatus 2 and the measurement system 3 are integrated. Namely, the processed portion measurement apparatus 2 and the measurement system 3 may be integrated. In a case where the plurality of processing apparatuses 1 and the measurement system 3 are separate apparatuses, the plurality of processing apparatuses 1 and the measurement system 3 may be arranged adjacent to one another in a row. In this case, the plurality of processing apparatuses 1 and the measurement system 3 arranged in a row may operate in parallel. In this case, a productivity of the processing system SYS improves. Namely, a throughput of the processing system SYS improves.

The processing system SYS may further include a control server 6. However, the processing system SYS may not further include the control server 6.

The control server 6 may control an operation of the entire processing system SYS. For example, the control server 6 may control an operation of each of the plurality of processing apparatuses 1. For example, the control server 6 may control an operation of the processed portion measurement apparatus 2. For example, the control server 6 may control an operation of the measurement system 3. For example, the control server 6 may control an operation of the transport apparatus 4.

The control server 6 may serve as a cloud server. In this case, the control server 6 may be configured to communicate with at least one of the plurality of processing apparatus 1, the processed portion measurement apparatus 2, the measurement system 3, and the transport apparatus 4 through a communication network including Internet. Alternatively, the control server 6 may serve as an edge server. In this case, the control server 6 may be configured to communicate with at least one of the plurality of processing apparatus 1, the processed portion measurement apparatus 2, the measurement system 3, and the transport apparatus 4 through a communication network including an intranet or local area network.

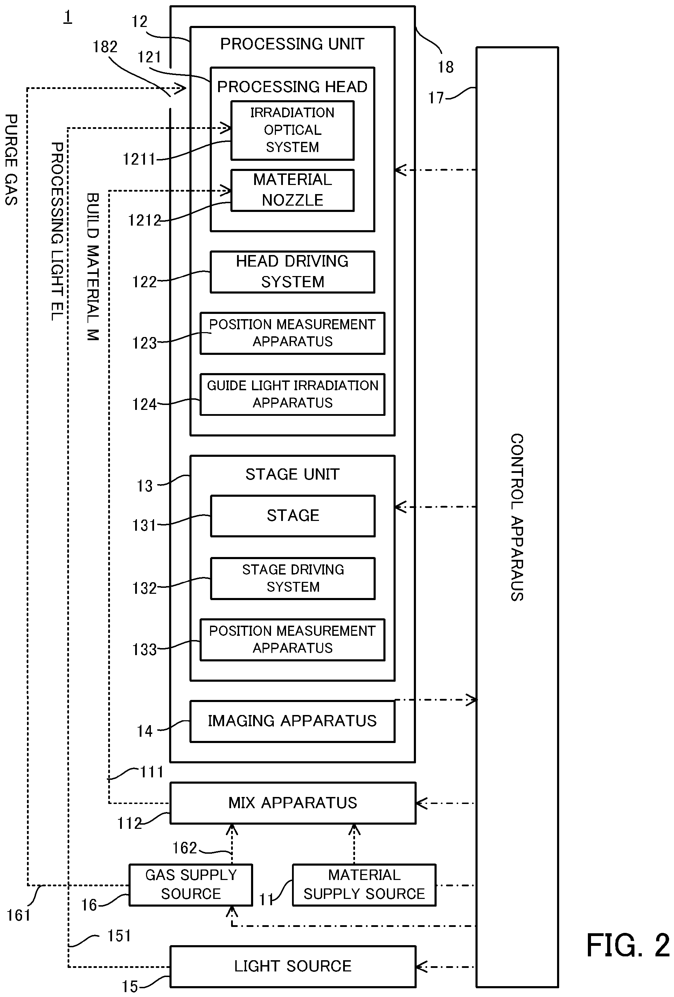

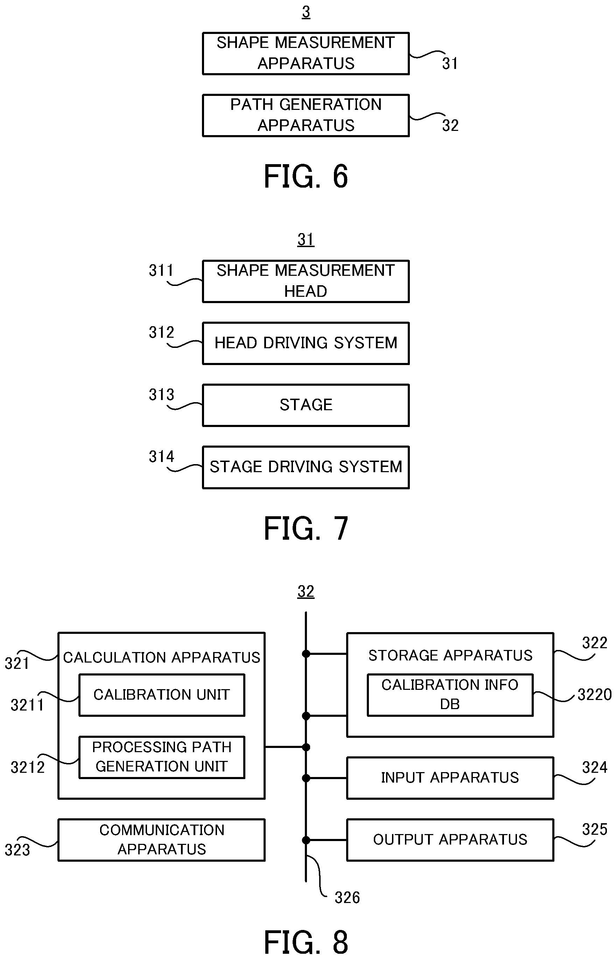

The processing system SYS may include a first computer that controls the processing apparatus 1 as a part of the processing apparatus 1, in addition to or instead of the control server 6 that controls the processing apparatus 1. Namely, the processing apparatus 1 may include the first computer. The first computer may be a laptop computer or any other type of computer. The first computer may serve as a below-described control apparatus 17 (see FIG. 2). The processing system SYS may include a second computer that controls the processed portion measurement apparatus 2 as a part of the processed portion measurement apparatus 2, in addition to or instead of the control server 6 that controls the processed portion measurement apparatus 2. Namely, the processed portion measurement apparatus 2 may include the second computer. The second computer may be a laptop computer or any other type of computer. The processing system SYS may include a third computer that controls the measurement system 3 as a part of the measurement system 3, , in addition to or instead of the control server 6 that controls the measurement system 3. Namely, the measurement system 3 may include the third computer. The third computer may be a laptop computer or any other type of computer. The third computer may serve as a below-described processing path generation apparatus 32 (see FIG. 6). The processing system SYS may include a fourth computer that controls the transport apparatus 4 as a part of the transport apparatus 4, in addition to or instead of the control server 6 that controls the transport apparatus 4. Namely, the transport apparatus 4 may include the fourth computer. The fourth computer may be a laptop computer or any other type of computer.

### (1-2) Configuration of Processing Apparatus 1

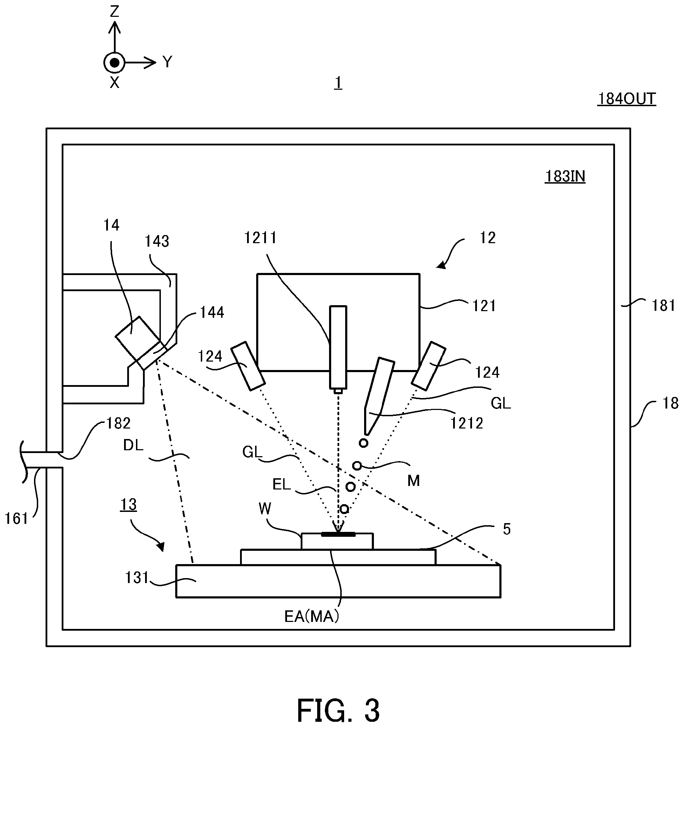

Next, with reference to FIG. 2 and FIG. 3, a configuration of the processing apparatus 1 will be described. FIG. 2 is a block diagram that illustrates a system configuration of the processing apparatus 1. FIG. 3 is a cross-sectional view that illustrates the configuration of the processing apparatus 1.

Incidentally, in the below described description, a positional relationship of various components that constitute the processing apparatus 1 will be described by using an XYZ rectangular coordinate system that is defined by an X-axis, a Y-axis and a Z-axis that are perpendicular to one another. Note that each of an X-axis direction and a Y-axis direction is assumed to be a horizontal direction (namely, a predetermined direction in a horizontal plane) and a Z-axis direction is assumed to be a vertical direction (namely, a direction that is orthogonal to the horizontal plane, and substantially an up-down direction), for the purpose of simple description, in the below described description. Moreover, rotational directions (in other words, inclination directions) around the X-axis, the Y-axis and the Z-axis are referred to as a θX direction, a θY direction and a θZ direction, respectively. Here, the Z-axis direction may be a gravity direction. An XY plane may be a horizontal direction.

Moreover, in the below-described description, the configuration of the processing apparatus 1 that is the additive manufacturing apparatus will be described as one example of the configuration of the processing apparatus 1 for convenience of description. Especially, in the below-described description, the configuration of the processing apparatus 1 that is the additive manufacturing apparatus performing the additive manufacturing by using the Laser Metal Deposition will be described as one example of the configuration of the processing apparatus 1. Therefore, all of the plurality of processing apparatuses 1 may not be necessarily the processing apparatuses 1 illustrated in FIG. 2 and FIG. 3. At least one of the plurality of processing apparatus 1 may be different from the processing apparatus 1 illustrated in FIG. 2 and FIG. 3.

The processing apparatus 1, which performs the additive manufacturing by using the Laser Metal Deposition, performs the additive manufacturing by processing a build material M by using the processing light EL. The build material M is a material that is molten by an irradiation with the processing light EL having a predetermined intensity or more intensity. At least one of a metal material and a resin material is usable as the build material M, for example. However, another material that is different from the metal material and the resin material may be used as the build material M. The build material M is powder-like or grain-like material. Namely, the build material M is powdery material. However, the build material M may not be the powdery material. For example, at least one of a wired-like build material and a gas-like build material may be used as the build material M.

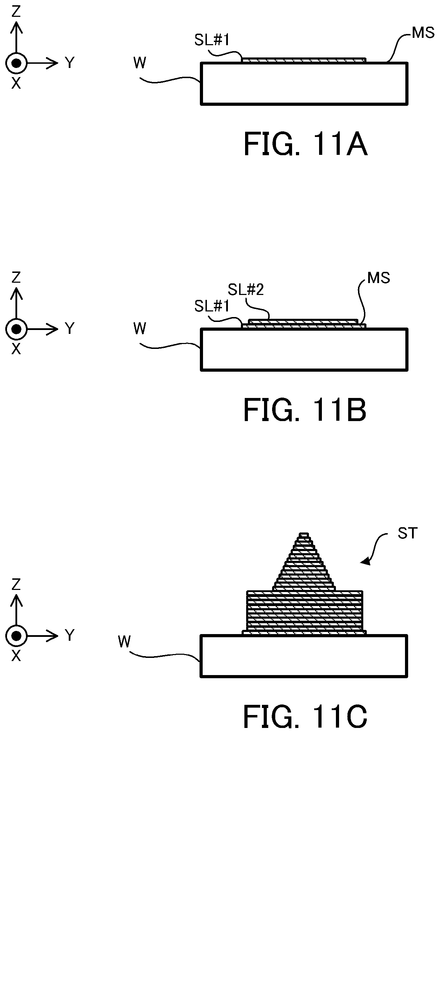

The processing apparatus 1, which performs the additive manufacturing by using the Laser Metal Deposition, builds the three-dimensional structural object ST in which a plurality of structural layers SL (see FIG. 11 below) are stacked by forming the plurality of structural layers SL in sequence. In this case, the processing apparatus 1 first sets a surface of the workpiece W to be a build surface MS on which the build object is actually built, and builds a first structural layer SL on the build surface MS. Then, the processing apparatus 1 sets a surface of the first structural layer SL to be a new build surface MS, and builds a second structural layer SL on the build surface MS. Then, the processing apparatus 1 repeats the same operation to build the three-dimensional structural object ST in which the plurality of structural layers SL are stacked.

In order to perform the additive manufacturing, the processing apparatus 1 includes a material supply source 11, a processing unit 12, a stage unit 13, an imaging apparatus 14, a light source 15, a gas supply source 16, and a control apparatus 17, as illustrated in FIG. 2 to FIG. 3. The processing unit 12, the stage unit 13, and the imaging apparatus 14 may be contained in a chamber space 183IN in a housing 18. In this case, the processing apparatus 1 may perform the additive manufacturing in the chamber space 183IN.

The material supply source 11 supplies the build material M to the processing unit 12. The material supply source 11 supplies, to the processing unit 12, the build material M the amount of which is necessary for performing the additive manufacturing per unit time by supplying the build material M the amount of which is based on the necessary amount.

The processing unit 12 builds the build object by processing the build material M supplied from the material supply source 11. In order to build the build object, the processing unit 12 include a processing head 121, a head driving system 122, a position measurement apparatus 123, and a plurality of (for example, two) guide light irradiation apparatuses 124. Furthermore, the processing head 121 includes an irradiation optical system 1211 and material nozzles 1212. Incidentally, in the example illustrated in FIG. 2 to FIG. 3, the processing head 121 includes a single irradiation optical system 1211, but the processing head 121 may include a plurality of irradiation optical systems 1211. Moreover, in the example illustrated in FIG. 2 to FIG. 3, the processing head 121 includes the plurality of material nozzles 1212, but the processing head 121 may include a single material nozzle 1212.

The irradiation optical system 1211 is an optical system (for example, a condensing optical system) for emitting the processing light EL. Specifically, the irradiation optical system 1211 is optically connected to the light source 15 that generates the processing light EL through a light transmitting member 151 such as an optical fiber and a light pipe. The irradiation optical system 1211 emits the processing light EL transmitted from the light source 15 through the light transmitting member 151. The irradiation optical system 1211 emits the processing light EL in a downward direction (namely, toward a -Z side) from the irradiation optical system 1211. The stage 131 is positioned below the irradiation optical system 1211. In a case where the workpiece W is placed on the stage 131, the irradiation optical system 1211 irradiates the workpiece W with the emitted processing light EL. In this case, the irradiation optical system 1211 irradiates the workpiece W with the emitted processing light EL from a position above the workpiece W. Specifically, the irradiation optical system 1211 is configured to irradiate a target irradiation area EA, which is set on the workpiece W or near the workpiece W as an area that is irradiated with the processing light EL (typically, in which the light is condensed), with the processing light EL. Furthermore, a state of the irradiation optical system 1211 is switchable between a state where the target irradiation areas EA are irradiated with the processing light EL and a state where the target irradiation areas EA are not irradiated with the processing light EL under the control of the control apparatus 17.

The material nozzle 1212 supplies (for example, injects, jets, blows out or sprays) the build material M. The material nozzle 1212 is physically connected to the material supply source 11, which is a supply source of the build material M, through a supply pipe 111 and a mix apparatus 112. The material nozzle 1212 supplies the build material M supplied from the material supply source 11 through the supply pipe 111 and the mix apparatus 112. The material nozzle 1212 may pressure-feed the build material M supplied from the material supply source 11 through the supply pipe 111. Namely, the build material M from the material supply source 11 and gas for feeding (namely, pressure-feed gas, and inert gas such as Nitrogen or Argon, for example) may be mixed by the mix apparatus 112 and then pressure-fed to the material nozzle 1212 through the supply pipe 111. As a result, the material nozzle 1212 supplies the build material M together with the gas for feeding. Purge gas supplied from the gas supply source 16 is used as the gas for feeding, for example. However, gas supplied from a gas supply source that is different from the gas supply source 16 may be used as the gas for feeding. The material nozzle 1212 supplies the build material M in a downward direction (namely, toward the -Z side) from the material nozzle 1212. The stage 131 is positioned below the material nozzle 1212. In a case where the workpiece W is placed on the stage 131, the material nozzle 1212 supplies the build material M toward the workpiece W or a vicinity of the workpiece W.

In the present example embodiment, the material nozzle 1212 supplies the build material M to an irradiation position of the processing light EL (namely, the target irradiation area EA that is irradiated with the processing light EL from the irradiation optical system 1211). Therefore, the material nozzle 1212 and the irradiation optical system 1211 are aligned so that a target supply area MA, which is set on the workpiece W or near the workpiece W as an area to which the material nozzle 1212 supplies the build material M, coincides with (alternatively, overlaps at least partially with) the target irradiation area EA. In this case, the build material M supplied from the material nozzle 1212 is irradiated with the processing light EL emitted from the irradiation optical system 1211. As a result, the build material M is molten. Namely, a melt pool MP including the molten build material M is formed on the workpiece W.

Note that the material nozzle 1212 may supply the build material M to the melt pool MP that is formed by the processing light EL emitted from the irradiation optical system 1211. However, the material nozzle 1212 may not supply the build material M to the melt pool MP. For example, the processing apparatus 1 may melt the build material M by the irradiation optical system 1211 before the build material M from the material nozzle 1212 reaches the workpiece W and may make the molten build material M adhere to the workpiece W.

The head driving system 122 moves the processing head 121 under the control of the control apparatus 17. Namely, the head driving system 122 moves the irradiation optical system 1211 and the material nozzle 1212 under the control of the control apparatus 17. The head driving system 122 moves the processing head 121 along at least one of the X-axis, the Y-axis, the Z-axis, the θX direction, the θY direction, and the θZ direction in the processing coordinate system of the processing apparatus 1, for example. When the head driving system 122 moves the processing head 121, a relative positional relationship between the processing head 121 and each of the stage 131 and the workpiece W placed on the stage 131 changes. As a result, the target irradiation area EA and the target supply area MA (furthermore, the melt pool MP) moves relative to the workpiece W.

The position measurement apparatus 123 is configured to measure a position of the processing head 121. The position measurement apparatus 123 may include at least one of an encoder and a laser interferometer, for example.

The guide light irradiation apparatus 124 is positioned at the processing head 121. The guide light irradiation apparatus 124 emits guide light GL. The guide light irradiation apparatus 124 emits the guide light GL so that the guide light GL propagates in the chamber space 183 IN. The plurality of guide light irradiation apparatuses 124 are aligned so that the plurality of guide lights GL, which are emitted from the plurality of guide light irradiation apparatuses 124, respectively, intersect each other at a predetermined intersecting position below the processing head 121. For example, the plurality of guide light irradiation apparatuses 124 may be aligned so that the plurality of guide lights GL intersect each other at a light concentration position of the processing light EL. The plurality of guide light irradiation apparatuses 124 may be aligned so that the plurality of guide lights GL intersect each other at an additive manufacturing position at which the additive manufacturing by the processing apparatus 1 is performed, because the processing apparatus 1 mainly processes the workpiece W (namely, perform the additive manufacturing) at the light concentration position of the processing light EL. The additional manufacturing position may typically overlap with a position of each of the target irradiation area EA and the target supply area MA at least partially. Incidentally, a usage of this guide light irradiation apparatus 124 will be described in detail below.

The stage unit 13 includes the stage 131, a stage driving system 132, and a position measurement apparatus 133.

The holding tool 5 is placed on the stage 131. Therefore, the stage 131 may be referred to as an object placing apparatus. The stage 131 is configured to support the holding tool 5 placed on the stage 131. The stage 131 may be configured to hold the holding tool 5 placed on the stage 131. In this case, the stage 131 may include at least one of a mechanical chuck, an electro-static chuck, and a vacuum suction chuck to hold the holding tool 5. Alternatively, the stage 131 may not be configured to hold the holding tool 5 placed on the stage 131. In this case, the holding tool 5 may be placed on the stage 131 without a clamp.

As described above, in the present example embodiment, the holding tool 5 holds the workpiece W. Therefore, the workpiece W may be considered to be placed on the stage 131 through the holding tool 5. The stage 131 may be considered to support the workpiece W through the holding tool 5.

The stage driving system 132 moves the stage 131 under the control of the control apparatus 17. For example, the stage driving system 132 moves the stage 131 along at least one of the X-axis, the Y-axis, the Z-axis, the θX direction, the θY direction and the θZ direction in the processing coordinate system of the processing apparatus 1. When the stage driving system 132 moves the stage 131, a relative positional relationship between the processing head 121 and each of the stage 131 and the workpiece W placed on the stage 131 changes. As a result, the target irradiation area EA and the target supply area MA (furthermore, the melt pool MP) moves relative to the workpiece W.

The position measurement apparatus 133 is configured to measure a position of the stage 131. The position measurement apparatus 133 may include at least one of an encoder and a laser interferometer, for example.

The imaging apparatus 14 is configured to image an imaging target object. The imaging apparatus 14 is typically a camera. In the present example embodiment, the imaging apparatus 14 images a state of the plurality of guide lights GL emitted by the plurality of guide light irradiation apparatuses 124 described above, respectively. Incidentally, a usage of the imaging apparatus 14 will be described in detail later, as with the usage of the guide light irradiation apparatus 124 described above.

The light source 15 emits at least one of infrared light, visible light, and ultraviolet light as the processing light EL, for example. However, other type of light may be used as the processing light EL. The processing light EL may include a plurality of pulsed lights (namely, a plurality of pulsed beams). The processing light EL may include continuous light (CW: Continuous Wave). The processing light EL may be a laser light. In this case, the light source 15 may include a semiconductor laser such as a laser light source (for example, a Laser Diode (LD)). The laser light source may include at least one of a fiber laser, a CO₂ laser, a YAG laser, an Excimer laser and the like. However, the processing light EL may not be the laser light. The light source 15 may include any light source (for example, at least one of a LED (Light Emitting Diode), a discharge lamp and the like).

The gas supply source 16 is a supply source of the purge gas for purging the chamber space 183IN in the housing 18. The purge gas includes inert gas. At least one of Nitrogen gas and Argon gas is one example of the inert gas. The gas supply source 16 is connected to the chamber space 183IN through a supply port 182 formed in a wall member 181 of the housing 18 and a supply pipe 161 connecting the gas supply source 16 to the supply port 182. The gas supply source 16 supplies the purge gas to the chamber space 183IN through the supply pipe 161 and the supply port 182. As a result, the chamber space 183IN becomes a space purged by the purge gas. The purge gas supplied to the chamber space 183IN may be discharged from a non-illustrated outlet port formed in the wall member 181. Note that the gas supply source 16 may be a tank that stores the inert gas such as the Nitrogen gas and the Argon gas. In a case where the purge gas is the Nitrogen gas, the gas supply source 16 may be a Nitrogen gas generation apparatus that generates the Nitrogen gas by using air as material.

In a case where the material nozzle 1212 supplies the build material M together with the purge gas as described above, the gas supply source 16 may supply the purge gas to the mix apparatus 112 to which the build material M is supplied from the material supply source 11. Specifically, the gas supply source 16 may be connected to the mix apparatus 112 through a supply pipe 162 that connects the gas supply source 16 and the mix apparatus 112. As a result, the gas supply source 16 supplies the purge gas to the mix apparatus 112 through the supply pipe 162. In this case, the build material M from the material supply source 11 may be supplied (specifically, pressure-fed) to the material nozzle 1212 through the supply pipe 111 by the purge gas supplied from the gas supply source 16 through the supply pipe 162. Namely, the gas supply source 16 may be connected to the material nozzle 1212 through the supply pipe 162, the mix apparatus 112 and the supply pipe 111. In this case, the material nozzle 1212 supplies the build material M together with the purge gas for pressure-feeding the build material M.

The control apparatus 17 controls an operation of the processing apparatus 1. For example, the control apparatus 17 may control the processing unit 12 (for example, at least one of the processing head 121 and the head driving system 122) of the processing apparatus 1 to process the workpiece W. For example, the control apparatus 17 may control the stage unit 13 (for example, stage driving system 132) of the processing apparatus 1 to process workpiece W. For example, the control apparatus 17 may control at least one of the processing unit 12 and the stage unit 13 to process the base plate 50 positioned on the holding tool 5 to generate the calibration information 3222 as described above. For example, the control apparatus 17 may control at least one of the processing unit 12, the stage unit 13, and the imaging apparatus 14 to measure the position of the base plate 50 positioned on the holding tool 5 to generate the calibration information 3222 as described above.

The control apparatus 17 may include a calculation apparatus and a storage apparatus. The calculation apparatus may include at least one of a CPU (Central Processing unit) and a GPU (Graphic Processing unit), for example. The storage apparatus may include a memory. The control apparatus 17 serves as an apparatus for controlling the operation of the processing apparatus 1 by means of the calculation apparatus executing a computer program. The computer program is a computer program that allows the calculation apparatus to execute (namely, to perform) a below-described operation that should be executed by the control apparatus 17. Namely, the computer program is a computer program that allows the control apparatus 17 to function so as to make the processing apparatus 1 execute the below-described operation. The computer program executed by the calculation apparatus may be recorded in the storage apparatus (namely, a recording medium) of the control apparatus 17, or may be recorded in any recording medium (for example, a hard disk or a semiconductor memory) that is built in the control apparatus 17 or that is attachable to the control apparatus 17. Alternatively, the calculation apparatus may download the computer program that should be executed from an apparatus external to the control apparatus 17 through a network interface.

The control apparatus 17 may control an emitting aspect of the processing light EL by the irradiation optical system 1211. The emitting aspect may include at least one of an intensity of the processing light EL and an emitting timing of the processing light EL, for example. In a case where the processing light EL includes the plurality of pulsed lights, the emitting aspect may include at least one of an ON time of the pulsed light, an emission cycle of the pulsed light and a ratio (what we call a duty ratio) of a length of the ON time of the pulsed light and a length of the emission cycle of the pulsed light, for example. Furthermore, the control apparatus 17 may control a movement aspect of the processing head 121 by the head driving system 122. The control apparatus 17 may control a movement aspect of the stage 131 by the stage driving system 132. The movement aspect may include at least one of a movement distance, a movement speed, a movement direction, and a movement timing (a movement period), for example. Moreover, the control apparatus 17 may control a supply aspect of the build material M by the material nozzle 1212. The supply aspect may include at least one of a supplied amount (especially, a supplied amount per unit time) and a supply timing (a supply period).

The control apparatus 17 may not be positioned in the processing apparatus 1. For example, the control apparatus 17 may be positioned at the outside of the processing apparatus 1 as a server or the like. In this case, the control apparatus 17 may be connected to the processing apparatus 1 through a wired and / or wireless network (alternatively, a data bus and / or a communication line). A network using a serial-bus-type interface such as at least one of IEEE1394, RS-232x, RS-422, RS-423, RS-485, and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802. 1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 17 and the processing apparatus 1 may be configured to transmit and receive various information through the network. Moreover, the control apparatus 17 may be configured to transmit information such as a command and a control parameter to the processing apparatus 1 through the network. The processing apparatus 1 may include a reception apparatus that is configured to receive the information such as the command and the control parameter from the control apparatus 17 through the network. The processing apparatus 1 may include a transmission apparatus that is configured to transmit the information such as the command and the control parameter to the control apparatus 17 through the network (namely, an output apparatus that is configured to output information to the control apparatus 17). Alternatively, a first control apparatus that is configured to perform a part of the arithmetic processing performed by the control apparatus 17 may be positioned in the processing apparatus 1 and a second control apparatus that is configured to perform another part of the arithmetic processing performed by the control apparatus 17 may be positioned at the outside of the processing apparatus 1.

An arithmetic model that is buildable by machine learning may be implemented in the control apparatus 17 by the calculation apparatus executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control apparatus 17 may control the operation of the processing apparatus 1 by using the arithmetic model. Namely, the operation for controlling the operation of the processing apparatus 1 may include an operation for controlling the operation of the processing apparatus 1 by using the arithmetic model. Note that the arithmetic model that has been built by off-line machine learning using training data may be implemented in the control apparatus 17. Moreover, the arithmetic model implemented in the control apparatus 17 may be updated by online machine learning on the control apparatus 17. Alternatively, the control apparatus 17 may control the operation of the processing apparatus 1 by using the arithmetic model implemented in an apparatus external to the control apparatus 17 (namely, an apparatus external to the processing apparatus 1), in addition to or instead of the arithmetic model implemented on the control apparatus 17.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control apparatus 17. The recording medium may include a device that is configured to record the computer program (for example, a device for a universal use or a device for an exclusive use in which the computer program is embedded to be executable in a form of at least one of a software, a firmware, and the like). Moreover, various arithmetic processing or functions included in the computer program may be realized by a logical processing block that is realized in the control apparatus 17 by means of the control apparatus 17 (namely, a computer) executing the computer program, may be realized by a hardware such as a predetermined gate array (a FPGA, an ASIC) of the control apparatus 17, or may be realized in a form in which the logical process block and a partial hardware module that realizes a partial element of the hardware are combined.

### (1-3) Structure of Holding Tool 5

Next, with reference to FIG. 4A and FIG. 4B, the structure of the holding tool 5 that holds the workpiece W will be described. FIG. 4A is a perspective view that illustrates the structure of the holding tool 5 that does not hold the workpiece W, and FIG. 4B is a perspective view that illustrates the structure of the holding tool 5 that actually holds the workpiece W. FIG. 4A and FIG. 4B illustrate the holding tool 5 placed on the stage 131 of the processing apparatus 1. Incidentally, the structure of the holding tool 5 illustrated in FIG. 4A and FIG. 4B is one example, and the structure of the holding tool 5 is not limited to the structures illustrated in FIG. 4A and FIG. 4B.

As illustrated in FIG. 4A and FIG. 4B, the holding tool 5 includes a bottom member 51, a plurality of support members 52, and a plurality of connecting members 53. In an example illustrated in FIG. 4A and FIG. 4B, the holding tool 5 includes four support members 52 (specifically, support members 52#1, 52#2, 52#3 and 52#4) and four connecting members 53. However, the holding tool 5 may include a single support member 52. The holding tool 5 may include a single connecting member 53. The holding tool 5 may not include the connecting member(s) 53.

The bottom member 51 is a plate-shaped member. An upper surface of the bottom member 51 (in the examples illustrated in FIG. 4A and FIG. 4B, a surface facing toward the +Z side) may be a surface along the XY plane. A lower surface of the bottom member 51 (in the examples illustrated in FIG. 4A and FIG. 4B, a surface facing toward the -Z side) may be a surface along the XY plane. Note that a shape of the bottom member 51 is not limited to a rectangular shape. The bottom member 51 is placed on the stage 131 of the processing apparatus 1. Specifically, the bottom member 51 is placed on the stage 131 in a state where the lower surface of the bottom member 51 faces toward the stage 131. Therefore, the holding tool 5 is placed on the stage 131 through the bottom member 51. The stage 131 supports the holding tool 5 through the bottom member 51.

The bottom member 51 may be placed (namely, positioned) at a determined position on the stage 131. Namely, the holding tool 5 may be placed (namely, positioned) at the determined position on the stage 131 through the bottom member 51. Incidentally, a position that is determined as a position at which the holding tool 5 is placed may be referred to as a "reference placement position.

In order to place the bottom member 51 at the reference placement position, a mark for a position alignment may be formed on at least one of the bottom member 51 and the stage 131. In the examples illustrated in FIG. 4A and FIG. 4B, the mark for the position alignment is formed each of the bottom member 51 and the stage 131. For example, as illustrated in FIG. 4A and FIG. 4B, a plurality of pins 1311 may be formed on the stage 131 as the marks for the position alignment. The pin 1311 is a member that protrude from the stage 131 along the Z-axis direction. Incidentally, information related to a position of the pin 1311 on the stage 131 may be information known to the processing system SYS. Furthermore, as illustrated in FIG. 4A and FIG. 4B, a plurality of through holes 511 may be formed in the bottom member 51 as the marks for the position alignment. The through hole 511 penetrates the bottom member 51 along the Z-axis direction. In this case, as illustrated in FIG. 4A and FIG. 4B, the bottom member 51 may be placed on the stage 131 so that the pins 1311 are inserted into the through holes 511. The bottom member 51 may be placed on the stage 131 in a state where the pins 1311 are inserted into the through holes 511. Therefore, an arrangement aspect of the through holes 511 is the same as an arrangement aspect of the pins 1311. Furthermore, the number of the through holes 511 is the same as (alternatively, may be larger than) the number of the pins 1311. As a result, the bottom member 51 is placed on the stage 131 at the position determined by the pins 1311 and through holes 511 (namely, the reference placement position). Therefore, in this case, information related to a placing position of the bottom member 51 (namely, a placing position of the holding tool 5) on the stage 131 is information known to the processing system SYS.

Incidentally, the pin 1311 that is the mark for the position alignment may not penetrate the through hole 511 of the bottom member 51 of the holding tool 5. For example, a side surface of the bottom member 51 (for example, one of or both of a side surface along the XZ plane and a side surface along the YZ plane in the state illustrated in FIG. 4A and FIG. 4B) may be pressed against the pins 1311. Moreover, the mark for the position alignment is not limited to the pin 1311. A member having a surface that is allowed to contact the bottom member 51 (for example, a member similar to a below-described stopper 523) may be used as the mark for the position alignment, in addition to or instead of the pin 1311.

At least a part of the upper surface of the bottom member 51 serves as a placement surface 510 on which the workpiece W is placed. The workpiece W is placed on the placement surface 510. The placement surface 510 can support the workpiece W placed on the placement surface 510. The placement surface 510 can hold the workpiece W placed on the placement surface 510. In this case, the placement surface 510 may include at least one of a mechanical chuck, an electro-static chuck, and a vacuum suction chuck to hold the workpiece W. Alternatively, a workpiece holding member 54 (for example, a jig) for holding the workpiece W may be positioned on the placement surface 510. Alternatively, the placement surface 510 may not hold the workpiece W placed on the placement surface 510. In this case, the workpiece W may be placed on the placement surface 510 without a clamp.

A single workpiece W may be placed on the placement surface 510. Alternatively, a plurality of workpieces W may be placed on the placement surface 510. In the example illustrated in FIG. 4B, two workpieces W are placed on the placement surface 510.

Each of the plurality of support members 52 is a post-shaped member extending from the upper surface of the bottom member 51 upwardly (toward the +Z side in the example illustrated in FIG. 4A and FIG. 4B). Each of the plurality of support members 52 is a member for supporting the above-described base plate 50. Therefore, each of the plurality of support members 52 supports the plurality of base plates 50, respectively. In the example illustrated in FIG. 4A and FIG. 4B, the plurality of support members 52#1 to 52#4 support a plurality of base plates 50#1 to 50#4, respectively. Namely, the plurality of base plates 50 are positioned in the holding tool 5. However, in a case where the holding tool 5 includes a single support member 52, a single base plate 50 may be positioned in the holding tool 5.

Incidentally, in the example illustrated in FIG. 4A and FIG. 4B, the plurality of support members 52 are positioned at vertexes of a rectangular area in the upper surface of the bottom member 51. However, an arrangement aspect of the plurality of support members 52 is not limited to the example illustrated in FIG. 4A and FIG. 4B. Moreover, in the example illustrated in FIG. 4A and FIG. 4B, the four support members 52 are positioned on the bottom member 51. However, the number of the support members 52 is not limited to four. Three or fewer or five or more support members 52 may be positioned on the bottom member 51.

Each support member 52 includes a plate fixing member 521 to which the base plate 50 is fixed. In this case, each support member 52 supports the base plate 50 through the plate fixing member 521. As one example, each support member 52 may support the base plate 50 from below the base plate 50. Namely, each support member 52 may support the base plate 50 through a tip of each support member 52. In this case, each support member 52 may include the plate fixing member 521 at its tip. The tip of each support member 52 may serve as the plate fixing member 521. Incidentally, at least one of the plurality of support members 52 may not include the plate fixing member 521.

The base plate 50 may be detachably fixed to the plate fixing member 521. For example, the base plate 50 may be fixed to the plate fixing member 521 by using a fixing screw. In this case, the base plate 50 may be detached from the plate fixing member 521 by loosening the fixing screw.

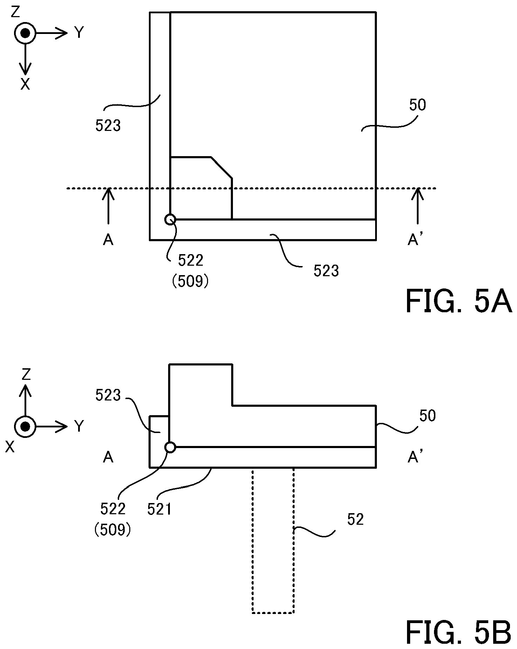

The base plate 50 may be attached to the plate fixing member 521 so that a positional relationship between a reference part 522 (see FIG. 5A to FIG. 5B below) of the holding tool 5 and the base plate 50 is a predetermined positional relationship. The base plate 50 may be supported by the support member 52 so that the positional relationship between the reference part 522 of the holding tool 5 and the base plate 50 is the predetermined positional relationship. The base plate 50 may be positioned in the holding tool 5 so that the positional relationship between the reference part 522 of the holding tool 5 and the base plate 50 is the predetermined positional relationship. In other words, the base plate 50 may be positioned in the holding tool 5 to have the predetermined positional relationship with respect to the reference part 522 of the holding tool 5. In this case, information related to the positional relationship between the reference part 522 of the holding tool 5 and the base plate 50 may be information known to the processing system SYS.

A state where the base plate 50 contacts the stopper 523 of the plate fixing member 521 is one example of a state where the positional relationship between the reference part 522 of the holding tool 5 and the base plate 50 is the predetermined positional relationship, as illustrated in FIG. 5A that is a top view illustrating the plate fixing member 521 and FIG. 5B that is a cross-sectional view illustrating the plate fixing member 521 (specifically, an A-A' cross-sectional view of FIG. 5A). In this case, a part of the stopper 523 contacting the base plate 50 may be used as the reference part 522 of the holding tool 5. Especially, a part, which contacts the base plate 50, of the stopper 523 may be used as the reference part 522 of the holding tool 5. In an example illustrated in FIG. 5A to FIG. 5B, a part, which contacts a reference part 509 of the base plate 50, of the stopper 523 is used as the reference part 522 of the holding tool 5. In the example illustrated in FIG. 5A to FIG. 5B, a vertex of the base plate 50 is used as the reference part 509 of the base plate 50.

Note that FIG. 5A and FIG. 5B merely illustrates examples of the reference part 509 of the base plate 50 and the reference part 522 of the holding tool 5. Therefore, a part of the base plate 50 that is different from the part illustrated in FIG. 5Ato FIG. 5B may be used as the reference part 509 of the base plate 50. For example, any vertex of the base plate 50 may be used as the reference part 509 of the base plate 50. Similarly, a part of the holding tool 5 that is different from the part illustrated in FIG. 5A to FIG. 5B may be used as the reference part 522 of the holding tool 5. For example, a part of the holding tool 5 that contacts any vertex of the base plate 50 may be used as the reference part 522 of the holding tool 5.

Incidentally, the plate fixing member 521 may include a pin-shaped member in addition to or instead of the stopper 523. In this case, the base plate 50 may be fixed to the plate fixing member 521 in a state where the base plate 50 contacts the pin-shaped member.

Again in FIG. 4A and FIG. 4B, the plurality of support members 52 may include at least two support members 52 positioned at positions that are different along the X-axis direction. Furthermore, the plurality of support members 52 may include at least two support members 52 positioned at positions that are different along the Y-axis direction. More specifically, the plate fixing members 521 of at least two of the plurality of support members 52 may be positioned at positions that are different along the X-axis direction. The plate fixing members 521 of at least two of the plurality of support members 52 may be positioned at positions that are different along the Y-axis direction. Namely, positions of the plate fixing members 521 of at least two of the plurality of support members 52 may be different in a lateral direction along which the base plate 50 is supported. The positions of the plate fixing members 521 of at least two of the plurality of support members 52 may be different in a depth direction. Incidentally, the "lateral" here may mean a distance in the X-axis direction from the bottom member 51, and the "depth" here may mean a distance in the Y-axis direction from the bottom member 51. As a result, at least two of the plurality of base plates 50 positioned in the holding tool 5 may be positioned at positions that are different from each other in the lateral direction. At least two of the plurality of base plates 50 positioned in the holding tool 5 may be positioned at positions that are different from each other in the depth direction.

The plurality of support members 52 may be positioned on the bottom member 51 so as to surround at least a part of the placement surface 510 on which the workpiece W is placed. Namely, the plurality of support members 52 may be positioned around at least a part of the placement surface 510. In this case, the plurality of base plates 50, which are supported by the plurality of support members 52, respectively, are also positioned in the holding tool 5 so that the plurality of base plates 50 surround at least a part of the placement surface 510.

Heights of at least two of the plurality of support members 52 may be different. More specifically, heights of the plate fixing members 521 of at least two of the plurality of support members 52 may be different. Namely, heights at which the plate fixing members 521 of at least two of the plurality of support members 52 support the base plates 50 may be different. Incidentally, the "height" here may mean a distance in the Z-axis direction from the bottom member 51. As a result, at least two of the plurality of base plates 50 positioned in the holding tool 5 may be positioned at positions whose heights are different from each other. However, the heights of all of the plurality of support members 52 may be the same.

The height of at least one of the plurality of support members 52 may be set to a height that corresponds to the height of the workpiece W placed on the placement surface 510. For example, the height of at least one of the plurality of support members 52 may be set to a height that is the same as the height of the workpiece W placed on the placement surface 510. For example, the height of at least one of the plurality of support members 52 may be set so that a difference from the height of the workpiece W placed on the placement surface 510 is smaller than an allowable amount.

Incidentally, at least a part of each support member 52 may be used as the base plate 50. In this case, each support member 52 may not support the base plate 50 independently.

Each of the plurality of connecting members 53 connects two adjacent support members 52. Therefore, each connecting member 53 may be a member extending along a direction along which the two adjacent support members 52 are aligned. Each connecting member 53 may be a member extending along a direction that intersects a direction along which the support member 52 extends. In the example illustrated in FIG. 4A and FIG. 4B, each connecting member 53 may extend along the X-axis direction or the Y-axis direction, because the support member 52 extends along the Z-axis direction and the two adjacent support members 52 are aligned along the X-axis direction or the Y-axis direction. In this case, one end of each connecting member 53 may be connected to two adjacent support members 52, and one end of each connecting member 53 may be connected to the two adjacent support members 52.

Incidentally, a plurality of connecting members 53 may connect the two adjacent support members 52, in addition to or instead of a single connecting member 53.

### (1-4) Configuration of Measurement System 3

Next, with reference to FIG. 6, a configuration of the measurement system 3 will be described. FIG. 6 is a block diagram that illustrates the configuration of the measurement system 3. As illustrated in FIG. 6, the measurement system 3 includes a shape measurement apparatus 31 and a processing path generation apparatus 32.

The shape measurement apparatus 31 is configured to measure a three-dimensional shape of a measurement target object. In the present example embodiment, the measurement system 3 measures the holding tool 5 that actually holds the workpiece W before the processing apparatus 1 actually starts processing the workpiece W, as described above. Therefore, the measurement target object of the shape measurement apparatus 31 may include the holding tool 5 that actually holds the workpiece W. Namely, the measurement target object of the shape measurement apparatus 31 may include the holding tool 5 that actually holds the workpiece W and the workpiece W held by the holding tool 5.

FIG. 7 illustrates one example of a configuration of the shape measurement apparatus 31. As illustrated in FIG. 7, the shape measurement apparatus 31 includes a shape measurement head 311, a head driving system 312, a stage 313, and a stage driving system 314. However, the shape measurement apparatus 31 may not include at least one of the head driving system 312 and the stage driving system 314.

The shape measurement head 311 is a measurement apparatus that is configured to measure the three-dimensional shape of the measurement target object. For example, the shape measurement head 311 may measure the three-dimensional shape of the measurement target object by using a pattern projection method or a light section method that projects a light pattern on a surface of the measurement target object by irradiating the surface with measurement light and measures a shape of the projected pattern. For example, the shape measurement head 311 may measure the three-dimensional shape of the measurement target object by using a time of flight method that performs an operation, which emits measurement light to the surface of the measurement target object, calculates a time until the emitted measurement light returns from the measurement target object to the shape measurement head 311, and measures a distance to the measurement target object based on the time, at plurality of positions on the measurement target object. For example, the shape measurement head 311 may measure the three-dimensional shape of the measurement target object by using at least one of a moiré topography method (specifically, a grid irradiation method or a grid projection method), a holography interference method, an auto collimation method, a stereo method, an astigmatism method, a critical angle method, and a knife edge method.

The head driving system 312 moves the shape measurement head 311. The head driving system 312 moves the shape measurement head 311 along at least one of the X-axis, the Y-axis, the Z-axis, the θX direction, the θY direction, and the θZ direction in the measurement coordinate system of the measurement system 3, for example. When the head driving system 312 moves the shape measurement head 311, a positional relationship between a measurement field of the shape measurement head 311 and the measurement target object (specifically, the holding tool 5) changes. As a result, there is a higher possibility that the shape measurement head 311 can measure the three-dimensional shape of a certain part of the measurement target object that could not be measured before the shape measurement head 311 moves. Namely, a blind spot of the shape measurement head 311 is reduced or eliminated.

The measurement target object (specifically, the holding tool 5) is placed on the stage 313. The stage 313 is configured to support the holding tool 5 placed on stage 131. The stage 313 may be configured to hold the holding tool 5 placed on stage 313. In this case, the stage 313 may include at least one of a mechanical chuck, an electro-static chuck, and a vacuum suction chuck to hold the holding tool 5. Alternatively, the stage 313 may not be configured to hold the holding tool 5 placed on stage 313. In this case, the holding tool 5 may be placed on the stage 313 without a clamp.

The stage driving system 314 moves the stage 313. The stage driving system 314 moves the stage 313 along at least one of the X-axis, the Y-axis, the Z-axis, the θX direction, the θY direction, and the θZ direction in the measurement coordinate system of the measurement system 3, for example. When the stage driving system 314 moves the stage 313, the positional relationship between the measurement field of the shape measurement head 311 and the measurement target object (specifically, the holding tool 5) placed on the stage 313 changes. As a result, the blind spot of the shape measurement head 311 is reduced or eliminated, as with a case where the shape measurement head 311 moves.

Again in FIG. 6, the processing path generation apparatus 32 generates the calibration information 3222 based on the plate position information and the processed portion position information. Furthermore, the processing path generation apparatus 32 generates the processing path information based on the calibration information 3222 and the measurement information indicating the measured result of the three-dimensional shape of each of the holding tool 5 and the workpiece W.

FIG. 8 illustrates one example of a configuration of the processing path generation apparatus 32 that is configured to generate the calibration information 3222 and the processing path information. As illustrated in FIG. 8, the processing path generation apparatus 32 includes a calculation apparatus 321, a storage apparatus 322, and a communication apparatus 323. Furthermore, the processing path generation apparatus 32 may include an input apparatus 324 and an output apparatus 325. However, the processing path generation apparatus 32 may not include at least one of the input apparatus 324 and the output apparatus 325. The calculation apparatus 321, the storage apparatus 322, the communication apparatus 323, the input apparatus 324, and the output apparatus 325 may be connected through a data bus 326.

The calculation apparatus 321 may include at least one of a CPU (Central Processing unit) and a GPU (Graphic Processing unit), for example. The calculation apparatus 321 read a computer program. For example, the calculation apparatus 321 may read the computer program recorded in the storage apparatus 322. For example, the calculation apparatus 321 may read the computer program recorded in a non-transitory computer-readable recording medium by using a non-illustrated recording medium reading apparatus. The calculation apparatus 321 may acquire (namely, download or read) the computer program from a non-illustrated apparatus external to the processing path generation apparatus 32 through the communication apparatus 323. Namely, the calculation apparatus 321 may acquire (namely, download or read) the computer program recorded in a storage apparatus of the non-illustrated apparatus external to the processing path generation apparatus 32 through the communication apparatus 323. The calculation apparatus 321 executes the read computer program. As a result, a logical functional block for performing an operation that should be performed by the processing path generation apparatus 32 (for example, an operation for generating the calibration information 3222 and the processing path information) is implemented in the calculation apparatus 321. Namely, the calculation apparatus 321 is configured to serve as a controller for implementing the logical functional block for performing the operation that should be performed by the processing path generation apparatus 32. In this case, any apparatus (typically, a computer) that executes the computer program may serve as the processing path generation apparatus 32.

FIG. 8 illustrates one example of the logical functional block implemented in the calculation apparatus 321. As illustrated in FIG. 8, a calibration unit 3211 and a processing path generation unit 3212 are implemented in the calculation apparatus 321. The calibration unit 3211 generates the calibration information 3222. The processing path generation unit 3212 generates the processing path information.

The storage apparatus 322 is configured to store desired data. For example, the storage apparatus 322 may temporarily store the computer program that is executed by the calculation apparatus 321. The storage apparatus 322 may temporarily store data temporarily used by the calculation apparatus 321 when the calculation apparatus 321 executes the computer program. The storage apparatus 322 may store data stored for a long term by the processing path generation apparatus 32. The storage apparatus 322 may include at least one of a RAM, a ROM, a hard disk apparatus, a magneto-optical disc, a SSD and a disk array apparatus. Namely, the storage apparatus 322 may include a non-transitory recording medium.

In the present example embodiment, the storage apparatus 322 stores a calibration information DB 3220 that stores the calibration information 3222 used to generate the processing path information. FIG. 9 illustrates one example of a data structure of the calibration information DB 3220. As illustrated in FIG. 9, the calibration information DB 3220 includes at least one information record 3221. Each information record 3221 includes: combination information 3223 indicating a combination pattern of the processing apparatus 1 and the holding tool 5; and the calibration information 3222 corresponding to the combination pattern of the processing apparatus 1 and the holding tool 5 indicated by the combination information 3223.

Specifically, as described above, the calibration information 3222 is the information indicating the position of the holding tool 5 in the processing coordinate system of the processing apparatus 1. Especially, the calibration information 3222 is the information indicating the position of the holding tool 5 in the processing coordinate system in a state where the holding tool 5 is set in the processing apparatus 1 (especially, in a state where the holding tool 5 is placed at the reference placement position). Therefore, there is a possibility that a position of a first holding tool 5 in a first processing coordinate system of a first processing apparatus 1 is different from a position of a first holding tool 5 in a second processing coordinate system of a second processing apparatus 1 that is different from the first processing apparatus 1. Similarly, there is a possibility that a position of a first holding tool 5 in a first processing coordinate system of a first processing apparatus 1 is different from a position of a second holding tool 5 that is different from the first holding tool 5 (for example, a second holding tool 5 whose shape is different from that of the first holding tool 5) in the first processing coordinate system of the first processing apparatus 1. Therefore, there is a possibility that the position of the holding tool 5 in the processing coordinate system changes for each combination of the processing apparatus 1 and the holding tool 5.

Therefore, in the present example embodiment, the calibration information DB 3220 stores the calibration information 3222 for each combination of the processing apparatus 1 and the holding tool 5. In other words, the calibration information DB 3220 stores the calibration information 3222 for each combination of a plurality of different processing apparatuses 1 and a plurality of different holding tools 5 (namely, a plurality of different combinations). For example, in the example illustrated in FIG. 9, the calibration information DB 3220 stores (i) the calibration information 3222 indicating the position of the holding tool 5 whose holding tool ID is "0001" in the processing coordinate system of the processing apparatus 1 whose apparatus ID is "0001", (ii) the calibration information 3222 indicating the position of the holding tool 5 whose holding tool ID is "0001" in the processing coordinate system of the processing apparatus 1 whose apparatus ID is "0002", (iii) the calibration information 3222 indicating the position of the holding tool 5 whose holding tool ID is "0002" in the processing coordinate system of the processing apparatus 1 whose apparatus ID is "0001", and (iv) the calibration information 3222 indicating the position of the holding tool 5 whose holding tool ID is "0002" in the processing coordinate system of the processing apparatus 1 whose apparatus ID is "0002".

Again in FIG. 8, the communication apparatus 323 is configured to communicate with at least one of the processing apparatus 1 and the processed portion measurement apparatus 2 through a non-illustrated communication network. In the present example embodiment, the communication apparatus 323 is configured to receive the above-described plate position information (namely, the measured result of the position of the base plate 50 by the processing apparatus 1) from the processing apparatus 1. Furthermore, the communication apparatus 323 is configured to receive the above-described processed portion position information (namely, the measured result of the position of the processed portion of the base plate 50 by the processed portion measurement apparatus 2) from the processed portion measurement apparatus 2. Furthermore, the communication apparatus 323 is configured to transmit the processing path information generated by the processing path generation apparatus 32 to the processing apparatus 1.

The input apparatus 324 is an apparatus that receives an input of information from an outside of the processing path generation apparatus 32 to the processing path generation apparatus 32. For example, the input apparatus 324 may include an operating apparatus (for example, at least one of a keyboard, a mouse, and a touch panel) that is operable by a user. For example, the input apparatus 324 may include a recording medium reading apparatus that is configured to read information recorded as data on a recording medium that is attachable to the processing path generation apparatus 32.

The output apparatus 325 is an apparatus that outputs information to the outside of the processing path generation apparatus 32. For example, the output apparatus 325 may output the information as an image. Namely, the output apparatus 325 may include a display apparatus (a so-called display) that is configured to display an image indicating the information that should be output. For example, the output apparatus 325 may output the information as audio. Namely, the output apparatus 325 may include an audio apparatus (so-called a speaker) that is configured output the audio. For example, the output apparatus 325 may output the information on a paper. Namely, the output apparatus 325 may include a printing apparatus (so-called a printer) that is configured to print desired information on the paper.

### (2) Operation of Processing System SYS

Next, an operation performed by the processing system SYS will be described. In the present example embodiment, the processing system SYS may perform a processing operation for processing the workpiece W by mainly using the processing apparatus 1. Furthermore, the processing system SYS may perform a calibration operations for generating the calibration information 3222 by mainly using the processing apparatus 1 and the processed portion measurement apparatus 2. Furthermore, the processing system SYS may perform a processing path generation operation for generating the processing path information by mainly using the measurement system 3. Furthermore, the processing system SYS may perform a processing path validation operation for determine whether or not the processing path information generated by the processing path generation operation is appropriate by mainly using the processing apparatus 1. Therefore, in the below-described description, the processing operation, the calibration operation, the processing path generation operation, and the processing path validation operation will be described in sequence.

### (2-1) Processing Operation

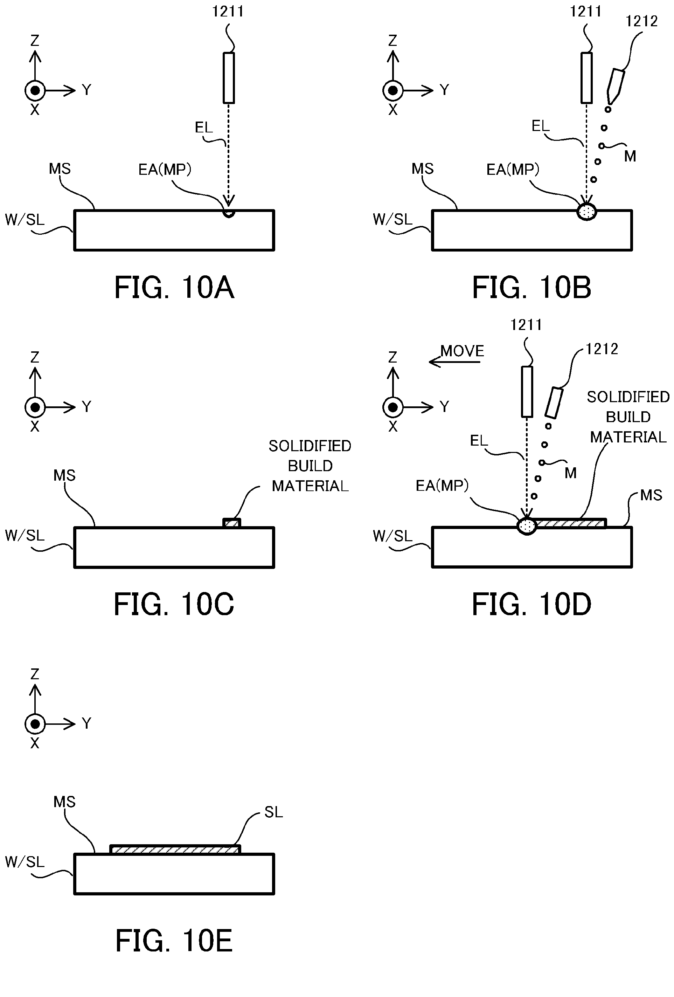

First, with reference to FIG. 10 to FIG. 11, the processing operations will be described. Especially, an additive manufacturing operation performed by the processing apparatus 1 that is the additive manufacturing apparatus will be described as one example of the processing operation. As described above, the processing apparatus 1 builds the three-dimensional structural object ST by using the Laser Metal Deposition. Therefore, the processing apparatus 1 may build the three-dimensional structural object ST by performing an existing additive manufacturing operation based on the Laser Metal Deposition. In the below-described description, one example of the processing operation of building the three-dimensional structural object ST by using the Laser Metal Deposition will be briefly described.

The processing system SYS forms sequentially builds a plurality of layered partial structural objects (it is referred to as the "structural layer" in the below described description) SL that are arranged along the Z-axis direction in order to build the three-dimensional structural object ST, for example. For example, the processing system SYS builds, one by one in sequence, the plurality of structural layers SL that are obtained by slicing the three-dimensional structural object ST along the Z-axis direction. As a result, the three-dimensional structural object ST that is a layered structural body in which the plurality of structural layers SL are stacked is formed. Next, a flow of an operation for forming the three-dimensional structural object ST by forming the plurality of structural layers SL one by one in sequence will be described.

First, with reference to FIG. 10A to FIG. 10E, an operation for forming each structural layer SL will be described. The processing system SYS moves at least one of the processing head 121 and the stage 131 so that the target irradiation area EA is set at a desired area on the build surface MS that corresponds to a surface of the workpiece W or a surface of the built structural layer SL, under the control of the control apparatus 17. Then, the processing system SYS emits the processing light EL from the irradiation optical system 1211 to the target irradiation area EA. In this case, a light concentration position on which the processing light EL is concentrated in the Z-axis direction may be located on the build surface MS. Alternatively, the light concentration position may be away from the build surface MS. As a result, as illustrated in FIG. 10A, the melt pool (namely, a pool of a metal molten by the processing light EL) MP is formed on the build surface MS that is irradiated with the processing light EL. Moreover, the processing system SYS supplies the build material M from the material nozzle 1212 under the control of the control apparatus 17. As a result, the build material M is supplied to the melt pool MP. The build material M supplied to the melt pool MP are molten by the processing light EL with which the melt pool MP is irradiated. Alternatively, the build material M supplied from the material nozzle 1212 may be molten by the processing light EL before reaching the melt pool MP, and the molten build material M may be supplied to the melt pool MP. Then, when the melt pool MP is no longer irradiated with the processing light EL due to the movement of at least one of the processing head 121 and the stage 131, the build material M molten in the melt pool MP is cooled and solidified (namely, coagulated). As a result, as illustrated in FIG. 10C, the build object including the solidified build material M is deposited on the build surface MS.

The processing apparatus 1 repeats a series of build process including the formation of the melt pool MP by the irradiation of the processing light EL, the supply of the build material M to the melt pool MP, the melting of the supplied build material M and the solidification of the molten build material M while relatively moving the processing head 121 relative to the build surface MS along at least one of the X-axis direction and the Y-axis direction, as illustrated in FIG. 10D. In this case, the processing apparatus 1 irradiates an area in which the build object should be built on the build surface MS with the processing light EL, but does not irradiate an area in which the build object should not be built on the build surface MS with the processing light EL. Namely, the processing apparatus 1 irradiates the build surface MS with the processing light EL at a timing based on an aspect of a distribution of the area in which the build object should be built, while moving the target irradiation area EA along a predetermined movement path on the build surface MS.

The movement path of the target irradiation area EA on the build surface MS (especially, the movement path of the target irradiation position that is irradiated with the processing light EL) may be referred to as a processing path (in other words, a tool path). The above-described processing path information includes information related to this processing path. In other words, the processing path information is information indicating the processing path. Therefore, the processing path generation apparatus 32 generates the processing path information including the information related to the processing path (namely, the processing path information indicating the processing path). The processing apparatus 1 irradiates the build surface MS with the processing light EL at the timing based on the aspect of the distribution of the area in which the build object should be built, while moving the target irradiation area EA along the predetermined movement path on the build surface MS based on the processing path information. Incidentally, since the processing apparatus 1 performs the additive manufacturing, the processing path is typically the movement path of the target irradiation area EA (especially, the movement path of the target irradiation position that is irradiated with the processing light EL) on the build surface MS with respect to the processing apparatus 1.

As a result, the melt pool MP also moves on the build surface MS along a movement path based on the movement path of the target irradiation area EA. Specifically, the melt pool MP is formed in sequence at a part that is irradiated with the processing light EL in the area along the movement path of the target irradiation area EA on the build surface MS. As a result, as illustrated in FIG. 10E, the structural layer SL corresponding to the build object that is an aggregation of the build material M, which is solidified after being molten, is built on the build surface MS. Namely, the structural layer SL corresponding to an aggregation of the build object built in a pattern based on the movement path of the melt pool MP on the build surface MS (namely, the structural layer SL having a shape based on the movement path of the melt pool MP in a planar view) is built. Incidentally, when the target irradiation area EA is set at the area in which the build object should not be built, the processing apparatus 1 may irradiate the target irradiation area EA with the processing light EL and stop the supply of the build material M. Moreover, when the target irradiation area EA is set at the area in which the build object should not be built, the processing apparatus 1 may supply the build material M to the target irradiation area EA and irradiate the target irradiation area EA with the processing light EL having an intensity by which the melt pool MP is not formed.

The processing apparatus 1 repeats the operation for forming the structural layer SL based on the processing path information under the control of the control apparatus 17. Specifically, the processing apparatus 1 first performs an operation for building the first structural layer SL#1 on the build surface MS corresponding to the surface of the workpiece W based on the processing path information (especially, information related to the processing path for building the structural layer SL#1). As a result, the structural layer SL#1 is built on the build surface MS, as illustrated in FIG. 11A. Then, the processing apparatus 1 sets a surface (namely, an upper surface) of the structural layer SL#1 as a new build surface MS, and builds the second structural layer SL#2 on the new build surface MS. In order to build the structural layer SL#2, the control apparatus 17 first controls at least one of the head driving system 122 and the stage driving system 132 so that the processing head 121 moves along the Z-axis relative to the stage 131. Specifically, the control apparatus 17 controls at least one of the head driving system 122 and the stage driving system 132 to move the processing head 121 toward the +Z side and / or to move the stage 131 toward the -Z side so that the target irradiation area EA is set on the surface of the structural layer SL#1 (namely, the new build surface MS). Then, the processing apparatus 1 builds the structural layer SL#2 on the structural layer SL#1 by an operation that is the same as the operation for building the structural layer SL#1 based on the processing path information (especially, information related to the processing path corresponding to the structural layer SL#2) under the control of the control apparatus 17. As a result, the structural layer SL#2 is built as illustrated in FIG. 11B. Then, the same operation is repeated until all of the structural layers SL that constitute the three-dimensional structural object ST to be built on the workpiece W are built. As a result, as illustrated in FIG. 11C, the three-dimensional structural object ST is built by the layered structural body in which the plurality of structural layers SL are stacked.

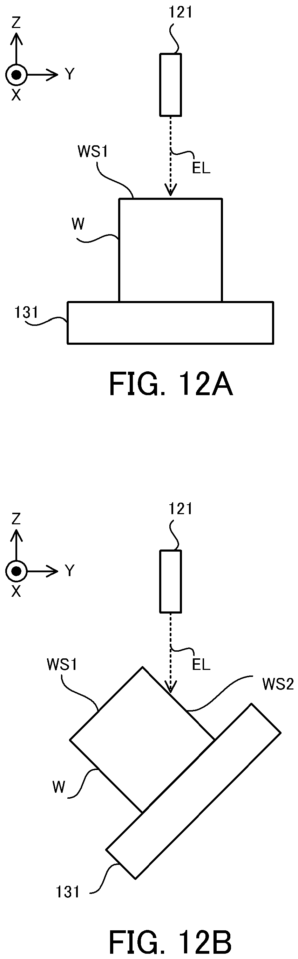

In the process of building the three-dimensional structural object ST, the processing apparatus 1 may perform the additive manufacturing on a first directional surface of the workpiece W (alternatively, the built object that has been already built) facing toward a first direction, and then perform the additive manufacturing on a second directional surface facing toward a direction that is different from the first directional surface. For example, as illustrated in FIG. 12A, the processing apparatus 1 may perform the additive manufacturing on a first directional surface WS1 by irradiating the first directional surface WS1 of the workpiece W with the processing light EL. Then, as illustrated in FIG. 12B, the processing apparatus 1 may perform the additive manufacturing on a second directional surface WS2 by irradiating the second directional surface WS2 of the workpiece W, which faces toward a direction that is different from a direction toward which the first directional surface WS1 faces, with the processing light EL.

In this case, the processing apparatus 1 may perform the additive manufacturing on the second directional surface WS2 of the workpiece W by changing the positional relationship between the processing head 121 and the stage 131 (especially, the positional relationship between the processing head 121 and the workpiece W) after performing the additive manufacturing on the first directional surface WS1 of the workpiece W. For example, the processing apparatus 1 may change the positional relationship between the processing head 121 and the stage 131 from a positional relationship that allows the processing head 121 to irradiate the first directional surface WS1 of the workpiece W with the processing light EL to a positional relationship that allows the processing head 121 to irradiate the second directional surface WS2 of the workpiece W with the processing light EL. As one example, as illustrated in FIG. 12B, the processing apparatus 1 may change the positional relationship between the processing head 121 and the stage 131 from the positional relationship that allows the processing head 121 to irradiate the first directional surface WS1 of the workpiece W with the processing light EL to the positional relationship that allows the processing head 121 to irradiate the second directional surface WS2 of the workpiece W with the processing light EL by changing a relative pose between the processing head 121 and the stage 131. Incidentally, in an example illustrated in FIG. 12B, the processing apparatus 1 changes a pose of the stage 131.

### (2-2) Calibration Operation

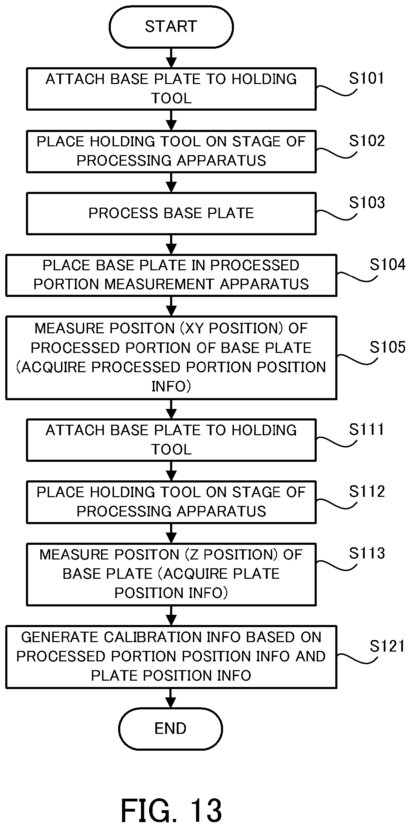

Next, with reference to FIG. 13, the calibration operation will be described. FIG. 13 is a flowchart that illustrates a flow of the calibration operation. Incidentally, "the X -axis, the Y-axis, and the Z-axis" used in the description of the calibration operation mean the X-axis, the Y-axis, and the Z-axis in the processing coordinate system, respectively", if there is no special notation.

As illustrated in FIG. 13, first, the base plate 50 is attached to the holding tool 5 (a step S101). Namely, the base plate 50 is fixed to the plate fixing member 521 of the support member 52 of the holding tool 5. Since the holding tool 5 includes the plurality of support members 52, the plurality of base plates 50 are attached to the plurality of support members 52, respectively at the step S101.

Incidentally, in a case where a positional relationship between the base plate 50 and the plate fixing member 521 does not change in a period from a time at which the base plate 50 is attached to the holding tool 5 to a time at which the base plate 50 is processed at a below-described step S103, the base plate 50 may not be fixed to the plate fixing member 521.

Incidentally, in the present example embodiment, another base plate 50 is also attached to the holding tool 5 instead of the base plate 50 attached to the holding tool 5 at the step S101, as described in detail later. Therefore, in the below-described description, the base plate 50 attached to the holding tool 5 at the step S101 is referred to as a "base plate 50A". The base plate 50A attached to the holding tool 5 at the step S101 is used as the base plate 50 that is processed by the processing apparatus 1. Therefore, the base plate 50A may be referred to as a reference member for processing.

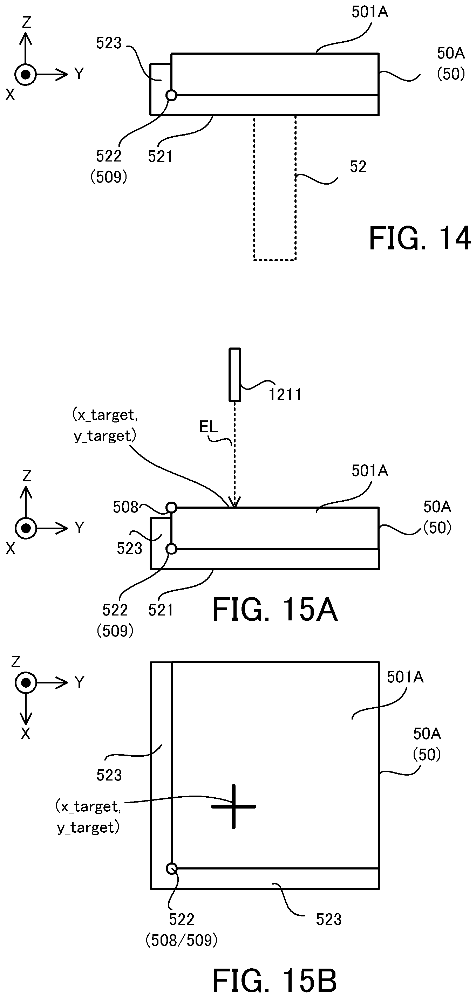

FIG. 14 illustrates one example of the base plate 50A. As illustrated in FIG. 14, the base plate 50A may be a plate-shaped member (alternatively, a cuboid-shaped member). An upper surface of the base plate 50Ais used as a reference surface 501Athat is processed by the processing apparatus 1. The reference surface 501A is typically a planar surface. The reference surface 501A may be a surface along the XY plane in a situation where the holding tool 5 is set in the processing apparatus 1 (especially, placed at the reference placement position). However, the base plate 50A illustrated in FIG. 14 is one example, and the base plate 50A that is different from the base plate 50A illustrated in FIG. 14 may be attached to the holding tool 5 at the step S101 in FIG. 13.

As described above, the plurality of support members 52 may include at least two support members 52 positioned at positions that are different along the X-axis direction. Therefore, the plurality of base plates 50A may also include at least two base plates 50A positioned at positions that are different along the X-axis direction. Namely, the plurality of base plates 50A may include at least two base plates 50A that respectively include at least two reference surfaces 501A positioned at positions that are different along the X-axis direction.

As described above, the plurality of support members 52 may include at least two support members 52 positioned at positions that are different along the Y-axis direction. Therefore, the plurality of base plates 50A may also include at least two base plates 50A positioned at positions that are different along the Y-axis direction. Namely, the plurality of base plates 50A may include at least two base plates 50A that respectively include at least two reference surfaces 501A positioned at positions that are different along the Y-axis direction.

Again in FIG. 13, then, the holding tool 5 to which the base plates 50A has been attached is placed on the stage 131 of the processing apparatus 1 (a step S102). Namely, the holding tool 5 is placed at the reference placement position of the stage 131 (the step S102). Incidentally, when the calibration operation is performed, the workpiece W may not be placed in the holding tool 5. Alternatively, when the calibration operation is performed, the workpiece W may be placed in the holding tool 5.

Then, the processing apparatus 1 processes the base plate 50A attached to the holding tool 5 (the step S103). Specifically, the processing apparatus 1 processes the base plate 50A by performing the processing at a predetermined target coordinate in the processing coordinate system. For example, the processing apparatus 1 may move the processing head 121 by using the head driving system 122 so that the predetermined target coordinate in the processing coordinate system is allowed to be irradiated with the processing light EL. Then, the processing apparatus 1 may process the base plate 50A by irradiating the predetermined target coordinate with the processing light EL. Namely, the processing apparatus 1 may form the processed portion of the base plate 50A at the predetermined target coordinate by irradiating the predetermined target coordinate with the processing light EL.

In the present example embodiment, as illustrated in FIG. 15A and FIG. 15B, an example in which the predetermined target coordinate includes at least a target position x_target along the X-axis direction and a target position y_target along the Y-axis direction will be described. However, the predetermined target coordinate may include a target position along the Z-axis direction. The predetermined target coordinate (x_target, y_target) may be a coordinate at which the reference surface 501A of the base plate 50A is expected to be positioned in a state where the holding tool 5 is placed at the reference placement position of the stage 131. The target coordinate (x_target, y_target) that has a predetermined positional relationship with respect to the reference part 509 of the base plate 50A may be set. For example, a position of a corner part 5091 of the base plate 50A may be considered to be the same as a position of the reference part 509 in the X-axis direction and the Y-axis direction, and the target coordinate (x_target, y_target) that has the predetermined positional relationship with respect to the corner part 5091 may be set. Alternatively, a position that is away from the corner part 5091 by a target distance in the X-axis direction and a position that is away from the corner part 5091 by a target distance in the Y-axis direction may be set as the target coordinate (x_target, y_target).

FIG. 15A and FIG. 15B further illustrates one example of the processed portion. In an example illustrated in FIG. 15A and FIG. 15B, the processing apparatus 1 forms a cross-shaped processed portion, which includes two linear processed portions that intersect each other, on the reference surface 501A of the base plate 50A (especially, at the predetermined target coordinate). In this case, the processing apparatus 1 may process the base plate 50A so that a position at which the two linear processed portions intersect is the target coordinate (x_target, y_target). However, the processing apparatus 1 may form the processed portion having a shape that is different from the shape illustrated in FIG. 15A and FIG. 15B. For example, the processing apparatus 1 may form a point-shaped processed portion.

A characteristic of the processed portion that should be formed on the base plate 50A by the processing apparatus 1 may be determined in advance or may be changed as needed. The characteristic of the processed portion may include at least one of a position, a shape, and a size of the processed portion. For example, the characteristic of the processed portion may be changed based on an accuracy required for the calibration information 3222. Namely, the characteristic of the processed portion may be changed based on an accuracy required as an accuracy of the position of the holding tool 5 indicated by the calibration information 3222.

Since the plurality of base plates 50A are attached to the holding tool 5, the processing apparatus 1 processes the plurality of base plates 50A in sequence. Specifically, the processing apparatus 1 processes the plurality of base plates 50A in sequence by performing the processing at a plurality of target coordinates, which correspond to the plurality of base plates 50A, respectively, in sequence.

Again in FIG. 13, after the base plate 50A is processed, the processed base plate 50A is transported to the processed portion measurement apparatus 2 (a step S104). Then, the processed base plate 50A is placed in (in other words, set in or attached to) the processed portion measurement apparatus 2 (the step S104). Therefore, first, the holding tool 5 is detached from the stage 131 of the processing apparatus 1, and the base plate 50A is detached from the holding tool 5. However, the base plate 50A may be detached from the holding tool 5 without detaching the holding tool 5 from the stage 131 of the processing apparatus 1. Then, the base plate 50A is transported to the processed portion measurement apparatus 2. Then, the base plate 50Ais placed in the processed portion measurement apparatus 2. Alternatively, the holding tool 5 to which the base plate 50A is still attached may be transported to and placed in the processed portion measurement apparatus 2 without detaching the base plate 50A from the holding tool 5. In a case where the plurality of base plates 50A are attached to the holding tool 5, the plurality of base plates 50A detached from the holding tool 5 may be transported to and placed in the processed portion measurement apparatus 2 in sequence.

Incidentally, in a case where the processing apparatus 1 and the processed portion measurement apparatus 2 are integrated as described above, the processing system SYS may not perform the operation at the step S104. In this case, the processing apparatus 1 (the processed portion measurement apparatus 2) may measure the processed portion of the base plate 50A attached to the holding tool 5 placed on the stage 131.

Then, the processed portion measurement apparatus 2 measures the position of the processed portion of the base plates 50A (a step S105). In a case where the plurality of base plates 50A are placed in the processed portion measurement apparatus 2 in sequence, the processed portion measurement apparatus 2 measures the positions of the processed portions of the plurality of base plates 50A in sequence. In the present example embodiment, an example in which the processed portion measurement apparatus 2 measures at least the position of the processed portion along at least one of the X-axis direction and the Y-axis direction will be described. However, the processed portion measurement apparatus 2 may measure the position of processed portion along the Z-axis direction.

The measurement of the position of the processed portion by the processed portion measurement apparatus 2 may mean an acquisition of information that directly or indirectly indicate the position of the processed portion. For example, in a case where the processed portion measurement apparatus 2 is the measurement apparatus (typically, an imaging apparatus) that is configured to measure the position of processed portion by imaging the base plate 50A as described above, the measurement of the position of processed portion may mean imaging the base plate 50A. In this case, the processed portion position information indicating the measured result of the position of the processed portion may include an image generated by imaging the base plate 50A. In this case, the image in which the processed portion is captured is information that directly or indirectly indicates the position of the processed portion because the processed portion is captured in the image. The processed portion measurement apparatus 2 may transmit this image to the measurement system 3 as the processed portion position information.

In a case where the processed portion is the cross-shaped processed portion described above (alternatively, includes the plurality of processed portions that intersect each other), the processed portion measurement apparatus 2 may measure a position of an intersecting point of the plurality of linear processed portions as the position of the processed portion. As one example, the processed portion measurement apparatus 2 may measure positions of two points at which a virtual outer frame surrounding the processed portion and one linear processed portion intersect, and measure a position of a line connecting the two points as the position of the one linear processed portion. Then, the processed portion measurement apparatus 2 may measure the position of the intersecting point of the plurality of linear processed portions as the position of the processed portion.

In a case where the processed portion is the cross-shaped processed portion described above (alternatively, includes the plurality of processed portions that intersect each other), the processed portion measurement apparatus 2 may measure the positions of at least two processed portions, which are designated by the user of the processing system SYS, of the plurality of processed portions. Then, the processed portion measurement apparatus 2 may measure the position of the intersecting point of the plurality of linear processed portions as the position of the processed portion. Alternatively, in a case where the processed portion is a processed portion having any shape, the processed portion measurement apparatus 2 may measure the position of a part of the processed portion, which is designated by the user of the processing system SYS, as the position of the processed portion.

The user may designate the processed portion (alternatively, a part thereof), which is measured by the processed portion measurement apparatus 2, by referring to information that is related to the measured result of the processed portion measurement apparatus 2 and that is displayed on a non-illustrated display apparatus of the processed portion measurement apparatus 2. For example, in a case where the processed portion measurement apparatus 2 generates the image in which the base plate 50A is captured by imaging the base plate 50A, the user may designate the processed portion (alternatively, a part thereof), which is measured by the processed portion measurement apparatus 2, by referring to the image in which the processed portion is captured. In this case, the user may designate the position of the processed portion in the image displayed on the display apparatus, then, the display apparatus enlarges the image around the designated position to enlarge the processed portion, and the user may designate the processed portion (alternatively, a part thereof), which is measured by the processed portion measurement apparatus 2, by referring to the enlarged image.

The processed portion measurement apparatus 2 may measure a position of the reference part 509 of the base plate 50A, in addition to or instead of measuring the position of processed portion. In this case, the processed portion measurement apparatus 2 may output, as the processed portion position information, information related to a positional relationship between the reference part 509 of the base plate 50A and the position of the processed portion. For example, the processed portion measurement apparatus 2 may output, as the processed portion position information, information related to the position of the processed portion relative to the reference part 509 of the base plate 50A.

The processed portion measurement apparatus 2 may measure a position of the sub-reference part 508 (see FIG. 15A and FIG. 15B), which is a part of the base plate 50A and which has a known positional relationship with respect to the reference part 509 of the base plate 50A, in addition to or instead of measuring the position of processed portion. A corner part (for example, a vertex) of the base plate 50Ais one example of the sub-reference part 508 of the base plate 50A. Especially, the sub-reference part 508 of the base plate 50A may be a part that can be directly measured by the processed portion measurement apparatus 2. In this case, the processed portion measurement apparatus 2 may output, as the processed portion position information, information related to a relationship between a position of the sub-reference part 508 of the base plate 50A and the position of the processed portion. For example, the processed portion measurement apparatus 2 may output, as the processed portion position information, information related to the position of the processed portion relative to the position of the sub-reference part 508 of the base plate 50A.

The base plate 50A may be placed at a position that is mechanically determined in advance in the processed portion measurement apparatus 2. Especially, the base plate 50A may be placed in the processed portion measurement apparatus 2 so that the reference part 509 of the base plate 50Ais positioned at a position that is mechanically determined in advance in the processed portion measurement apparatus 2. In this case, information related to the position of the base plate 50A (especially, the position of the reference part 509) is information known to the processed portion measurement apparatus 2. In this case, the processed portion measurement apparatus 2 may output, as processed portion position information, information related to the position of the processed portion relative to the position of the reference part 509 or the sub-reference part 508 of the base plate 50A by measuring the position of the processed portion.

In a case where the vertex of the base plate 50A is used as the reference part 509, the processed portion measurement apparatus 2 measures the position of the reference part 509 or the sub-reference part 508 of the base plate 50A by measuring positions of at least two sides of the base plate 50Athat intersect at the vertex corresponding to the reference part 509. For example, in the example illustrated in FIG. 15B, the processed portion measurement apparatus 2 may measure the positions of a left side and a lower side of the base plate 50A in FIG. 15B. In this case, a position at which the at least two sides intersect is the position of the reference part 509, and a position of a part of the base plate 50Athat has a known positional relationship with respect to the position at which the at least two sides intersect is the position of the sub-reference part 508. As a result, the processed portion measurement apparatus 2 may output, as processed portion position information, information related to the position of the processed portion relative to the position of the reference part 509 or the sub-reference part 508 of the base plate 50A by measuring the position of the processed portion.

The user of the processing system SYS may input information related to the position of the reference part 509 or the sub-reference part 508 of the base plate 50A to the processed portion measurement apparatus 2. As a result, the processed portion measurement apparatus 2 may output, as processed portion position information, information related to the position of the processed portion relative to the position of the reference part 509 or the sub-reference part 508 of the base plate 50A by measuring the position of the processed portion.

Again in FIG. 13, after the base plate 50Ais detached from the holding tool 5, a new base plate 50 (in the below-described description, it is referred to as a "base plate 50B") is attached to the holding tool 5 (a step S111). Namely, the base plate 50B is attached to the holding tool 5 instead of the base plate 50A. Specifically, the base plate 50B is fixed to the plate fixing member 521 of the support member 52 of the holding tool 5. Since the holding tool 5 includes the plurality of support members 52, the plurality of base plates 50B are attached to the plurality of support members 52, respectively, at the step S 111. The base plate 50B attached to the holding tool 5 at the step S111 is used as the base plate 50 that is measured by the processing apparatus 1. Therefore, the base plate 50B may be referred to as a reference member for measurement.

Incidentally, in a case where the base plate 50A is detached from the holding tool 5, the processing apparatus 1 may measure the base plate 50B in parallel with the measurement of the processed portion by the processed portion measurement apparatus 2 described above. Namely, an operation at the step S105 in FIG. 13 and the operation at a step S113 in FIG. 13 may be performed in parallel. In this case, a throughput of the calibration operation improves.

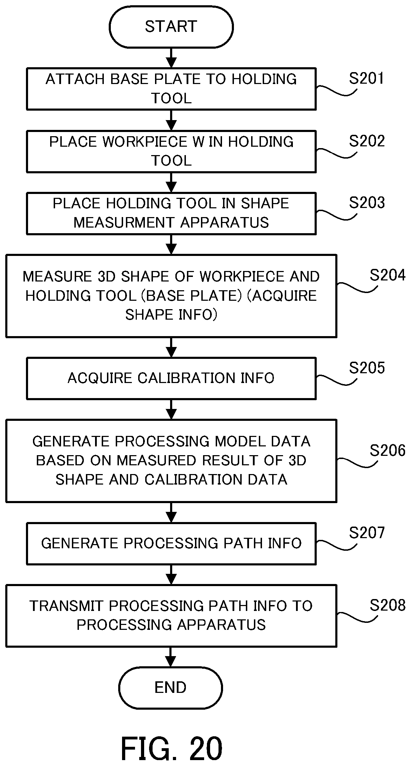

Moreover, in a case where the base plate 50A is detached from the holding tool 5, the shape measurement apparatus 31 may measure the holding tool 5 that actually holds the workpiece W in parallel with the measurement of the processed portion by the processed portion measurement apparatus 2 described above in the below-described processing path generation operation. Namely, the operation at the step S105 in FIG. 13 and an operation at a step S204 in FIG. 20 described below may be performed in parallel. Namely, a part of the calibration operation illustrated in FIG. 13 and a part of the processing path generation operation illustrated in FIG. 20 described below may be performed in parallel. In this case, the calibration information 3222 may be generated after the processing path generation operation stars. Namely, the calibration information 3222 may be generated after the holding tool 5 that actually holds the workpiece W is placed in the shape measurement apparatus 31.

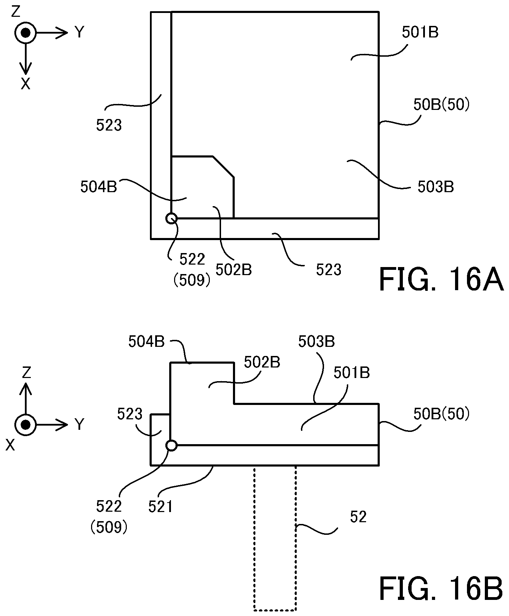

FIG. 16A and FIG. 16B illustrates one example of the base plate 50B. As illustrated in FIG. 16A and FIG. 16B, a shape of the base plate 50B is different from a shape of the base plate 50A. In an example illustrated in FIG. 16A and FIG. 16B, the base plate 50B includes a first plate part 501B and a second plate part 502B that projects upwardly from the first plate part 501B. An upper surface of the first plate part 501B may be used as a reference surface 503B that is measured by the processing apparatus 1. An upper surface of the second plate part 502B may be used as a reference surface 504B that is measured by the processing apparatus 1. A height of the reference surface 503B is different from a height of the reference surface 504B.

One reason why the base plate 50B includes the second plate part 502B corresponding to a convex part is that the shape measurement apparatus 31 measures the three-dimensional shapes of the holding tool 5 and the workpiece W (namely, measures three-dimensional position of each point of the surface of the holding tool 5 and each point of the surface of the workpiece W in the measurement coordinate system) in the processing path generation operation described below. A measurement of the three-dimensional shape of the holding tool 5 by the shape measurement apparatus 31 includes A measurement of the three-dimensional shape of the base plate 50B (namely, a measurement of the position of the base plate 50B in the measurement coordinate system) by the shape measurement apparatus 31. In this case, the shape measurement apparatus 31 can measure the three-dimensional shape of the base plate 50B more appropriately, compared to a case where the base plate 50B does not include the second plate part 502B.

Information related to a positional relationship between at least one of the reference surfaces 503B and 504B and the reference part 522 of the support member 52 may be information known to the processing system SYS in a state where the base plate 50B is attached to the support member 52. For example, information related to the positional relationship between the reference surface 503B and the reference part 522 in the Z-axis direction may be information known to the processing system SYS. For example, information related to the positional relationship between the reference surface 504B and the reference part 522 in the Z-axis direction (for example, information related to a distance Δz between the reference surface 504B and the reference part 522 in the Z-axis direction illustrated in FIG. 16B) may be information known to the processing system SYS. Incidentally, since the reference part 522 of the support member 52 contacts the reference part 509 of the base plate 50B as described above, information related to a positional relationship between at least one of the reference surfaces 503B and 504B and the reference part 509 of the base plate 50B may be regarded as information known to the processing system SYS.

A shape of the second plate part 502B in a planar view may be a shape that is asymmetrical about a point. Especially, a shape of the reference surface 504B of the second plate part 502B in a planar view may be a shape that is asymmetrical about a point. In the example illustrated in FIG. 16A, the shape of the reference surface 504B in a planar view is a shape (a pentagon in effect) obtained by cutting off one vertex of a square. Namely, the shape of the reference surface 504B in a planar view is a shape in which a notch is formed in part. Furthermore, the reference part 509 of the base plate 50B (namely, the reference part 522 of the holding tool 5) and the second plate part 502B may have a predetermined positional relationship. For example, in the example illustrated in FIG. 16A, a vertex of the reference surface 504B that is opposite to the notch along a diagonal direction of the reference surface 504B is set as the reference part 509 of the base plate 50B (namely, the reference part 522 of the holding tool 5). In this case, the processing path generation apparatus 32 can determine the reference part 509 of the base plate 50B (namely, the reference part 522 of the holding tool 5) in the below-described processing path generation operation appropriately, compared to a case where the shape of the reference surface 504B in a planar view is a shape that is symmetrical about point.

A characteristic of the base plate 50B (as one example, a characteristic of the second plate part 502B) may be determined in advance or may be changed as needed. The characteristic of the base plate 50B may include at least one of a position, a shape, and a size of the base plate 50B. For example, the characteristic of the base plate 50B may be changed based on an accuracy required for the calibration information 3222. Namely, the characteristic of the base plate 50B may be changed based on an accuracy required as an accuracy of the position of the holding tool 5 indicated by the calibration information 3222. The same is applied to a characteristics of the base plate 50A.

However, the base plate 50B illustrated in FIG. 16A and FIG. 16B is one example, and the base plate 50B that is different from the base plate 50B illustrated in FIG. 16A and FIG. 16B may be attached to the holding tool 5 at the step S111 in FIG. 13. Alternatively, the base plate 50B having a shape that is the same as the shape of the base plate 50A may be attached to the holding tool 5 at the step S111.

Alternatively, the base plate 50A processed by the processing apparatus 1 may be attached to the holding tool 5 at the step S 111. Namely, the base plate 50A may be used as the base plate 50B. In this case, the base plate 50A, on which the position of the processed portion has been measured by the processed portion measurement apparatus 2, may be attached to the holding tool 5 again at the step S 111. Alternatively, after the base plate 50A is attached to the holding tool 5 at the step S101, the processing apparatus 1 may measure the position of the base plate 50Abefore the processing apparatus processes the base plate 50A. Then, the processing apparatus 1 may process the base plate 50A. In this case, the base plate 50A may not be necessarily attached to the holding tool 5 again after detaching it from the holding tool 5.

Alternatively, the base plate 50B measured by the processing apparatus 1 may be attached to the holding tool 5 at the step S101. Namely, the base plate 50B may be used as the base plate 50A. In this case, the base plate 50B, on which the position of the processed portion has been measured by the processed portion measurement apparatus 2, may be attached to the holding tool 5 again at the step S 111. Alternatively, after the base plate 50B is attached to the holding tool 5 at the step S101, the processing apparatus 1 may measure the position of the base plate 50B before the processing apparatus 1 processes the base plate 50B. Then, the processing apparatus 1 may process the base plate 50B. In this case, the base plate 50B may not be necessarily attached to the holding tool 5 again after detaching it from the holding tool 5.

As described above, the heights of at least two of the plurality of support members 52 may be different. Therefore, heights of at least two of the plurality of base plates 50B may also be different. For example, heights of at least two reference surfaces 503B of at least two of the plurality of base plates 50B may be different. Namely, at least two reference surfaces 503B may be positioned at positions that are different in the Z-axis direction, respectively. For example, heights of at least two reference surfaces 504B of at least two of the plurality of base plates 50B may be different. Namely, at least two reference surfaces 504B may be positioned at positions that are different in the Z-axis direction, respectively.

Again in FIG. 13, then, the holding tool 5 to which the base plate 50B is attached is placed on the stage 131 of the processing apparatus 1 (a step S112). Namely, the holding tool 5 is placed at the reference placement position of the stage 131 (the step S112).

Then, the processing apparatus 1 measures the position of the base plate 50B (the step S113). Namely, the processing apparatus 1 acquires information related to the position of the base plate 50B in the processing apparatus 1. Specifically, the processing apparatus 1 measures the position of the base plate 50B in the processing coordinate system. For example, the processing apparatus 1 may measure the position of the reference surface 503B of the base plate 50B as the position of the base plate 50B. For example, the processing apparatus 1 may measure the position of the reference surface 504B of the base plate 50B as the position of the base plate 50B. In the below-described description, an example in which the processing apparatus 1 measures the position of the reference surface 504B of the base plate 50B as the position of the base plate 50B will be described.

In the present example embodiment, an example in which the processing apparatus 1 measures the position of the base plate 50B in at least the Z-axis direction (namely, the height of the base plate 50B, and the position in the Z-axis direction is referred to as a "Z position" in the below-described description) will be described. In this case, the processing apparatus 1 may measure the position of the reference surface 504B in the Z-axis direction (namely, the height of the reference surface 504B).

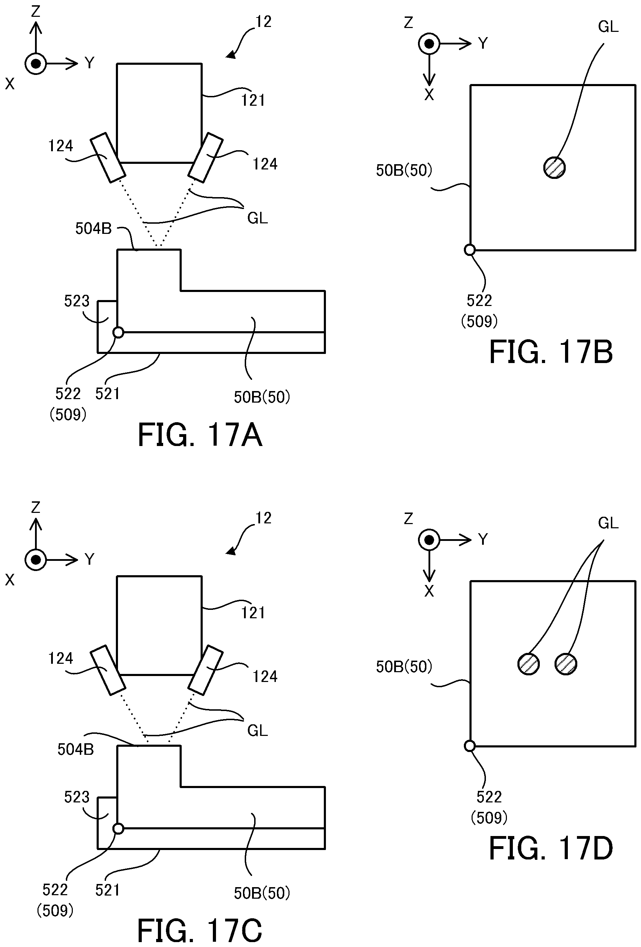

The processing apparatus 1 measures the Z position of the reference surface 504B by using the plurality of guide light irradiation apparatuses 124 and the imaging apparatus 14. Specifically, as described above, the plurality of guide lights GL emitted from the plurality of guide light irradiation apparatuses 124, respectively, intersect each other at the predetermined intersecting position below the processing head 121. Therefore, in a case where the reference surface 504B is positioned at the intersecting position, the plurality of guide lights GL intersect each other on the reference surface 504B, as illustrated in FIG. 17A and FIG. 17B. As a result, the plurality of guide lights GL form a single beam spot on the reference surface 504B. On the other hand, in a case where the reference surface 504B is not positioned at the intersecting position, the plurality of guide lights GL do not intersect on the reference surface 504B, as illustrated in FIG. 17C and FIG. 17D. As a result, the plurality of guide lights GL form a plurality of beam spots on the reference surface 504B, respectively. Therefore, in a case where the plurality of guide lights form the single beam spot on the reference surface 504B, the reference surface 504B is positioned at the intersecting position, which is determined with respect to the processing head 121, in the Z-axis direction. Namely, the Z position of the reference surface 504B in the Z-axis direction can be determined.

Therefore, the control apparatus 17 moves at least one of the processing head 121 and the stage 131 along the Z-axis direction so that the plurality of guide lights form the single beam spot on the reference surface 504B based on the image generated by the imaging apparatus 14 imaging states of the plurality of guide lights GL (especially, states of the plurality of guide lights GL on the reference surface 504B). Then, in a case where the plurality of guide lights GL form the single beam spot on the reference surface 504B, the control apparatus 17 acquires information related to the position (especially, the Z position) of the processing head 121 in the processing coordinate system from the position measurement apparatus 123. Once the Z position of the processing head 121 in the processing coordinate system is determined, the intersecting position in the processing coordinate system is also determined. Once the intersecting position in the processing coordinate system is determined, the Z position of the reference surface 504B in the processing coordinate system is also determined. This is because the reference surface 504B is positioned at the intersecting position. Once the Z position of the reference surface 504B in the processing coordinate system is determined, the Z position of the reference part 522 of the holding tool 5 in the processing coordinate system is also determined. This is because the information related to the positional relationship between the reference surface 504B and the reference part 522 in the Z-axis direction is the information known to the processing system SYS as described above. Therefore, it can be said that the information related to the position (especially, the Z position) of the processing head 121 in the processing coordinate system in the state where the plurality of guide lights GL form the single beam spot on the reference surface 504B is information indirectly indicating the Z position of the reference surface 504B. The processing apparatus 1 may transmit this information related to the position (especially, the Z position) of the processing head 121 to the measurement system 3 as the plate position information indicating the measured result of the position of the base plate 50.

Incidentally, the processing apparatus 1 may measure the position of the reference surface 504B by using a method that is different from the method using the plurality of guide light irradiation apparatuses 124 and the imaging apparatus 14. For example, the processing apparatus 1 may measure the position of the reference surface 504B by using a time of flight method that measures a period from a time at which light is emitted to the reference surface 504B to a time at which the light returns from the reference surface 504B. For example, the processing apparatus 1 may measure the position of the reference surface 504B by using an optical interferometry method that detects interference light generated by an interference between light through the reference surface 504B and light not through the reference surface 504B. In this case, the light used in the optical interferometry method may be light generated by a light comb light source. For example, the processing apparatus 1 may measure the position of the reference surface 504B by using a non-contact measurement method by the above-described shape measurement head 311. For example, the processing apparatus 1 may measure the position of the reference surface 504B by using a contact measurement method using a probe that contacts the reference surface 504B.

Since the plurality of base plates 50B are attached to the holding tool 5, the processing apparatus 1 measures the positions of the plurality of base plates 50B in sequence. As a result, the processing apparatus 1 may transmit the plate position information indicating the measured results of the positions of the plurality of base plates 50 to the measurement system 3. Incidentally, the processing apparatus 1 may include a plurality of Z-position measurement apparatuses each of which includes the plurality of guide light irradiation apparatuses 124 and the imaging apparatus 14. In this case, the processing apparatus 1 may simultaneously measure the positions of the plurality of base plates 50B by using the plurality of Z-position measurement apparatuses, respectively.

Again in FIG. 13, then, the measurement system 3 (especially, the calibration unit 3211 of the processing path generation apparatus 32) generates the calibration information 3222 (a step S121). Specifically, the calibration unit 3211 acquires the processed portion position information, which has been acquired by the processed portion measurement apparatus 2 at the step S105, from the processed portion measurement apparatus 2. Furthermore, the calibration unit 3211 acquires the plate position information, which has been acquired by the processing apparatus 1 at the step S113, from the processing apparatus 1. Then, the calibration unit 3211 generates calibration information 3222 based on the processed portion position information and the plate position information.

In order to generate the calibration information 3222, the calibration unit 3211 may calculate, based on the processed portion position information, the position in the X-axis direction of the reference part 522 of the holding tool 5 in the processing coordinate system. In the below-described description, the position in the X-axis direction is referred to as an "X position. Furthermore, the calibration unit 3211 may calculate, based on the processed portion position information, the position in the Y-axis direction of the reference part 522 of the holding tool 5 in the processing coordinate system. In the below-described description, the position in the Y-axis direction is referred to as a "Y position.

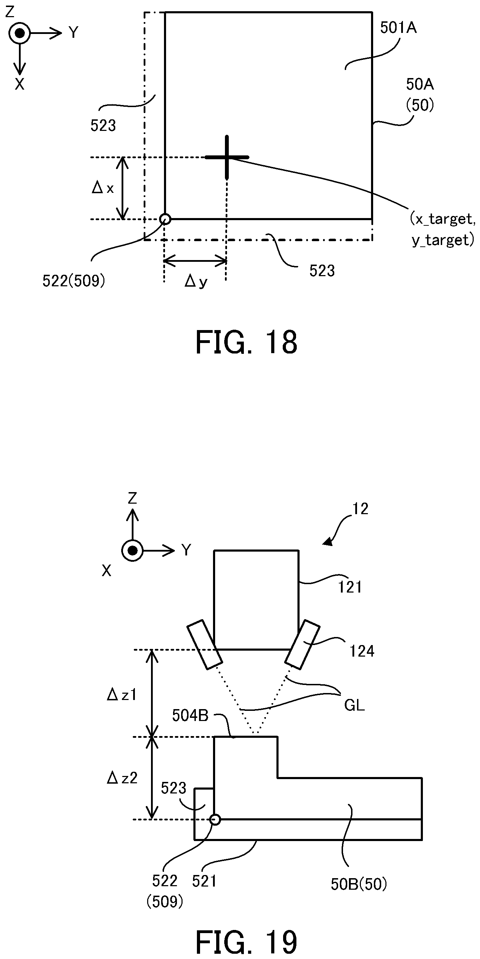

Specifically, as illustrated in FIG. 18, the calibration unit 3211 may calculate a positional relationship between the processed portion of the base plate 50A and the reference part 509 of the base plate 50A based on the processed portion position information. In a case where the processed portion measurement apparatus 2 measures the position of the reference part 509 of the base plate 50A, the calibration unit 3211 may calculate a positional relationship between the processed portion of the base plate 50A and the reference part 509 of the base plate 50A based on the processed portion position information. In a case where the processed portion measurement apparatus 2 measures the position of the sub-reference part 508, which has the known positional relationship with respect to the reference part 509 of the base plate 50A, the calibration unit 3211 may calculate the position of the reference part 509 of the base plate 50A, which has the known positional relationship with respect to the sub-reference part 508, based on the processed portion position information. Then, the positional relationship between the processed portion of base plate 50A and the reference part 509 of base plate 50A may be calculated. An operation for calculating the positional relationship between the processed portion of the base plate 50A and the reference part 509 of the base plate 50A may include an operation for calculating a distance Δx in the X-axis direction between the processed portion of the base plate 50A and the reference part 509 of the base plate 50A. The operation for calculating the positional relationship between the processed portion of the base plate 50A and the reference part 509 of the base plate 50A may include an operation for calculating a distance Δy in the Y-axis direction between the processed portion of the base plate 50A and the reference part 509 of the base plate 50A. Then, the calibration unit 3211 may calculate at least one of the X position and the Y position of the reference part 509 of the base plate 50A in the processing coordinate system. For example, since the processed portion of the base plate 50Ais formed at the predetermined target coordinates (x_target, y_target) in the processing coordinate system, the X position and the Y position of the processed portion in the processing coordinate system correspond to the target position x_target along the X-axis direction and the target position y target along the Y-axis direction, respectively. In this case, the calibration unit 3211 may calculate the X position of the reference part 509 of the base plate 50A in the processing coordinate system by adding (alternatively, subtracting in some case) the distance Δx, which is calculated based on the processed portion position information, to the X position x_target of the processed portion. The calibration unit 3211 may calculate the Y position of the reference part 509 of the base plate 50A in the processing coordinate system by adding (alternatively, subtracting in some case) the distance Δy, which is calculated based on the processed portion position information, to the Y position y target of the processed portion. Furthermore, since the reference part 509 of the base plate 50A contacts the reference part 522 of the holding tool 5 as described above, the X position and the Y position of the reference part 509 of the base plate 50A are equivalent to the X position and the Y position of the reference part 522 of the holding tool 5, respectively. As a result, the calibration unit 3211 acquires information related to the X position and the Y position of the reference part 509 of the base plate 50A as information related to the X position and the Y position of the reference part 522 of the holding tool 5.

Incidentally, at least part of the operation performed by the calibration unit 3211 may be performed by the processed portion measurement apparatus 2. For example, the processed portion measurement apparatus 2 may calculate the positional relationship between the processed portion of the base plate 50A and the reference part 509 of the base plate 50A. In this case, the calibration unit 3211 may calculate the X position and the Y position of the reference part 522 of the holding tool 5 based on the positional relationship calculated by the processed portion measurement apparatus 2.

Conversely, at least a part of the operation performed by the processed portion measurement apparatus 2 may be performed by the calibration unit 3211. For example, in a case where the processed portion is the cross-shaped processed portion described above (alternatively, includes the plurality of processed portions that intersect each other), the calibration unit 3211 may calculate the position of the intersecting point of the plurality of linear processed portions as the position of the processed portion based on the processed portion position information (for example, the image generated by imaging the processed portion). As one example, the calibration unit 3211 may calculates the positions of two points at which the virtual outer frame surrounding the processed portion and one linear processed portion intersect, and calculates the position of the line connecting the two points as the position of the one linear processed portion. Then, the calibration unit 3211 may calculate the position of the intersecting point of the plurality of linear processed portions as the position of the processed portion. Then, the calibration unit 3211 may calculate the X position and the Y position of the reference part 522 of the holding tool 5 based on the positions of the processed portion. Alternatively, for example, in a case where the processed portion is the cross-shaped processed portion described above (alternatively, includes the plurality of processed portions that intersect each other), the calibration unit 3211 may calculate the positions of at least two processed portions, which are designated by the user of the processing system SYS, of the plurality of processed portions. Then, the calibration unit 3211 may calculate the position of the intersecting point of the plurality of linear processed portions as the position of the processed portion. Alternatively, in a case where the processed portion is a processed portion having any shape, the calibration unit 3211 may calculate the position of a part of the processed portion, which is designated by the user of the processing system SYS, as the position of the processed portion.

The user may designate the processed portion (alternatively, a part thereof) by referring to the processed portion position information that is displayed on the output apparatus 325 (especially, the display apparatus that is one example thereof) of the processing path generation apparatus 32. For example, in a case where the processed portion measurement apparatus 2 generates the image in which the processed portion is captured by imaging the base plate 50A, the user may designate the processed portion (alternatively, a part thereof), which is measured by the processed portion measurement apparatus 2, by referring to the image in which the processed portion is captured. In this case, the user may designate the position of the processed portion in the image displayed on the output apparatus 325, then, the output apparatus 325 enlarges the image around the designated position to enlarge the processed portion, and the user may designate the processed portion (alternatively, a part thereof) by referring to the enlarged image.

Incidentally, if there is no placement error (an attachment error) when the holding tool 5 is placed at the reference placement position of the processing apparatus 1 at the step S102, the calculated X position and Y position of the reference part 522 in the processing coordinate system are the same as designed positions. In reality, there is a possibility that the calculated X position and Y position of the reference part 522 in the processing coordinate system deviate from the designed positions due to such error. The calibration unit 3211 may acquire information related to a difference between the X position and the Y position of the reference part 522 and the designed positions as information related to the X position and the Y position of the reference part 522 of the holding tool 5.

Since the plurality of base plates 50Aare attached to the holding tool 5 as described above, the holding tool 5 includes a plurality of reference parts 522 that correspond to the plurality of base plates 50A, respectively. In this case, the calibration unit 3211 may calculate the X position and Y position of each of the plurality of reference parts 522.

In order to generate the calibration information 3222, the calibration unit 3211 may further calculate a position in the Z-axis direction (namely, a Z position) of the reference part 522 of the holding tool 5 based on the plate position information. Specifically, as described above, the plate position information indicates the position (especially, the Z position) of the processing head 121 in the processing coordinate system in a state where the plurality of guide lights GL form the single beam spot on the reference surface 504B. Namely, the plate position information indicates the position (especially, the Z position) of the processing head 121 in the processing coordinate system in a state where the reference surface 504B is positioned at the intersecting position at which the plurality of guide lights GL intersect. Therefore, as illustrated in FIG. 19, the calibration unit 3211 may calculate a Z position of the reference surface 504B in the processing coordinate system by adding (alternatively, subtracting in some case) a distance Δz1 between the processing head 121 and the intersecting position in the Z-axis direction to the position of the processing head 121 indicated by the plate position information. In this case, information related to the distance Δz1 between the processing head 121 and the intersecting position in the Z-axis direction may be information known to the processing system SYS. Incidentally, the intersecting position at which the plurality of guide lights GL intersect may be used as the position of the processing head 121 in the processing coordinate system without using the information of the distance Δz1. Moreover, as illustrated in FIG. 19, the calibration unit 3211 may calculate a Z position of the reference part 522 in the processing coordinate system by adding (alternatively, subtracting in some case) a distance Δz2 between the reference surface 504B and the reference part 522 of the holding tool 5 in the Z-axis direction to the Z position of the reference surface 504B. In this case, information related to the distance Δz2 between the reference surface 504B and the reference part 522 in the Z-axis direction may be information known to the processing system SYS. Incidentally, the intersection position at which the plurality of guide lights GL intersect may be used as the position of the processing head 121 in the processing coordinate system without using the information related to the distance Δz1.

Since the plurality of base plates 50B are attached to the holding tool 5 as described above, the holding tool 5 includes a plurality of reference parts 522 that correspond to the plurality of base plates 50B, respectively. In this case, the calibration unit 3211 may calculate the Z position of each of the plurality of reference parts 522.

Then, the calibration unit 3211 may calculate the position of the holding tool 5 in the processing coordinate system based on the positions (namely, the X positions, the Y positions, and the Z positions) of the plurality of reference parts 522 in the processing coordinate system. For example, the calibration unit 3211 may calculate at least one of the X position, the Y position, and the Z position of the holding tool 5. For example, the calibration unit 3211 may calculate the position (a θX position) of the holding tool 5 in the θX direction that is a rotational direction around the X-axis. For example, the calibration unit 3211 may calculate the position (a θY position) of the holding tool 5 in the θY direction that is a rotational direction around the U-axis. For example, the calibration unit 3211 may calculate the position (a θZ position) of the holding tool 5 in the θZ direction that is a rotational direction around the Z-axis.

As one example, the calibration unit 3211 may calculate any one of the X position, the Y position, and the θZ position of the holding tool 5 based on the X position and Y position of one reference part 522. The calibration unit 3211 may calculate any two of the X position, the Y position, and the θZ position of the holding tool 5 based on the X positions and Y positions of two reference part 522. The calibration unit 3211 may calculate the X position, the Y position, and the θZ position of the holding tool 5 based on the X positions and Y positions of at least three reference part 522.

However, the calibration unit 3211 may not calculate the X position, the Y position, and the θZ position of the holding tool 5. In this case, the calibration unit 3211 may not calculate the X position and the Y position of the reference part 522. The processing apparatus 1 may not process the base plate 50A. The processed portion measurement apparatus 2 may not measure the processed portion of the base plate 50A. The processing system SYS may not include the processed portion measurement apparatus 2.

As another example, the calibration unit 3211 may calculate any one of the Z position, the θX position, and the θY position of the holding tool 5 based on the Z position of one reference part 522. The calibration unit 3211 may calculate any two of the Z position, the θX position, and the θY position of the holding tool 5 based on the Z positions of two reference parts 522. The calibration unit 3211 may calculate the Z position, the θX position, and the θY position of the holding tool 5 based on the Z positions of at least three reference parts 522.

However, the calibration unit 3211 may not calculate the Z position, the θX position, and the θY position of the holding tool 5. In this case, the calibration unit 3211 may not calculate the Z position of the reference part 522. The processing apparatus 1 may not measure the base plate 50B. The processing apparatus 1 may not include the plurality of guide light irradiation apparatuses 124 and the imaging apparatus 14.

Then, the calibration unit 3211 may store holding tool position information related to the calculated position of the holding tool 5 in the calibration information DB 3220 as at least a part of the calibration information 3222. In this case, the calibration unit 3211 may store the holding tool position information together with the combination information 3223 indicating the combination pattern of the processing apparatus 1 and the holding tool 5 in the calibration information DB 3220 as at least a part of the calibration information 3222.

The calibration unit 3211 may store reference position information indicating the position of each of the plurality of reference parts 522 in the calibration information DB 3220 as at least a part of the calibration information 3222. In this case, the calibration unit 3211 may store the reference position information together with the combination information 3223 indicating the combination pattern of the processing apparatus 1 and the holding tool 5 in the calibration information DB 3220 as at least a part of the calibration information 3222.

The calibration unit 3211 may store the processed portion position information, which has been acquired from the processed portion measurement apparatus 2, in the calibration information DB 3220 as at least a part of the calibration information 3222. In this case, the calibration unit 3211 may store the processed portion position information together with the combination information 3223 indicating the combination pattern of the processing apparatus 1 and the holding tool 5 in the calibration information DB 3220 as at least a part of the calibration information 3222.

The calibration unit 3211 may store the plate position information, which has been acquired from the processing apparatus, in the calibration information DB 3220 as at least a part of the calibration information 3222. In this case, the calibration unit 3211 may store the plate position information together with the combination information 3223 indicating the combination pattern of the processing apparatus 1 and the holding tool 5 in the calibration information DB 3220 as at least a part of the calibration information 3222.

The processing system SYS performs the above-described calibration operation for each combination pattern of the processing apparatus 1 and the holding tool 5. As a result, the calibration information 3222 is generated (namely, acquired) for each combination pattern of the processing apparatus 1 and the holding tool 5.

The processing system SYS performs the calibration operation before one processing apparatus 1 starts processing the workpiece W. Here, in a case where the calibration information DB 3220 does not store the calibration information 3222 corresponding to the combination pattern of one processing apparatus 1 processing the workpiece W and one holding tool 5 holding the workpiece W, the processing system SYS performs the calibration operation by using the one processing apparatus 1 and the one holding tool 5. On the other hand, in a case where the calibration information DB 3220 already stores the calibration information 3222 corresponding to the combination pattern of one processing apparatus 1 processing the workpiece W and one holding tool 5 holding the workpiece W, the processing system SYS may not newly perform the calibration operation by using the one processing apparatus 1 and the one holding tool 5. In this case, the measurement system 3 (especially, the processing path generation apparatus 32) may generate the processing path information, which is for controlling the one processing apparatus 1 that processes the workpiece W held by the one holding tool 5, by using the calibration information 3222 already stored in the calibration information DB 3220.

However, even in a case where the calibration information DB 3220 already stores the calibration information 3222 corresponding to the combination pattern of one processing apparatus 1 processing the workpiece W and one holding tool 5 holding the workpiece W, the processing system SYS may newly perform the calibration operation by using the one processing apparatus 1 and the one holding tool 5 to update the calibration information 3222. For example, when the processing apparatus 1 actually processes the workpiece W, the workpiece W is placed in the holding tool 5. The processing system SYS may perform the above-described calibration operation after the workpiece W is placed in the holding tool 5. Alternatively, the processing system SYS may perform the calibration operation again based on at least one of the number of times of usage and an elapsed time from the previous calibration operation, because there is a possibility that at least one of the stage 131 and the holding tool 5 deteriorates (for example, deforms or is wears).

### (2-3) Processing Path Generation Operation

Next, with reference to FIG. 20, the processing path generation operation will be described. FIG. 20 is a flowchart that illustrates a flow of the processing path generation operation.

As illustrated in FIG. 20, first, the base plate 50 is attached to the holding tool 5 (a step S201). At the step S201, the base plate 50B, which is attached to the holding tool 5 in the above-described calibration operation, is attached to the holding tool 5. However, the step S201 may be omitted in a case where the base plate 50B is already attached to the holding tool 5, such as a case after the above-described step S111. Incidentally, the base plate 50 that is different from the base plate 50B may be attached to the holding tool 5. In parallel to or before or after the operation at the step S201, the workpiece W, which should be actually processed by the processing apparatus 1, is placed in the holding tool 5 (a step S202). Namely, the workpiece W is held by the holding tool 5.

Then, the holding tool 5, to which the base plate 50B is attached and which holds the workpiece W, is placed on the stage 313 of the shape measurement apparatus 31 (a step S203). Therefore, the transport apparatus 4 transports the holding tool 5 to the measurement system 3. Then, the transported holding tool 5 is placed on the stage 313.

Incidentally, a surface treatment may be performed on the surface of the workpiece W held by the holding tool 5 before the holding tool 5 is placed on the stage 313. A polishing is one example of the surface treatment. For example, the surface of the workpiece W may be polished by sandblasting.

Then, the shape measurement apparatus 31 measures the three-dimensional shape of each of the holding tool 5 placed on the stage 313 and the workpiece W held by the holding tool 5 (a step S204). Especially, the shape measurement apparatus 31 may measure, as the three-dimensional shape of the holding tool 5, a three-dimensional shape of the base plate 50B attached to the holding tool 5. The shape measurement apparatus 31 transmits the measurement information, which indicates the measured result of the three-dimensional shape of each of the holding tool 5 and the workpiece W, to the processing path generation apparatus 32 (especially, the processing path generation unit 3212). The measurement information may include information indicating a three-dimensional position of each of a plurality of points of the surface of the holding tool 5 and a plurality of points of the surface of the workpiece W in the measurement coordinate system of the shape measurement apparatus 31. Point cloud data is one example of the measurement information.

When the three-dimensional shape of each of the holding tool 5 and the workpiece W is measured, the shape measurement apparatus 31 may move the shape measurement head 311 by using the head driving system 312. The shape measurement apparatus 31 may move the stage 313 by using the stage driving system 314. Namely, the shape measurement apparatus 31 may change a positional relationship between the shape measurement head 311 and each of the holding tool 5 and the workpiece W. For example, the shape measurement apparatus 31 may measure the three-dimensional shape of each of the holding tool 5 and the workpiece W in a state where the positional relationship between the shape measurement head 311 and each of the holding tool 5 and the workpiece W is a first positional relationship. Then, the shape measurement apparatus 31 may measure the three-dimensional shape of each of the holding tool 5 and the workpiece W in a state where the positional relationship between the shape measurement head 311 and each of the holding tool 5 and the workpiece W is a second positional relationship that is different from the first positional relationship. In this case, there is a higher possibility that the shape measurement head 311 can measure the three-dimensional shape of a certain part of the measurement target object that could not be measured before the shape measurement head 311 moves. Namely, the blind spot of the shape measurement head 311 is reduced or eliminated.

Here, as illustrated in above-described FIG. 4A and FIG. 4B, the heights of at least two of the plurality of connecting members 53 may be different as described above. In this case, there is a lower possibility that a certain particular part of the workpiece W is hidden by the connecting members 53 as viewed from the shape measurement head 311, compared to a case where the heights of all of the plurality of connecting members 53 are the same. For example, there is a lower possibility that the particular part of the workpiece W, which is positioned at the same height as the connecting member 53, is always hidden by the connecting member 53 as viewed from the shape measurement head 311. As a result, the blind spot of the shape measurement head 311 is reduced or eliminated.

In parallel with or before or after the operations from the step S201 to the step S204, the processing path generation unit 3212 of the processing path generation apparatus 32 acquires the calibration information 3222 corresponding to the combination pattern of the processing apparatus 1 and the holding tool 5 from the calibration information DB 3220 (a step S205). Namely, the processing path generation unit 3212 acquires the calibration information 3222 corresponding to the actual combination pattern of the processing apparatus 1 that is actually used to process the workpiece W and the holding tool 5 that actually holds the workpiece W.

Then, the processing path generation unit 3212 generates the processing path information based on the measurement information acquired at the step S204 and the calibration information 3222 acquired at the step S205 (a step S206 to a step S207).

Specifically, first, the processing path generation unit 3212 generates processing model data (a step S206). The processing model data indicates a three-dimensional model (processing model) having a three-dimensional shape of a processing part, which should be processed by the processing apparatus 1, in the processing coordinate system. In a case where the processing apparatus 1 performs the additive manufacturing, the processing part may include the build object that should be built on the workpiece W by the processing apparatus 1 performing the additive manufacturing. In a case where the processing apparatus 1 performs the subtractive manufacturing, the processing part may include a structural object that should be removed from the workpiece W by the processing apparatus 1 performing the subtractive manufacturing.

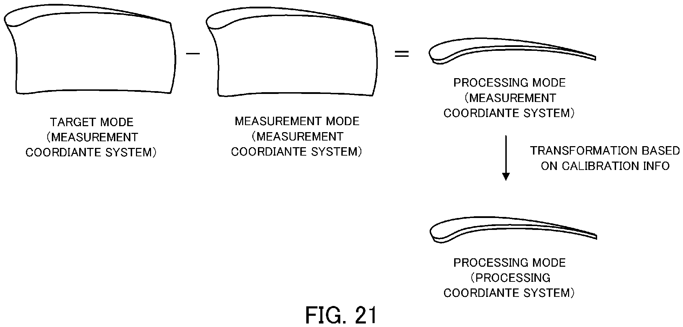

In order to generate the processing model data, as illustrated in FIG. 21, the processing path generation unit 3212 acquires target model data that indicates a three-dimensional model (a target model) having a target three-dimensional shape of the processed workpiece W in the measurement coordinate system. The target model data may be stored in the storage apparatus 322 in advance, for example.

Furthermore, as illustrated in FIG. 21, the processing path generation unit 3212 generates, based on the measurement information, measurement model data that indicates a three-dimensional model (a measurement model) having a current three-dimensional shape (namely, an actual three-dimensional shape) of the workpiece W in the measurement coordinate system. In other words, the processing path generation unit 3212 acquires workpiece shape information that is included in the measurement information and that is related to the current three-dimensional shape (namely, the actual three-dimensional shape) of the workpiece W, and generates the measurement model data indicating the measurement model from the acquired workpiece shape information. Alternatively, the workpiece shape information itself may be used as the measurement model data.

Here, in a case where at least one of the shape measurement head 311 and the stage 313 moves in order to measure the three-dimensional shape of each of the holding tool 5 and the workpiece W as described above, the processing path generation unit 3212 may generate single measurement model data by merging the measurement information (before movement) indicating the three-dimensional shape of each of the holding tool 5 and the workpiece W before the shape measurement head 311 and the stage 313 move and the measurement information (after movement) indicating the three-dimensional shape of each of the holding tool 5 and the workpiece W after the shape measurement head 311 and the stage 313 move. Namely, the processing path generation unit 3212 may perform a stitching (in other words, a combining) of the measurement information. In this case, the processing path generation unit 3212 may generate the measurement model data by using the single measurement information acquired by merging the measurement information (before movement) and the measurement information (after movement).

Specifically, the processing path generation unit 3212 may merge the measurement information (before movement) and the measurement information (after movement) so that a certain part of the holding tool 5 indicated by the measurement information (before movement) is positioned at a position that is the same as a position of the same part of the holding tool 5 indicated by the measurement information (after movement). The processing path generation unit 3212 may merge the measurement information (before movement) and the measurement information (after movement) so that a certain part of the workpiece W indicated by the measurement information (before movement) is positioned at a position that is the same as a position of the same part of the workpiece W indicated by the measurement information (after movement).

The processing path generation unit 3212 may integrate the measurement information (before movement) and the measurement information (after movement) based on the positions of the plurality of base plates 50B indicated by the measurement information. For example, the processing path generation unit 3212 may merge the measurement information (before movement) and the measurement information (after movement) so that the position of the reference part 509 of one base plate 50B indicated by the measurement information (before movement) is the same as the position of the reference part 509 of the same base plate 50B indicated by the measurement information (after movement). Here, in a case where the plurality of base plates 50B surround the workpiece W as described above, an accuracy of merging the measurement information (before movement) and the measurement information (after movement) improves.

Then, as illustrated in FIG. 21, the processing path generation unit 3212 calculates, as the processing model, a three-dimensional model (a difference model) that corresponds to a difference between the target model indicated by the target model data and the measurement model indicated by the measurement model data. Namely, the processing path generation unit 3212 generates, as the processing model data indicating the processing model, difference model data indicating the difference model corresponding to the difference between the target model and the measurement model.

However, the measurement model data indicates the actual three-dimensional shape of the workpiece W in the measurement coordinate system, and the target model data indicates the target three-dimensional shape of the workpiece W in the measurement coordinate system. Therefore, as illustrated in FIG. 21, if the measurement model data and the target model data are used as they are, the processing path generation unit 3212 merely generates the processing model data that indicates the processing model (the difference model) in the measurement coordinate system. Therefore, the processing path generation unit 3212 uses not only the measurement model data and target model data but also the measurement information and the calibration information 3222 to generate the processing model data that indicates the processing model (the difference model) in the processing coordinate system.

As a first method, as illustrated in FIG. 21, the processing path generation unit 3212 may generate the processing model data that indicates the processing model in the processing coordinate system by transforming the processing model data indicating the processing model in the measurement coordinate system calculated in the above-described procedure described above to the processing model data indicating the processing model in the processing coordinate system based on the measurement information and the calibration information 3222.

Specifically, the above-described measurement information includes the information related to the three-dimensional shapes of the plurality of base plates 50B attached to the holding tool 5. In this case, the processing path generation unit 3212 may calculate the position of each of the plurality of base plates 50B in the measurement coordinate system based on the measurement information (especially, the information related to the three-dimensional shapes of the plurality of base plates 50B). Especially, the processing path generation unit 3212 may calculate the position of the reference part 509 of each of the plurality of base plates 50B in the measurement coordinate system based on the measurement information. Specifically, as described above with reference to FIG. 16A, the processing path generation unit 3212 may determine the reference part 509 of the base plate 50B based on the shape of the second plate part 502B (especially, the shape of the reference surface 504B). For example, the processing path generation unit 3212 may determine the shape of the second plate part 502B (especially, the shape of the reference surface 504B) based on the measurement information, and determine the reference part 509 of the base plate 50B based on the determined shape of the second plate part 502B (especially, the shape of the reference surface 504B). Then, the processing path generation unit 3212 may calculate the position of the determined reference part 509 of the base plate 50B in the measurement coordinate system based on the measurement information.

As one example, the processing path generation unit 3212 may calculate positions of at least three side surfaces of the second plate part 502B based on the measurement information. Feature points of the at least three side surfaces of the second plate part 502B may be determined in advance, and the processing path generation unit 3212 may calculate the positions of the at least three side surfaces of the second plate part 502B by performing a fitting processing for adjusting a position of the feature point with respect to the measurement information (for example, the point cloud data of the base plate 50B). Then, the position of the reference part 509 of the base plate 50B (for example, the position of the vertex) may be determined based on the positions of the at least three side surfaces of the second plate part 502B. For example, the processing path generation unit 3212 may calculate a position of the notch of the second plate part 502B based on the positions of the at least three side surfaces of the second plate part 502B, and calculate the position of the reference part 509 based on the position of the notch. For example, the processing path generation unit 3212 may calculate, as the position of the reference part 509, a position at which the at least three side surfaces of the second plate part 502B intersect.

As another example, the user may designate the reference part 509 of the base plate 50B by referring to the measurement information displayed on the output apparatus 325 (especially, the display apparatus) of the processing path generation apparatus 32. For example, the output apparatus 325 may display the point cloud data (alternatively, an display object indicating a three-dimensional shape) that is one example of the measurement information, and the user may designate the reference part 509 on the point cloud data or any display object. In this case, the processing path generation unit 3212 may calculate the position of the reference part 509 designated by the user.

As another example, the processing path generation unit 3212 may calculate the position of the reference part 509 of the base plate 50B by automatically recognizing the reference part 509 of the base plate 50B. For example, the processing path generation unit 3212 may automatically recognize the reference part 509 of the base plate 50B by recognizing the shape of the base plate 50B based on template information indicating the shape of the base plate 50B. Then, the processing path generation unit 3212 may calculate the position of the reference part 509 of the base plate 50B.

As another example, the shape measurement apparatus 31 may automatically measure the position of the reference part 509 of the base plate 50B by automatically recognizing the reference part 509 of the base plate 50B. For example, the shape measurement apparatus 31 may automatically recognize the reference part 509 of the base plate 50B by recognizing the shape of the base plate 50B based on the template information indicating the shape of the base plate 50B. Then, the shape measurement apparatus 31 may measure the reference part 509 of the base plate 50B.

Incidentally, the positions of the plurality of reference parts 509 that are included in the plurality of base plates 50B, respectively, are equivalent to the positions of the plurality of reference parts 522 of the holding tool 5 as described above. Therefore, the processing path generation unit 3212 may be considered to calculate the positions of the plurality of reference parts 522. Namely, the measurement information may be considered to include information related to the positions of the plurality of reference parts 522 and the processing path generation unit 3212 may be considered to calculate the positions of the plurality of reference parts 522 based on the measurement information.

Then, the processing path generation unit 3212 may calculate the position of the holding tool 5 in the measurement coordinate system based on the positions of the plurality of reference parts 522 in the measurement coordinate system, if necessary. For example, the processing path generation unit 3212 may calculate at least one of the X position, the Y position, the Z position, the θX position, the θY direction, and the θZ position of the holding tool 5 in the measurement coordinate system.

On the other hand, the calibration information 3222 indicates the position of the holding tool 5 in the processing coordinate system. Therefore, the processing path generation unit 3212 may generate a transformation matrix (for example, a rigid body transformation matrix) for transforming a position in either one of the processing coordinate system and the measurement coordinate system to a position in the other one of the processing coordinate system and the measurement coordinate system, based on the position of the holding tool 5 in the processing coordinate system indicated by the calibration information 3222 and the position of the holding tool 5 in the measurement coordinate system calculated from the measurement information. Alternatively, the calibration information 3222 indicates the positions of the plurality of reference parts 522 in the processing coordinate system in addition to or instead of the position of the holding tool 5 in the processing coordinate system. Therefore, the processing path generation unit 3212 may generate the transformation matrix (for example, the rigid body transformation matrix) for transforming the position in either one of the processing coordinate system and the measurement coordinate system to the position in the other one of the processing coordinate system and the measurement coordinate system, based on the positions of the plurality of reference parts 522 in the processing coordinate system indicated by the calibration information 3222 and the positions of the plurality of reference parts 522 in the measurement coordinate system calculated from the measurement information.

As a result, the processing path generation unit 3212 may transform the processing model data indicating the processing model in the measurement coordinate system to the processing model data indicating the processing model in the processing coordinate system by using the generated transformation matrix. As a result, the processing path generation unit 3212 can generate the processing model data indicating the processing model in the processing coordinate system.

Here, in a case where the plurality of base plates 50B surround the workpiece W (namely, the plurality of reference parts 522 of the holding tool 5 surround the workpiece W) as described above, an error of a coordinate transformation by the transformation matrix is smaller, compared to a case where the plurality of base plates 50B do not surround the workpiece W. Therefore, in a case where the plurality of base plates 50B surround the workpiece W, the processing path generation unit 3212 can generate the processing model data that indicates the processing model in the processing coordinate system more accurately.

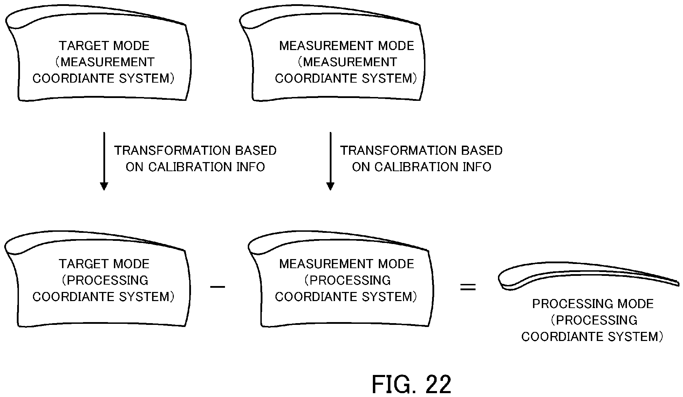

As a second method, the processing path generation unit 3212 may transform the measurement model data and the target model data by using the transformation matrix before generating the processing model data indicating the processing model in the measurement coordinate system, as illustrated in FIG. 22. Specifically, the processing path generation unit 3212 may transform the measurement model data indicating the actual three-dimensional shape of the workpiece W in the measurement coordinate system to the measurement model data indicating the actual three-dimensional shape of the workpiece W in the processing coordinate system based on the transformation matrix. Furthermore, the processing path generation unit 3212 may transform the measurement model data indicating the target three-dimensional shape of the workpiece W in the measurement coordinate system to the measurement model data indicating the target three-dimensional shape of the workpiece W in the processing coordinate system based on the transformation matrix. Then the processing path generation unit 3212 generates the difference model data indicating the difference model corresponding to the difference between the target model indicated by the transformed target model data and the measurement model indicated by the transformed measurement model data as the processing model data indicating the processing model in the processing coordinate system.

Incidentally, both of the above-described two methods may be considered to be equivalent to an operation for determining the positional relationship between the workpiece W and the base plate 50B in the measurement coordinate system based on the measurement information and generating the processing model data based on the determined positional relationship and the calibration information 3222. This is because both of the measurement information and the calibration information 3222 include the information related to the position of the base plate 50B, and therefore, the processing path generation unit 3212 may be considered to generate the transformation matrix based on the information related to the position of the base plate 50B that is included in both of the measurement information and the calibration information 3222 and transform the position of the workpiece W in the measurement coordinate system to the position of the workpiece W in the processing coordinate system based on the generated transformation matrix.

Again in FIG. 20, then, the processing path generation unit 3212 generates the processing path information based on the processing model data generated at the step S206 (a step S207). Specifically, the processing path generation unit 3212 generates the processing path information indicating the position that should be irradiated with the processing light EL to process the processing part having the three-dimensional shape indicated by the processing model data generated at the step S206. Incidentally, an operation for generating the processing path information from the three-dimensional model that is processing target itself may be the same as an existing operation. Therefore, the detail of the operation for generating the processing path information based on the processing model data is omitted.

Then, the processing path generation unit 3212 transmits (in other words, inputs) the processing path information generated at the step S207 to the processing apparatus 1 (especially, the control apparatus 17) (step S208). As a result, the processing path generation operation is completed.

Then, the processing apparatus 1 processes the workpiece W based on the processing path information transmitted from the processing path generation unit 3212. Specifically, first, the holding tool 5 holding the workpiece W is taken out of the shape measurement apparatus 31. Then, the holding tool 5 holding the workpiece W is transported from the shape measurement apparatus 31 to the processing apparatus 1. For example, the holding tool 5 holding the workpiece W may be transported from the shape measurement apparatus 31 to the processing apparatus 1 by the transport apparatus 4. Then, the holding tool 5 holding the workpiece W is placed on the stage 131 of the processing apparatus 1. Namely, the holding tool 5 is placed at the reference placement position of the stage 131. Then, the processing apparatus 1 starts processing the workpiece W based on the processing path information.

Incidentally, as described above, the processing path information is generated before the processing apparatus 1 processes the workpiece W. In this case, the processing path generation unit 3212 may generate the processing path information before the holding tool 5 taken out of the shape measurement apparatus 31 is placed in the processing apparatus 1. The processing path generation unit 3212 may generate the processing path information after the holding tool 5 taken out of the shape measurement apparatus 31 is placed in the processing apparatus 1.

### (2-4) Specific Example of Processing Path Generation Operation

Next, a specific example of the processing path generation operation will be described. In the below-described description, a second processing path generation operation for performing a second processing operation, which is performed after performing a first processing path generation operation for performing the first processing operation, will be described. The first processing operation is a processing operation that is performed by a first processing apparatus 1#1 to process a first workpiece W#1 held by a first holding tool 5#1. In this case, in the first processing path generating operation, the processing path generation unit 3212 generates first processing data indicating the processing model in a first processing coordinate system of the first processing apparatus 1#1 based on first calibration information 3222#1 corresponding to a combination pattern of the first processing apparatus 1#1 and the first holding tool 5#1 and first measurement information indicating the three-dimensional shape of each of the first holding tool 5#1 and the first workpiece W#1, and generate the processing path based on the first processing data. Incidentally, although a plurality of first workpieces W#1 may be held by the first holding tool 5#1, a single first workpiece W#1 is held by the first holding tool 5#1 in this example.

### (2-4-1) First Specific Example of Processing Path Generation Operation

First, a first specific example of the processing path generation operation will be described. In the first specific example, the second processing operation is an operation that is performed by the first processing apparatus 1#1 to process a second workpiece W#2, which is different from the first workpiece W#1, held by the first holding tool 5#1. In this case, the processing system SYS performs the below-described processing path generation operation as the second processing path generation operation.

Specifically, first, after the first processing operation is completed, the first holding tool 5#1 is taken out of the first processing apparatus 1#1. Then, the first workpiece W#1 is detached from the first holding tool 5#1. Then, the second workpiece W#2 is held by the first holding tool 5#1 (the step S202 in FIG. 20). Then, the first holding tool 5#1 holding the second workpiece W#2 is transported by the transport apparatus 4 (alternatively, by other means) from the first processing apparatus 1#1 to the measurement system 3. Then, the first holding tool 5#1 holding the second workpiece W#2 is placed on the stage 313 of the shape measurement apparatus 31 (the step S203 in FIG. 20). Incidentally, the measurement system 3 that is used to perform the second processing path generation operation may be the same as or different from the measurement system 3 that is used to perform the first processing path generation operation. The same may be applied to each of a second specific example to a fifth example of the processing path generation operation described below. Then, the shape measurement apparatus 31 measures the three-dimensional shape of each of the first holding tool 5#1 and the second workpiece W#2 (the step S204 in FIG. 20). Furthermore, the processing path generation unit 3212 acquires, from the calibration information DB 3220, the first calibration information 3222#1 corresponding to the combination pattern of the first processing apparatus 1#1 and the first holding tool 5#1 (the step S205 in FIG. 20). Namely, in the first specific example, the processing path generation unit 3212 performs the processing path generation operation for performing the second processing operation by diverting the first calibration information 3222#1 used in the processing path generation operation for the performing first processing operation.

In a case where the first calibration information 3222#1 can be diverted, the processing system SYS may not perform the above-described calibration operation again to generate second processing path information for processing the second workpiece W#2. In other words, in a case where the first workpiece W#1 is processed by placing the first holding tool 5#1 in the first processing apparatus 1#1, the processing system SYS may not perform the calibration operation for generating the first calibration information 3222#1 corresponding to the combination pattern of the first holding tool 5#1 and the first processing apparatus 1#1 each time the processing is performed. Therefore, even in a case where the workpiece W held by the first holding tool 5#1 is replaced, the processing system SYS can use the first calibration information 3222#1 in common. In this case, the processing system SYS can process the second workpiece W#2 appropriately, and a throughput of the processing system SYS as a whole required for processing the second workpiece W#2 improves. Incidentally, the calibration information 3222 corresponding to the combination pattern of the first holding tool 5#1 and the first processing apparatus 1#1 may be generated again when the second workpiece W#2 is processed. Namely, the first calibration information 3222#1 may be updated.

Then, the processing path generation unit 3212 generates second processing data indicating the processing model in the first processing coordinate system of the first processing apparatus 1#1 based on second measurement information indicating the three-dimensional shape of each of the first holding tool 5#1 and the second workpiece W#2 and the first calibration information 3222#1 (the step S206 in FIG. 20). Then, the processing path generation unit 3212 generates the processing path information for the second processing operation based on the second processing data (the step S207 in FIG. 20). Namely, the processing path generation unit 3212 generates the second processing path information for controlling the first processing apparatus 1#1 to process the second workpiece W#2 held by the first holding tool 5#1 in the first processing coordinate system.

### (2-4-2) Second Specific Example of Processing Path Generation Operation

Next, a second specific example of the processing path generation operation will be described. In the second specific example, the second processing operation is an operation that is performed by the first processing apparatus 1#1 to process a third workpiece W#3, which is different from the first workpiece W#1, held by a second holding tool 5#2, which is different from the first holding tool 5#1. In this case, the processing system SYS performs the below-described processing path generation operation as the second processing path generation operation. Incidentally, although a plurality of third workpieces W#3 may be held by the second holding tool 5#2, a single third workpiece W#3 is held by the second holding tool 5#2 in this example.

Specifically, first, after the first processing operation is completed, the first holding tool 5#1 is taken out of the first processing apparatus 1#1. Furthermore, the third workpiece W#3 is held by the second holding tool 5#2 (the step S202 in FIG. 20). Then, the second holding tool 5#2 holding the third workpiece W#3 is transported by the transport apparatus 4 (alternatively, by other means) to the measurement system 3. Then, the second holding tool 5#2 holding the third workpiece W#3 is placed on the stage 313 of the shape measurement apparatus 31 (the step S203 in FIG. 20). Then, the shape measurement apparatus 31 measures the three-dimensional shape of each of the second holding tool 5#2 and the third workpiece W#3 (the step S204 in FIG. 20). Furthermore, the processing path generation unit 3212 acquires, from the calibration information DB 3220, second calibration information 3222#2 corresponding to the combination pattern of the first processing apparatus 1#1 and the second holding tool 5#2 (the step S205 in FIG. 20). Incidentally, in a case where the second calibration information 3222#2 corresponding to the combination pattern of the first processing apparatus 1#1 and the second holding tool 5#2 is not stored in the calibration information DB 3220, the processing system SYS may perform the calibration operation by using the first processing apparatus 1#1 and the second holding tool 5#2 to generate the second calibration information 3222#2. Then, the processing path generation unit 3212 generates third processing data indicating the processing model in the first processing coordinate system of the first processing apparatus 1#1 based on third measurement information indicating the three-dimensional shape of each of the second holding tool 5#2 and the third workpiece W#3 and the second calibration information 3222#2 (the step S206 in FIG. 20). Then, the processing path generation unit 3212 generates the processing path information for the second processing operation based on the third processing data (the step S207 in FIG. 20). Namely, the processing path generation unit 3212 generates third processing path information for controlling the first processing apparatus 1#1 to process the third workpiece W#3 held by the second holding tool 5#2 in the first processing coordinate system.

### (2-4-3) Third Specific Example of Processing Path Generation Operation

Next, a third specific example of the processing path generation operation will be described. In the third specific example, the second processing operation is an operation that is performed by a second processing apparatus 1#2, which is different from the first processing apparatus 1#1, to process a fourth workpiece W#3, which is different from the first workpiece W#1, held by the first holding tool 5#1. In this case, the processing system SYS performs the below-described processing path generation operation as the second processing path generation operation. Incidentally, although a plurality of fourth workpieces W#4 may be held by the first holding tool 5#1, a single fourth workpiece W#4 is held by the second holding tool 5#1 in this example.

Specifically, first, after the first processing operation is completed, the first holding tool 5#1 is taken out of the first processing apparatus 1#1. Then, the first workpiece W#1 is detached from the first holding tool 5#1. Then, the fourth workpiece W#4 is held by the first holding tool 5#1 (the step S202 in FIG. 20). Then, the first holding tool 5#1 holding the fourth workpiece W#4 is transported by the transport apparatus 4 (alternatively, by other means) from the first processing apparatus 1#1 to the measurement system 3. Then, the first holding tool 5#1 holding the fourth workpiece W#4 is placed on the stage 313 of the shape measurement apparatus 31 (the step S203 in FIG. 20). Then, the shape measurement apparatus 31 measures the three-dimensional shape of each of the first holding tool 5#1 and the fourth workpiece W#4 (the step S204 in FIG. 20). Furthermore, the processing path generation unit 3212 acquires, from the calibration information DB 3220, third calibration information 3222#3 corresponding to the combination pattern of the second processing apparatus 1#2 and the first holding tool 5#1 (the step S205 in FIG. 20). Incidentally, in a case where the first calibration information 3222#3 corresponding to the combination pattern of the second processing apparatus 1#2 and the first holding tool 5#1 is not stored in the calibration information DB 3220, the processing system SYS may perform the calibration operation by using the second processing apparatus 1#2 and the first holding tool 5#1 to generate the third calibration information 3222#3. Then, the processing path generation unit 3212 generates fourth processing data indicating the processing model in a second processing coordinate system of the second processing apparatus 1#2 based on fourth measurement information indicating the three-dimensional shape of each of the first holding tool 5#1 and the fourth workpiece W#4 and the third calibration information 3222#2 (the step S206 in FIG. 20). Then, the processing path generation unit 3212 generates the processing path information for the second processing operation based on the fourth processing data (the step S207 in FIG. 20). Namely, the processing path generation unit 3212 generates fourth processing path information for controlling the second processing apparatus 1#2 to process the fourth workpiece W#4 held by the first holding tool 5#1 in the second processing coordinate system.

In the third specific example, the first processing apparatus 1#1 may be either one of the additive manufacturing apparatus and the subtractive manufacturing apparatus. On the other hand, the second processing apparatus 1#2 may be the other one of the additive manufacturing apparatus and the subtractive manufacturing apparatus. In this case, the processing system SYS can perform both of the additive manufacturing and the subtractive manufacturing.

### (2-4-4) Fourth Specific Example of Processing Path Generation Operation

Next, a fourth specific example of the processing path generation operation will be described. In the fourth specific example, the second processing operation is an operation that is performed by a third processing apparatus 1#3, which is different from the first processing apparatus 1#1, to process the first workpiece W#1 held by the first holding tool 5#1 (namely, the first workpiece W#1 that has been processed by the first processing apparatus 1#1). In this case, the processing system SYS performs the below-described processing path generation operation as the second processing path generation operation.

Specifically, first, after the first processing operation is completed, the first holding tool 5#1 is taken out of the first processing apparatus 1#1. In this case, the first holding tool 5#1 keeps holding the first workpiece W#1. Then, the first holding tool 5#1 that is taken out of the first processing apparatus 1#1 and that keeps holding the first workpiece W#1 is transported by the transport apparatus 4 (alternatively, by other means) from the first processing apparatus 1#1 to the measurement system 3. Then, the first holding tool 5#1 holding the first workpiece W#1 is placed on the stage 313 of the shape measurement apparatus 31 (the step S203 in FIG. 20). Then, the shape measurement apparatus 31 measures the three-dimensional shape of each of the first holding tool 5#1 and the first workpiece W#1 (the step S204 in FIG. 20). Namely, in the fourth specific example, after the first processing apparatus 1#1 starts processing the first workpiece W#1, the shape measurement apparatus 31 acquires the measurement information indicating the three-dimensional shape of each of the first holding tool 5#1 and the first workpiece W# 1. Furthermore, the processing path generation unit 3212 acquires, from the calibration information DB 3220, fourth calibration information 3222#4 corresponding to the combination pattern of the third processing apparatus 1#3 and the first holding tool 5#1 (the step S205 in FIG. 20). Incidentally, in a case where the fourth calibration information 3222#4 corresponding to the combination pattern of the third processing apparatus 1#3 and the first holding tool 5#1 is not stored in the calibration information DB 3220, the processing system SYS may perform the calibration operation by using the third processing apparatus 1#3 and the first holding tool 5#1 to generate the fourth calibration information 3222#4. Then, the processing path generation unit 3212 generates fifth processing data indicating the processing model in a third processing coordinate system of the third processing apparatus 1#3 based on fifth measurement information indicating the three-dimensional shape of each of the first holding tool 5#1 and the first workpiece W#1 and the fourth calibration information 3222#4 (the step S206 in FIG. 20). Then, the processing path generation unit 3212 generates the processing path information for the second processing operation based on the fifth processing data (the step S207 in FIG. 20). Namely, the processing path generation unit 3212 generates fifth processing path information for controlling the third processing apparatus 1#3 to process the first workpiece W#1 held by the first holding tool 5#1 in the third processing coordinate system.

In the fourth specific example, the first processing apparatus 1#1 may be either one of the additive manufacturing apparatus and the subtractive manufacturing apparatus. On the other hand, the third processing apparatus 1#3 may be the other one of the additive manufacturing apparatus and the subtractive manufacturing apparatus. In this case, the processing system SYS can perform both of the additive manufacturing and the subtractive manufacturing.

The third processing apparatus 1#3 may perform a finish processing of the first workpiece W#1 that has been processed by the first processing apparatus 1#1. For example, the first processing apparatus 1#1 may be the additive manufacturing apparatus, and the third processing apparatus 1#3 may be the subtractive manufacturing apparatus. In this case, the third processing apparatus 1#3 may perform the finish processing for removing a part of the first workpiece W#1 that has been added by the first processing apparatus 1#1 (namely, the build object that has been build) so that a shape of the first workpiece W#1 that has been added by the first processing apparatus 1#1 (namely, the build object that has been build) is a desired shape. The third processing apparatus 1#3 may perform the finish processing for processing a surface of the first workpiece W#1 that has been added by the first processing apparatus 1#1 (namely, the build object that has been build) so that the surface of the first workpiece W#1 that has been added by the first processing apparatus 1#1 (namely, the build object that has been build) is smoothed. Alternatively, for example, the first processing apparatus 1#1 may be the subtractive manufacturing apparatus and the third processing apparatus 1#3 may be the additive manufacturing apparatus. In this case, the third processing apparatus 1#3 may perform the finish processing for adding the build object to the first workpiece W#1 on which the subtractive manufacturing has been performed by the first processing apparatus 1#1 so that the shape of the first workpiece W#1 on which the subtractive manufacturing has been performed by the first processing apparatus 1#1 is a desired shape. The third processing apparatus 1#3 may perform the finish processing for processing the surface of the first workpiece W#1 on which the subtractive manufacturing has been performed by the first processing apparatus 1#1 so that the surface of the first workpiece W#1 on which the subtractive manufacturing has been performed by the first processing apparatus 1#1is smoothed.

Incidentally, in a case where the third processing apparatus 1#3 performs the finish processing of the first workpiece W#1, the second processing path generation operation may be considered to be equivalent to an operation for generating the processing path information that allows the third processing apparatus 1#3 to perform the finish processing so that a difference between an actual shape of the first workpiece W#1 that has been processed by the first processing operation (namely, the measurement information) and the target shape of the first workpiece W#1 after the processing is smaller.

### (2-4-5) Fifth Specific Example of Processing Path Generation Operation

Next, a fifth specific example of the processing path generation operation will be described. In the fifth specific example, the second processing operation is an operation that is performed by the first processing apparatus 1#1 to process the first workpiece W#1 held by the first holding tool 5#1, as with the first processing operation. However, the second processing operation may be different from the first processing operation in that it is an operation performed by the first processing apparatus 1#1 to process the first workpiece W#1 that has been already processed by the first processing operation of the first processing apparatus 1#1. In this case, the processing system SYS performs the below-described processing path generation operation as the second processing path generation operation.

Specifically, first, after the first processing operation is completed, the first holding tool 5#1 is taken out of the first processing apparatus 1#1. In this case, the first holding tool 5#1 keeps holding the first workpiece W#1. Then, the first holding tool 5#1 that is taken out of the first processing apparatus 1#1 and that keeps holding the first workpiece W#1 is transported by the transport apparatus 4 (alternatively, by other means) from the first processing apparatus 1#1 to the measurement system 3. Then, the first holding tool 5#1 holding the first workpiece W#1 is placed on the stage 313 of the shape measurement apparatus 31 (the step S203 in FIG. 20). Then, the shape measurement apparatus 31 measures the three-dimensional shape of each of the first holding tool 5#1 and the first workpiece W#1 (the step S204 in FIG. 20). Namely, in the fifth specific example, after the first processing apparatus 1#1 starts processing the first workpiece W#1, the shape measurement apparatus 31 acquires the measurement information indicating the three-dimensional shape of each of the first holding tool 5#1 and the first workpiece W#1. Furthermore, the processing path generation unit 3212 acquires, from the calibration information DB 3220, the first calibration information 3222#1 corresponding to the combination pattern of the first processing apparatus 1#1 and the first holding tool 5#1 (the step S205 in FIG. 20). Namely, in the fifth specific example, the processing path generation unit 3212 performs the processing path generation operation for performing the second processing operation by diverting the first calibration information 3222#1 used in the processing path generation operation for the performing first processing operation. Then, the processing path generation unit 3212 generates sixth processing data indicating the processing model in the first processing coordinate system of the first processing apparatus 1#1 based on sixth measurement information indicating the three-dimensional shape of each of the first holding tool 5#1 and the first workpiece W#1 and the first calibration information 3222#1 (the step S206 in FIG. 20). Then, the processing path generation unit 3212 generates the processing path information for the second processing operation based on the sixth processing data (the step S207 in FIG. 20). Namely, the processing path generation unit 3212 generates sixth processing path information for controlling the first processing apparatus 1#1 to process the first workpiece W#1 held by the first holding tool 5#1 in the first processing coordinate system.

In the fifth specific, the second processing operation may include the finish processing of the workpiece W that has been processed by the first processing operation, as with the fourth specific example. For example, the first processing apparatus 1#1 may perform, as the second processing operation, the finish processing so that the shape of the first workpiece W#1 that has been processed by the first processing operation is a desired shape. For example, the first processing apparatus 1#1 may perform, as the second processing operation, the finish processing so that the surface of the first workpiece W#1 that has been processed by the first processing operation is smoothed.

Incidentally, in a case where the second processing operation is the processing operation for performing the finish processing on the workpiece W#1 that has been processed by the first processing operation, the second processing path generation operation may be considered to be equivalent to an operation for generating the processing path information that allows the first processing apparatus 1#1 to perform the finish processing so that the difference between the actual shape of the first workpiece W#1 that has been processed by the first processing operation (namely, the measurement information) and the target shape of the first workpiece W#1 after the processing is smaller.

Moreover, the processing apparatus 1 may temporarily suspend the first processing operation in the middle of the first processing operation. For example, in a case where the first processing operation is a processing operation for performing the additive manufacturing on a single workpiece W, the processing apparatus 1 may temporarily suspend the first processing operation at a timing at which a part of the three-dimensional structural object ST, which should be built on the workpiece W, has been built. For example, in a case where the first processing operation is a processing operation for performing the additive manufacturing on a plurality of workpieces W in sequence, the processing apparatus 1 may temporarily suspend the first processing operation after at least a part of the three-dimensional structural object ST that should be built on one workpiece W has been built and before the three-dimensional structural object ST is built on another workpiece W that is different from the one workpiece W. For example, the processing apparatus 1 may temporarily suspend the first processing operation after completing the additive manufacturing for building at least one structural layer SL on one workpiece W and before starting the additive manufacturing for building at least one structural layer SL on another workpiece W that is different from the one workpiece W. In this case, the shape measurement apparatus 31 may measure the three-dimensional shape of the uncompleted workpiece W. The shape measurement apparatus 31 may measure the three-dimensional shape of each of the uncompleted workpiece W and the holding tool 5 that holds this workpiece W. Then, the processing path generation apparatus 32 may generate new processing path information based on the measurement information indicating the measured result of the three-dimensional shape of the uncompleted workpiece W (furthermore, indicating the three-dimensional shape of the holding tool 5 in some cases). Alternatively, the processing path generation apparatus 32 may correct the processing path information, which has been already generated, based on the measurement information indicating the measured result of the three-dimensional shape of the uncompleted workpiece W. In both cases, the processing path generation apparatus 32 may generate or correct the processing path information so that the difference between the actual shape of the first workpiece W#1 (namely, the measurement information) and the target shape of the first workpiece W#1 after the processing is smaller. In this case, the processing apparatus 1 may resume the suspended first processing operation based on the newly generated or corrected processing path information.

### (2-5) Processing Path Validation Operation

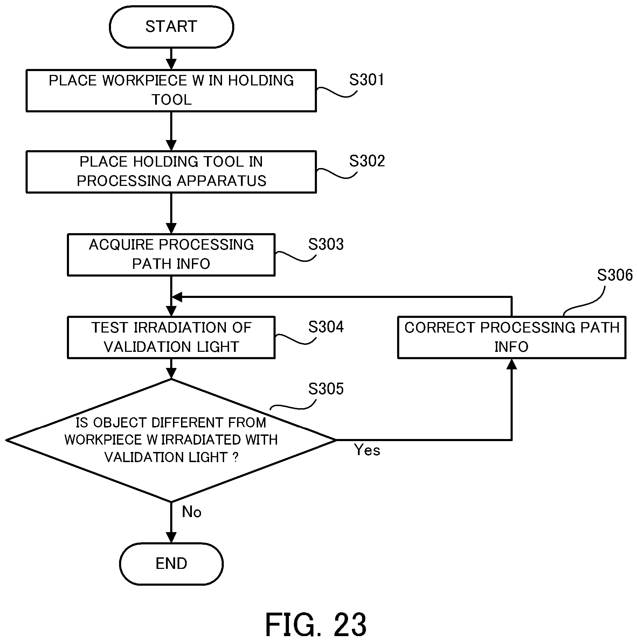

Next, the processing path validation operation for determining whether or not the processing path information is appropriate will be described based on FIG. 23. FIG. 23 is a flowchart that illustrates a flow of the processing path validation operation.

As illustrated in FIG. 23, the workpiece W that should be actually processed by the processing apparatus 1 is placed in the holding tool 5 (a step S301). Namely, the workpiece W is held by the holding tool 5. Alternatively, a test workpiece, which has size and shape that are the same as those of the workpiece W that should be actually processed by the processing apparatus 1, may be placed in the holding tool 5. Then, the holding tool 5 holding the workpiece W is placed on the stage 131 of the processing apparatus 1 (a step S302). Namely, the holding tool 5 is placed at the reference placement position of the stage 131.

In parallel with or before or after the operations from the step S301 to the step S302, the processing apparatus 1 acquires the processing path information that is a validation target (a step S303). Namely, the processing apparatus 1 acquires the processing path information for controlling the processing apparatus 1 to process the workpiece W placed in the holding tool 5 at the step S301.

For example, the processing apparatus 1 acquires, from the measurement system 3, the processing path information generated by the measurement system 3. In this case, the processing apparatus 1 may determine whether or not the processing path information generated by the measurement system 3 is appropriate. Alternatively, the processing apparatus 1 may acquire the processing path information that is different from the processing path information generated by the measurement system 3 as the processing path information that is the validation target. In this case, the processing apparatus 1 may determine whether or not the processing path information, which is different from the processing path information generated by the measurement system 3, is appropriate. For example, the processing apparatus 1 may determine whether or not the processing path information generated by the processing apparatus 1 is appropriate. For example, the processing apparatus 1 may determine whether or not the processing path information generated by a processing path generation apparatus, which is different from the measurement system 3 and the processing apparatus 1, is appropriate.

Then, the processing apparatus 1 performs a test irradiation operation for determining whether or not the processing path information is appropriate under the control of the control apparatus 17 (a step S304). The test irradiation operation includes an operation for irradiating the workpiece W with validation light IL based on the processing path information.

The processing apparatus 1 may use the processing light EL as the validation light IL. Namely, the processing apparatus 1 may use the processing light EL, which is the light emitted from the light source 15, as the validation light IL. In this case, the processing apparatus 1 may use the processing light EL, whose characteristic is different from that of the processing light EL for processing the workpiece W, as the validation light IL. Specifically, the processing apparatus 1 may use the processing light EL, whose intensity is lower (in other words, weaker) than the intensity of the processing light EL for processing the workpiece W, as the validation light IL. Especially, the processing apparatus 1 may use the processing light EL, whose intensity is lower than an intensity by which the workpiece W is molten, as the validation light IL. Namely, the processing apparatus 1 may use the processing light EL, whose intensity is not high enough to melt the workpiece W, as the validation light IL. In this case, even in a case where the workpiece W is irradiated with the validation light IL by the test irradiation operation, the workpiece W is not processed. Therefore, the validation light IL may be referred to as non-processing light. Incidentally, the processing light EL (namely, the validation light IL) whose characteristic is different from that of the processing light EL for processing the workpiece W may be considered to be light that is different from the processing light EL.

However, the processing apparatus 1 may use the processing light EL, whose characteristic is the same as that of the processing light EL for processing the workpiece W, as the validation light IL. For example, the processing apparatus 1 may use the processing light EL, whose intensity is high enough to melt the workpiece W, as the validation light IL.

The processing apparatus 1 may use, as the validation light IL, light emitted from a light source that is different from the light source 15. For example, the processing apparatus 1 may use, as the validation light IL, the guide light GL emitted from at least one guide light irradiation apparatus 124. In this case, the intensity of the validation light IL may be set to be an intensity that is lower than the intensity of the processing light EL for processing the workpiece W. Especially, the intensity of the validation light IL may be set to be an intensity that is lower than the intensity by which the workpiece W is molten. Namely, the intensity of the validation light IL may be set to be an intensity that is not high enough to melt the workpiece W. In this case, even in a case where the workpiece W is irradiated with the validation light IL by the test irradiation operation, the workpiece W is not processed. Therefore, the validation light IL may be referred to as non-processing light. However, the intensity of the validation light IL may be set to be an intensity that is high enough to melt the workpiece W.

In order to determine whether or not the processing path information is appropriate by irradiating the workpiece W with the validation light IL, the control apparatus 17 may generate a validation movement path TR, which is a target movement path of a target irradiation position that should be irradiated with the validation light IL, based on the processing path information acquired at the step S304. Then, the control apparatus 17 may control the processing unit 12 and the stage unit 13 so that the target irradiation position of the validation light IL moves along the generated validation movement path TR. Namely, the control apparatus 17 may control the processing unit 12 and the stage unit 13 so that the workpiece W is irradiated with the validation light IL along the generated validation movement path TR.

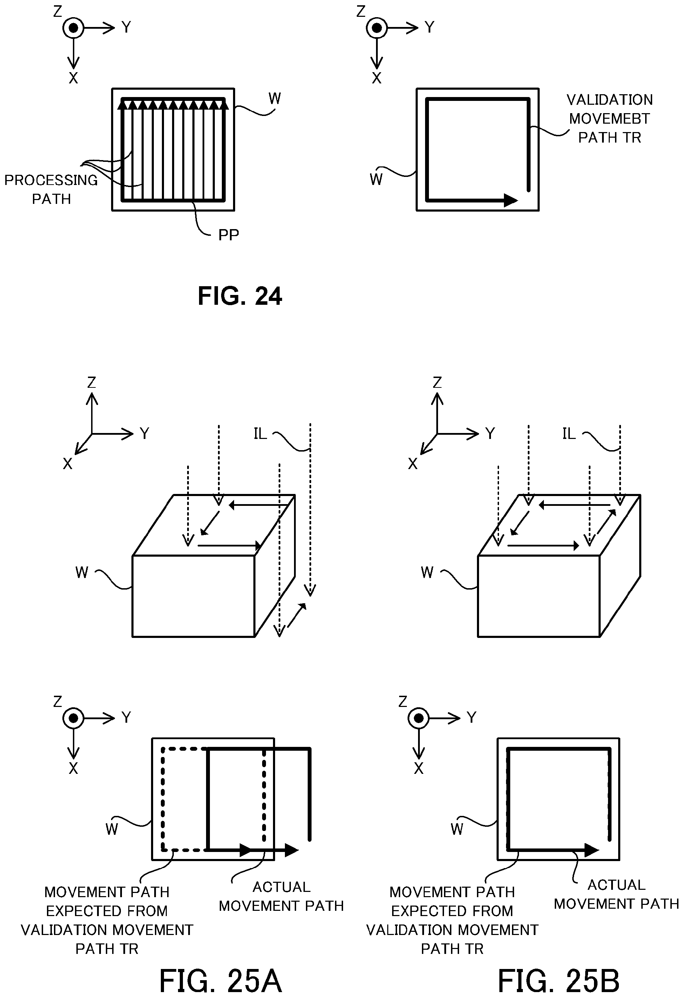

The validation movement path TR may include at least a part of the target movement path, which is indicated by the processing path information, of the target irradiation position (the target irradiation area EA) of the processing light EL. Namely, the validation movement path TR may include at least a part of the processing path. For example, as illustrated in FIG. 24, the validation movement path TR may include a partial processing path (an outermost circumferential path PP), which is positioned at an outermost position on the surface of the workpiece W, of the processing path indicated by the processing path information.

The control apparatus 17 may generate the validation movement path TR based on the processing path information for building at least one structural layer SL of the plurality of structural layers SL that are built to build the three-dimensional structural object ST. For example, the control apparatus 17 may generate the validation movement path TR based on the processing path information for building the first structural layer SL. Namely, the control apparatus 17 may generate the validation movement path TR that includes at least a part of the target movement path of the target irradiation position (the target irradiation area EA) of the processing light EL for building the first structural layer SL. The control apparatus 17 may generate the validation movement path TR that includes a path different from the target movement path of the target irradiation position (the target irradiation area EA) of the processing light EL for building the first structural layer SL.

When the workpiece W is irradiated with the validation light IL by the test irradiation operation, the control apparatus 17 monitors an irradiation state of the validation light IL to the workpiece W (a step S305). Specifically, the imaging apparatus 14 images a state of the validation light IL on the surface of the workpiece W. The control apparatus 17 monitors the irradiation state of the validation light IL to the workpiece W based on the image generated by the imaging apparatus 14.

The control apparatus 17 may determine whether or not an object that is different from the workpiece W is irradiated with the validation light IL by monitoring the irradiation state of the validation light IL to the workpiece W (a step S305).

For example, when the surface of the workpiece W is irradiated with the validation light IL, the validation light IL forms a beam spot on the surface of the workpiece W. Similarly, when a surface of the object different from the workpiece W is irradiated with the validation light IL, the validation light IL forms the beam spot on the surface of the object different from the workpiece W. Here, there is a high possibility that a characteristic of the beam spot formed by the validation light IL on the surface of the workpiece W is different from a characteristic of the beam spot formed by the validation light IL on the surface of the object different from the workpiece W. For example, there is a high possibility that a size of the beam spot formed by the validation light II, on the surface of the workpiece W is different from a size of the beam spot formed by the validation light IL on the surface of the object different from the workpiece W. In this case, the control apparatus 17 may calculate the size of the beam spot formed by the validation light IL from the image captured by the imaging apparatus 14, and determine based on the calculated size of the beam spot whether or not the object different from the workpiece W is irradiated with the validation light IL. Incidentally, the control apparatus 17 may calculate, as the size of the beam spot, a size of an image part whose brightness value is higher than or equal to a predetermined brightness threshold value in the image (for example, the number of pixels whose brightness value is higher than or equal to the predetermined brightness threshold value in the image).

For example, when the state of the validation light IL changes from a state where the workpiece W is irradiated with the validation light IL to a state where the object different from the workpiece W is irradiated with the validation light IL, the beam spot is formed on both of the surface of the workpiece W and the surface of the object different from the workpiece W, and therefore, there is a possibility that the size of the beam spot becomes larger. Therefore, the control apparatus 17 may determine that the object different from the workpiece W is irradiated with the validation light IL in a case where the size of the beam spot is larger than a predetermined first size. The control apparatus 17 may determine that the workpiece W is irradiated with the validation light IL in a case where the size of the beam spot is smaller than the predetermined first size.

For example, when the state of the validation light IL changes from the state where the workpiece W is irradiated with the validation light IL to the state where the object different from the workpiece W is irradiated with the validation light IL, there is a possibility that the beam spot captured in the image becomes darker. Therefore, the control apparatus 17 may determine that the object different from the workpiece W is irradiated with the validation light IL in a case where a brightness of an image part, in which the beam spot is captured, in the image is lower than a predetermined first brightness value. The control apparatus 17 may determine that the workpiece W is irradiated with the validation light IL in a case where the brightness of the image part, in which the beam spot is captured, in the image is higher than the predetermined first brightness value.

For example, when the state of the validation light IL changes from the state where the workpiece W is irradiated with the validation light IL to the state where the object different from the workpiece W is irradiated with the validation light IL in a case where a distance between the surface of the workpiece W and the imaging apparatus 14 is different from a distance between the surface of the object different from the workpiece W and the imaging apparatus 14, there is a possibility that the size of the beam spot calculated form the image becomes larger because the imaging apparatus 14 images the beam spot in a defocused state. This is because the beam spot that is out of focus is captured in the image generated by the imaging apparatus 14. Therefore, the control apparatus 17 may determine that the object different from the workpiece W is irradiated with the validation light IL in a case where the size of the beam spot is larger than a predetermined second size. The control apparatus 17 may determine that the workpiece W is irradiated with the validation light IL in a case where the size of the beam spot is smaller than the predetermined second size.

For example, when the state of the validation light IL changes from the state where the workpiece W is irradiated with the validation light IL to the state where the object different from the workpiece W is irradiated with the validation light IL in a case where the surface of the workpiece W is closer to the imaging apparatus 14 than the surface of the object different from the workpiece W is, there is a possibility that the size of the beam spot becomes smaller. Therefore, the control apparatus 17 may determine that the object different from the workpiece W is irradiated with the validation light IL in a case where the size of the beam spot is smaller than a predetermined third size. The control apparatus 17 may determine that the workpiece W is irradiated with the validation light IL in a case where the size of the beam spot is larger than the predetermined third size.

For example, when the state of the validation light IL changes from the state where the workpiece W is irradiated with the validation light IL to the state where the object different from the workpiece W is irradiated with the validation light IL in a case where the surface of the workpiece W is closer to the imaging apparatus 14 than the surface of the object different from the workpiece W is, there is a possibility that the beam spot is out of an imaging range of the imaging apparatus 14 that is aligned with respect to the workpiece W so as to image the surface of the workpiece W. As a result, there is a possibility that the size of the beam spot calculated from the image is zero. This is because the beam spot is no longer captured in the image generated by the imaging apparatus 14. Therefore, the control apparatus 17 may determine that the object different from the workpiece W is irradiated with the validation light IL in a case where the size of the beam spot is zero (namely, the beam spot disappears from the image).

The imaging apparatus 14 may continuously image the state of the validation light IL on the surface of the workpiece W. As a result, the imaging apparatus 14 may generate a plurality of images as time-series data. The control apparatus 17 may monitor the irradiation state of the validation light IL to the workpiece W based on the plurality of images generated by the imaging apparatus 14. For example, the control apparatus 17 may calculate the size of the beam spot in each of the plurality of images, and determine based on a difference of the size of the beam spot between two temporally consecutive images whether or not the obj ect different from the workpiece W is irradiated with the validation light IL. The control apparatus 17 may determine that the workpiece W is irradiated with the validation light IL in a case where the difference of the size of the beam spot between two temporally consecutive images is smaller than a predetermined difference threshold value. The control apparatus 17 may determine that the object different from the workpiece W is irradiated with the validation light IL in a case where the difference of the size of the beam spot between two temporally consecutive images is larger than the predetermined difference threshold value. Furthermore, the control apparatus 17 may determine a local maximum value of the size of the beam spot on a graph indicating a temporal variation of the size of the beam spot, and determine that a position of the workpiece W corresponding to the determined local maximum value (namely, a position that is irradiated with the validation light IL at a time corresponding to the local maximum value) is a position at which the state of the validation light IL changes from the state where the workpiece W is irradiated with the validation light IL to the state where the object different from the workpiece W is irradiated with the validation light IL or from the state where the object different from the workpiece W is irradiated with the validation light IL to the state where the workpiece W is irradiated with the validation light IL.

Alternatively, in a case where the intensity of the validation light IL is set to be the intensity that is high enough to melt the workpiece W, the validation light IL forms the melt pool MP on the surface of the workpiece W when the surface of the workpiece W is irradiated with the validation light IL. Similarly, the validation light IL forms the melt pool MP on the surface of the object different from the workpiece W when the surface of the object different from the workpiece W is irradiated with the validation light IL. Here, there is a high possibility that a characteristic of the melt pool MP formed by the validation light IL on the surface of the workpiece W is different from a characteristic of the melt pool MP formed by the validation light IL on the surface of the object different from the workpiece W. For example, there is a high possibility that a size of the melt pool MP formed by the validation light IL on the surface of the workpiece W is different from a size of the melt pool MP formed by the validation light IL on the surface of the object different from the workpiece W. In this case, the control apparatus 17 may calculate the size of the melt pool MP formed by the validation light IL from the image captured by the imaging apparatus 14, and determine based on the calculated size of the melt pool MP whether or not the object different from the workpiece W is irradiated with the validation light IL. Incidentally, the size of the melt pool MP formed by the validation light IL is larger as the size of the beam spot formed by the validation light IL is larger. Therefore, the control apparatus 17 may determine based on the size of the melt pool MP whether or not the object different from the workpiece W is irradiated with the validation light IL, as with a case where it determines based on the size of the beam spot whether or not the object different from the workpiece W is irradiated with the validation light IL.

Incidentally, in a case where the melt pool MP is formed, a thermal camera may image the state of the validation light IL on the surface of the workpiece W, in addition to or instead of the imaging apparatus 14. This is because a temperature of the melt pool MP is much higher than a temperature of the workpiece W surrounding the melt pool MP, and therefore the melt pool MP can be distinguished based on the temperature. The control apparatus 17 may calculate the size of the melt pool MP formed by the validation light IL based on a thermal image generated by the thermal camera.

Alternatively, in a case where the intensity of the validation light IL is set to be the intensity that is high enough to melt the workpiece W, a processed portion is formed on the surface of the workpiece W when the surface of the workpiece W is irradiated with the validation light IL. Similarly, a processed portion is formed on the surface of the object different from the workpiece W when the surface of the object different from the workpiece W is irradiated with the validation light IL. Here, there is a high possibility that a characteristic of the processed portion formed by the validation light IL on the surface of the workpiece W is different from a characteristic of the processed portion formed by the validation light IL on the surface of the object different from the workpiece W. For example, there is a high possibility that a size of the processed portion formed by the validation light IL on the surface of the workpiece W is different from a size of the processed portion formed by the validation light IL on the surface of the object different from the workpiece W. In this case, the control apparatus 17 may calculate the size of the processed portion formed by the validation light IL from the image captured by the imaging apparatus 14, and determine based on the calculated size of the processed portion whether or not the object different from the workpiece W is irradiated with the validation light IL. Incidentally, the size of the processed portion formed by the validation light IL is larger as the size of the beam spot formed by the validation light IL is larger. Therefore, the control apparatus 17 may determine based on the size of the processed portion whether or not the object different from the workpiece W is irradiated with the validation light IL, as with a case where it determines based on the size of the beam spot whether or not the object different from the workpiece W is irradiated with the validation light IL.

Here, with reference to FIG. 25A and FIG. 25B, a technical reason for determining whether or not the object different from the workpiece W is irradiated with the validation light IL will be described.

FIG. 25A illustrates a first example of an actual movement path of an irradiation position of the validation light IL in a case where the workpiece W is irradiated with the validation light IL along the validation movement path TR illustrated in FIG. 24. The movement path of the irradiation position of the validation light IL that is expected from the validation movement path TR illustrated in FIG. 24 is always positioned on the surface of the workpiece W, however, a part of the actual movement path of the irradiation position of the validation light IL illustrated in FIG. 25A is positioned on the surface of the object different from the workpiece W. In this case, there is a high possibility that the processing path information that is used to generate the validation movement path TR is not appropriate. Therefore, in a case where it is determined that the object different from the workpiece W is irradiated with the validation light IL as a result of the determination at the step S305 (the step S305: Yes), the control apparatus 17 may determine that the processing path information acquired at the step S303 is not appropriate.

On the other hand, FIG. 25B illustrates a second example of the actual movement path of the irradiation position of the validation light IL in a case where the workpiece W is irradiated with the validation light IL along the validation movement path TR illustrated in FIG. 24. The movement path of the irradiation position of the validation light IL that is expected from the validation movement path TR illustrated in FIG. 24 is always positioned on the surface of the workpiece W, and the actual movement path of the irradiation position of the validation light IL illustrated in FIG. 25A is also positioned on the surface of the workpiece W. In this case, there is a high possibility that the processing path information that is used to generate the validation movement path TR is appropriate. Therefore, in a case where it is determined that the workpiece W is irradiated with the validation light IL as a result of the determination at the step S305 (the step S305: No), the control apparatus 17 may determine that the processing path information acquired at the step S303 is appropriate.

As a result of the determination at the step S305, in a case where it is determined that the processing path information acquired at the step S303 is not appropriate (the step S305: Yes), the control apparatus 17 may correct the processing path information acquired at the step S303.

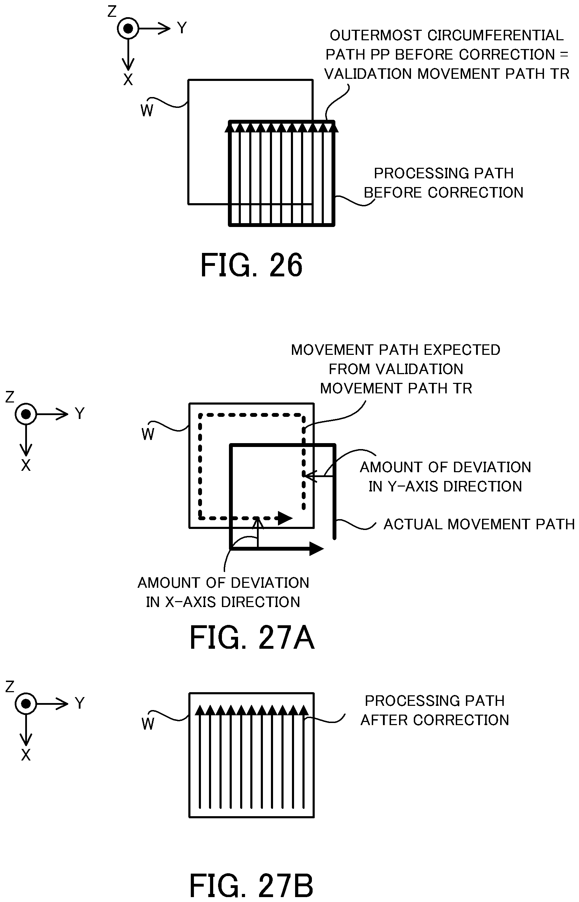

Here, in a case where the object different from the workpiece W is irradiated with the validation light IL, there is a possibility that the processing path indicated by the processing path information that is not corrected is deviated from its expected position on the surface of the workpiece W along a direction that is along the surface of the workpiece W, as illustrated in FIG. 26. For example, in a case where the object different from the workpiece W is irradiated with the validation light IL as a result of the validation movement path TR including the outermost circumferential path PP of the processing path being irradiated with the validation light IL, there is a possibility that the outermost circumferential path PP corresponding to the validation movement path TR is deviated from its expected position on the surface of the workpiece W along the direction that is along the surface of the workpiece W. As a result, there is a possibility that the processing path inside the outermost circumferential path PP is also deviated from its expected position on the surface of the workpiece W along the direction that is along the surface of the workpiece W. In this case, there is a possibility that the object different from the workpiece W is irradiated with the processing light EL with which the workpiece W is irradiated to process the workpiece W. Therefore, the control apparatus 17 may correct the processing path information so as to correct this deviation of the processing path. Namely, the control apparatus 17 may correct the processing path information so that the corrected processing path indicates the expected position on the surface of the workpiece W.

In order to correct the processing path information, the control apparatus 17 may correct the processing path information based on a positional relationship between the workpiece W and the actual movement path of the irradiation position of the validation light IL. For example, the control apparatus 17 may determine the actual movement path of the irradiation position of the validation light IL from the image captured by the imaging apparatus 14. The control apparatus 17 may determine a movement path of the beam spot (alternatively, the melt pool MP or the processed portion) as the actual movement path of the irradiation position of the validation light IL. Then, as illustrated in FIG. 27A, the control apparatus 17 may calculate, from the positional relationship between the workpiece W and the actual movement path of the irradiation position of the validation light IL, at least an amount of the deviation and a direction of the deviation of the actual movement path of the irradiation position of the validation light IL from the movement path of the irradiation position of the validation light IL that is expected from the validation movement path TR. In an example illustrated in FIG. 27A, the control apparatus 17 calculates both of the amount of the deviation and the direction of the validation by calculating the amount of the deviation in the X-axis direction and the amount of the deviation in the Y-axis direction. The amount of the deviation between the actual movement path of the irradiation position of the validation light IL and the movement path of the irradiation position of the validation light IL that is expected from the validation movement path TR corresponds to the amount of the deviation of the processing path. Therefore, the control apparatus 17 may correct the processing path information by moving the processing path indicated by the processing path information by the calculated amount of the deviation, as illustrated in FIG. 27B. Similarly, the direction of the deviation between the actual movement path of the irradiation position of the validation light IL and the movement path of the irradiation position of the validation light IL that is expected from the validation movement path TR corresponds to the direction of the deviation of the processing path. Therefore, the control apparatus 17 may correct the processing path information by moving the processing path indicated by the processing path information toward a direction that is opposite to the calculated direction of the deviation, as illustrated in FIG. 27B. As a result, the corrected processing path information becomes the appropriate processing path information, as illustrated in FIG. 27B.

In a case where the processing path information is corrected, the processing apparatus 1 processes the workpiece W based on the corrected processing path information. As a result, the processing apparatus 1 can process the workpiece W more accurately, compared to a case where the workpiece W is processed based on the processing path information that is not corrected.

The processing apparatus 1 may perform the above-described processing path validation operation before starting the processing of the workpiece W. The processing apparatus 1 may perform the above-described processing path validation operation after starting the processing of the workpiece W. The processing apparatus 1 may perform the above-described processing path validation operation after temporarily suspending the processing of the workpiece W. In this case, the processing apparatus 1 may perform the test irradiation operation by using the validation movement path TR that is generated by the processing path validation operation performed before starting the processing of the workpiece W. Alternatively, the processing apparatus 1 may generate a new validation movement path TR different from the validation movement path TR that is generated by the processing path validation operation performed before starting the processing of the workpiece W, and perform the test irradiation operation by using the generated new validation movement path TR. Moreover, in a case where the processing path validation operation is performed after temporality suspending the processing of the workpiece W, the processing apparatus 1 may perform the test irradiation operation by irradiating the uncompleted workpiece W with the validation light IL. For example, in a case where the processing apparatus 1 is the additive manufacturing apparatus, the processing apparatus 1 may perform the test irradiation operation by irradiating the build object built by the additive manufacturing with the validation light IL. For example, in a case where the processing apparatus 1 is the subtractive manufacturing apparatus, the processing apparatus 1 may perform the test irradiation operation by irradiating the workpiece W, from which a partial structural objects has been removed by the subtractive manufacturing, with the validation light IL. Then, the processing apparatus 1 may resume the suspended processing of the workpiece W after completing the processing path validation operation.

Incidentally, in a case where the plurality of workpieces W are held by the holding tool 5, the processing system SYS may perform the processing path validation operation on all of the workpieces W or only on a part of the workpieces W. The processing system SYS may also omit performing the processing path validation operation. For example, in a case where the workpiece W that does not require a high processing accuracy is to be processed, the processing system SYS may start the processing the workpiece W without performing the processing path validation operation.

### (3) Technical Effect

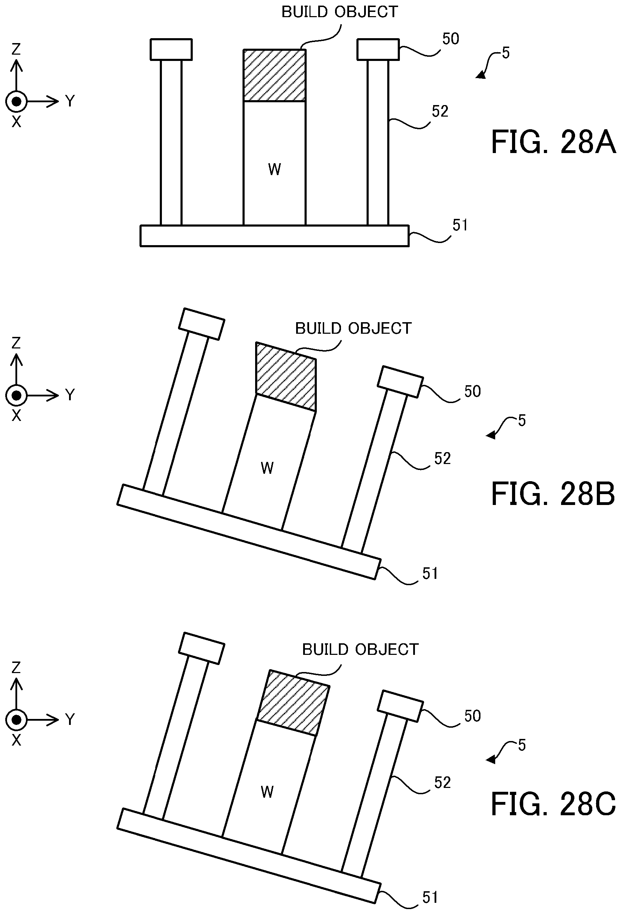

As described above, the processing system SYS in the present example embodiment generates the processing path information based on the measurement information indicating the measured result of the three-dimensional shape of each of the holding tool 5 and the workpiece W and the calibration information 3222. Therefore, the processing system SYS can generate the processing path information for controlling the processing apparatus 1 to accurately process the workpiece W. Next, with reference to FIUG. 28Ato FIG. 28C, a reason for this will be described.

First, if the calibration operation is not performed, the processing path information is generated based on the three-dimensional shape of the workpiece W measured by the measurement system 3 without using the calibration information 3222 that indicates the actual position of the holding tool 5 placed at the reference placement position of the processing apparatus 1.

In this case, in a case where the holding tool 5 is placed in an ideal state at the reference placement position of the processing apparatus 1 as illustrated in FIG. 28A, the processing apparatus 1 can appropriately process the workpiece W by using the processing path information generated without using the calibration information 3222. FIG. 28A illustrates an example in which the processing apparatus 1 is the additive manufacturing apparatus. In this case, the processing apparatus 1 can appropriately build the build objects having the appropriate shape on the workpiece W.

On the other hand, the holding tool 5 is not always placed in the ideal state at the reference placement position of the processing apparatus 1. For example, there is a possibility that the holding tool 5, which is placed at the reference placement position as illustrated in FIG. 28A, is tilted as illustrated in FIG. 28B. Namely, there is a possibility that the holding tool 5 is rotated from the ideal state by a predetermined rotational amount around a rotational axis that is at least one of the X-axis, the Y-axis, and the Z-axis. For example, there is a possibility that the holding tool 5 placed at the reference placement position is deviated. Namely, there is a possibility that the holding tool 5 deviated from the ideal state by a predetermined translational distance along at least one of the X-axis, the Y-axis, and the Z-axis. Moreover, there is a possibility that the holding tool 5 is not manufactured as designed or that a part of the holding tool 5 (for example, the support member 52) is deformed and the reference part 522 is not positioned as ideal (as designed). In this case, there is a possibility that the processing apparatus 1 cannot process the workpiece W appropriately by using the processing path information generated without using the calibration information 3222. For example, FIG. 28A to FIG. 28C illustrates an example in which the processing apparatus 1 the additive manufacturing apparatus. In this case, there is a possibility that the processing apparatus 1 unintentionally build the build object having an abnormal shape different from the appropriate shape on the workpiece W, as illustrated in FIG. 28B.

Therefore, in the present example embodiment, the processing path information is generated by using the calibration information 3222 that indicates the actual position of the holding tool 5 placed at the reference placement position of the processing apparatus 1. Therefore, the processing path information reflects the rotation and the positional deviation of the holding tool 5 described above. Therefore, as illustrated in FIG. 28C, the processing apparatus 1 can process the workpiece W appropriately by using the processing path information generated by using the calibration information 3222. Namely, the processing apparatus 1 can process the workpiece W appropriately not only in a case where the holding tool 5 is placed in the ideal state at the reference placement position of the processing apparatus 1, but also in a case where the holding tool 5 is not placed in the ideal state at the reference placement position of the processing apparatus 1. As a result, the processing accuracy of the processing apparatus 1 improves. Moreover, in a case where the base plate 50 attached to the holding tool 5 is processed by the processing light EL and the position of the processed portion is measured in order to generate the calibration information 3222, it is possible to generate more accurate calibration information 3222 for the combination of the processing apparatus 1 and the holding tool 5.

Furthermore, in the present example embodiment, the calibration information 3222 is generated for each combination pattern of the processing apparatus 1 and the holding tool 5. In this case, even in a case where the state of the rotation and the positional deviation of the holding tool 5 described above is different for each combination pattern of the processing apparatus 1 and the holding tool 5, the processing apparatus 1 can process the workpiece W held by the holding tool 5 appropriately.

Furthermore, in the processing system SYS, the measurement system 3, which is different from the processing apparatus 1, generates the processing path information. Therefore, the measurement system 3 can generate the processing path information for each of the plurality of processing apparatuses 1. For example, the measurement system 3 can generate the processing path information used by a first processing apparatus 1 and the processing path information used by a second processing apparatus 1 that is different from the first processing apparatus 1. In this case, considering that the processing apparatus 1 takes a long time to process the workpiece W, a throughput required for processing the workpiece W as a whole of the processing system SYS improves, compared to a case where each of the plurality of processing apparatus 1 generates its own processing path information.

Furthermore, the processing system SYS can perform the processing path validation operation. In a case where it is determined that the processing path information is not appropriate, the processing system SYS can correct the processing path information. As a result, the processing system SYS can process the workpiece W more accurately, compared to a case where the workpiece W is processed based on the processing path information that is not corrected.

Incidentally, the processing system SYS in the present example embodiment can contribute a Goal 9 "Industry, Innovation and Infrastructure" and a Target 9-4 "By 2030, upgrade infrastructure and retrofit industries to make them sustainable, with increased resource-use efficiency and greater adoption of clean and environmentally sound technologies and industrial processes, with all countries taking action in accordance with their respective capabilities" in SDGs (Sustainable Development Goals) lead by the United Nation.

### (4) Modified Example

### (4-1) Modified Example of Calibration Operation

In the above-described description, the processed portion measurement apparatus 2 measures the position of the processed portion of the base plate 50 processed by the processing apparatus 1. However, the processing apparatus 1 may measure the position of the processed portion of the base plate 50, in addition to or instead of the processed portion measurement apparatus 2. For example, the processing apparatus 1 may include the processed portion measurement apparatus 2, and the processing apparatus 1 may measure the position of the processed portion of the base plate 50 by using the processed portion measurement apparatus 2. For example, the processing apparatus 1 may measure the position of the processed portion of the base plate 50 by using the imaging apparatus 14 of the processing apparatus 1. In this case, the processing system SYS may process the base plate 50 by using the processing apparatus 1 in a state where the holding tool 5 is placed at the reference placement position, and measure the position of the processed portions by using the processed portion measurement apparatus 2 in a state where the holding tool 5 keeps being placed at the reference placement position. Alternatively, the measurement system 3 may measure the position of the processed portion of the base plate 50. In this case, the measurement system 3 may include a measurement apparatus for measuring the position of the processing apparatus of the base plate 50. Alternatively, the measurement system 3 may measure the position of the processed portion of the base plate 50 by using the shape measurement apparatus 31.

In the above-described description, the processing apparatus 1 processes the base plate 50 and the calibration information 3222 is generated based on the processed portion position information indicating the measured result of the position of the processed portion of the base plate 50. However, the processing apparatus 1 may not process the base plate 50. In this case, for example, a mark may be formed in advance on the surface of the base plate 50. The calibration information 3222 may be generated based on a measured result of a position of the mark on the base plate 50. However, in this case, the processing apparatus 1 may measure the position of the mark on the base plate 50. Specifically, the processing apparatus 1 may measure the position of the mark formed on the base plate 50 set in the processing apparatus 1 by using a measurement apparatus (for example, the processed portion measurement apparatus 2 or the imaging apparatus 14 described above) of the processing apparatus 1. Even in this case, the measurement system 3 (especially the processing path generation apparatus 32) may calculate the position of the holding tool 5 (for example, the position of the reference part 522 in at least one of the X-axis direction and the Y-axis direction) in the processing coordinate system based on the measured result of the position of the mark formed on the base plate 50 and the information related to the positional relationship between the reference part 522 of the holding tool 5 and the base plate 50. Therefore, even in a case where the processing apparatus 1 does not process the base plate 50, the processing system SYS can achieve the above-described effect. Namely, the processing system SYS can process the workpiece W accurately while considering a variation of a placed aspect of the holding tool 5 in the processing apparatus 1 (in other words, an attachment error of the holding tool 5 to the processing apparatus 1).

However, in a case where the processing apparatus 1 processes the base plate 50, the processing system SYS can process the workpiece W accurately while considering an attachment error of at least one of the processing head 121 and the stage 131, in addition to the variation of the placed aspect of the holding tool 5 in the processing apparatus 1 (in other words, the attachment error of the holding tool 5 to the processing apparatus 1). This is because the position of the processed portion formed on the base plate 50 by the processing apparatus 1 depends on the attachment error of at least one of the processing head 121 and the stage 131, and therefore, the measurement of the position of the processed portion is equivalent to the measurement of the position of the processed portion reflecting the attachment error of at least one of the processing head 121 and the stage 131.

The processing apparatus 1 may process a member that is different from the base plate 50, in addition to or instead of processing the base plate 50. For example, a member (for example, at least one of a thermal paper, a photosensitive paper, and the like) made of a material that reacts to the processing light EL may be placed on the base plate 50. At least one member such as the thermal paper, the photosensitive paper, and the like may be pasted on the base plate 50. In this case, the processing apparatus 1 may irradiate the member with the processing light EL. The processed portion measurement apparatus 2 may measure a mark (for example, a heat-sensitive mark or a light-sensitive mark) formed on the member by the processing light EL.

### (4-2) Modified Example of Processing Path Generation Operation

In the above-described description, the measurement system 3 transmits the generated processing path information to the processing apparatus 1. However, the measurement system 3 may transmit the generated processing path information to a relay server, and the relay server may transmits the processing path information, which is received from the measurement system 3, to the processing apparatus 1.

In the above-described description, the measurement system 3 generates the processing path information. However, an apparatus that is different from the measurement system 3 may generate the processing path information. For example, the processing apparatus 1 (especially, the control apparatus 17) may generate the processing path information. In this case, the measurement system 3 may transmit, to the processing apparatus 1, the measurement information indicating the measured result of the three-dimensional shape of each of the holding tool 5 and the workpiece W by the measurement system 3 and the calibration information 3222. The processing apparatus 1 may generate the processing path information based on the measurement information and calibration information 3222 received from the measurement system 3. Alternatively, for example, a server that is different from the processing apparatus 1 and the measurement system 3 may generate the processing path information. In this case, the measurement system 3 may transmit, to the server, the measurement information indicating the measured result of the three-dimensional shape of each of the holding tool 5 and the workpiece W by the measurement system 3 and the calibration information 3222. The server may generate the processing path information based on the measurement information and calibration information 3222 received from the measurement system 3. The server may transmit the generated processing path information to the processing apparatus 1.

The calibration information 3222 generated for each combination pattern of the processing apparatus 1 and the holding tool 5 may be stored in the storage apparatus 322 of the measurement system 3 as batch information that is associated with a plurality of pieces of information. For example, the calibration information 3222 may be stored as the batch information in which the processing path information (for example, at least one of the processing path information generated at the step S207 in FIG. 20 and the processing path information corrected at the step S303 in FIG. 23) is associated with the calibration information 3222. For example, the calibration information 3222 may be stored as the batch information in which at least one of unique information of the workpiece W, a three-dimensional model of the workpiece W (for example, the measurement model), a three-dimensional model having a three-dimensional shape of the processing part that should be processed by the processing apparatus 1 (namely, the processing model), a three-dimensional model representing the shape of the workpiece W after repairing (for example, the target model, which may be referred to as a post-repair model), and a processing history of the processing apparatus 1 in addition to or instead of the processing path information is associated with the calibration information 3222. Moreover, the batch information may include information related to the processing apparatus 1, which has actually processed the workpiece W, of the plurality of processing apparatuses 1. Moreover, the batch information may include information related to the measurement system 3 that has actually measured the workpiece W. The batch information may be stored in the processing apparatus 1, may be stored in the measurement system 3, or may be stored in an apparatus that is different from the processing apparatus 1 and the measurement system 3. For example, the batch information may be stored in a server, in a software on a customer's terminal or in a cloud software. Moreover, the batch information may include information related to a time at which at least one of the processing and the measurement of the workpiece W is expected to be performed. Moreover, the batch information may include information related to a time at which at least one of the processing and the measurement of the workpiece W has been actually performed. For example, the batch information may include a measurement time, a processing time, and time series information in various operations of the processing system SYS. In this case, the batch information may be generated for each combination pattern of the processing apparatus 1, the holding tool 5, and a processing date and time. In this case, latest information may be used as the batch information, and the batch information may be updated (in other words, overwritten) as appropriate. The batch information may be displayed on a display apparatus so that an operator and a manager can view it.

### (4-3) Modified Example of Processing Path Validation Operation

In the above-described description, the validation movement path TR along which the irradiation position of the validation light IL moves includes at least a part of the target movement path (namely, the processing path) of the target irradiation position (the target irradiation area EA) of the processing light EL indicated by the processing path information. However, the validation movement path TR may include a path that is different from the target movement path of the target irradiation position (the target irradiation area EA) of the processing light EL indicated by the processing path information. Namely, the validation movement path TR may include a path that is different from the processing path.

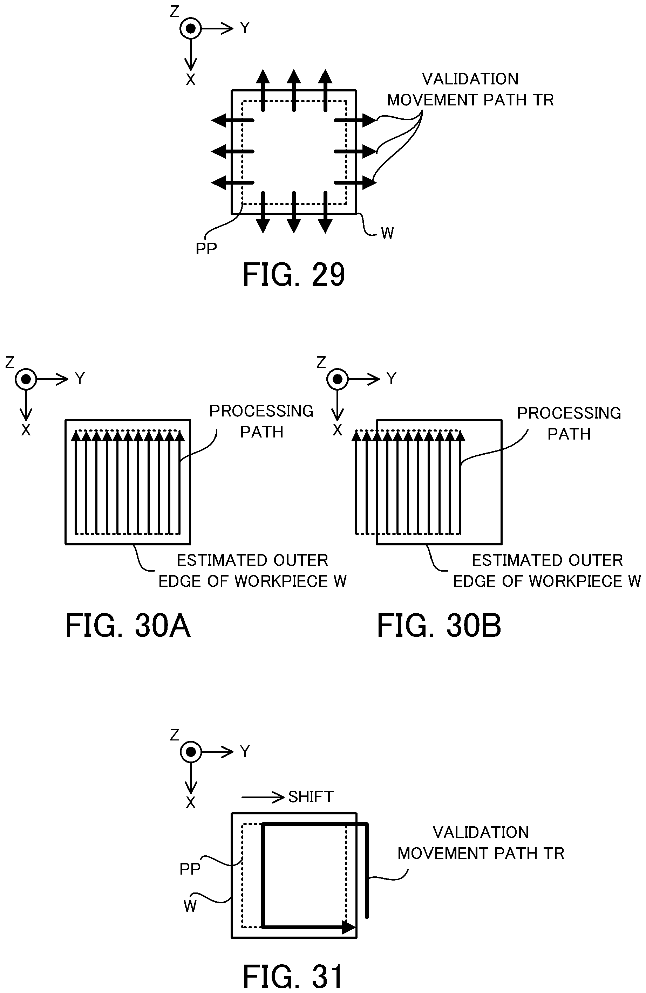

For example, the validation movement path TR may include a path that intersects at least a part of the processing path. As one example, as illustrated in FIG. 29, the validation movement path TR may include an intersection path that intersects the outermost circumferential path PP of the processing path indicated by the processing path information. Especially, the validation movement path TR may include a plurality of intersection paths that intersect the outermost circumferential path PP of the processing path indicated by the processing path information.

The processing apparatus 1 may perform the test irradiation operation so that the irradiation position of the validation light IL moves from an inside to an outside of the outermost circumferential path PP, as illustrated in FIG. 29. However, the processing apparatus 1 may perform the test irradiation operation so that the irradiation position of the validation light IL moves from the outside to the inside of the outermost circumferential path PP.

Here, in a case where the validation movement path TR including the intersection path that intersects the processing path is generated, there is a high possibility that a timing at which the workpiece W should be irradiated with the validation light IL and a timing at which the workpiece W should not be irradiated with the validation light IL appear in the process of moving the irradiation position of the validation light IL along the validation movement path TR by the test irradiation operation. Namely, there is a high possibility that a timing at which the workpiece W should be irradiated with the validation light IL and a timing at which the object different from the workpiece W should be irradiated with the validation light IL appear. Therefore, there is a high possibility that the irradiation state of the validation light IL changes (for example, the size of the beam spot, the melt pool MP, or the processed portion change by a predetermined amount or more) in a period during which the control apparatus 17 monitors the irradiation state of the validation light IL. Namely, the control apparatus 17 may intentionally change the state of the validation light IL between the state where the workpiece W is irradiated with the validation light IL and the state where the object different from the workpiece W is irradiated with the validation light IL by generating the validation movement path TR including the intersection path that intersects the processing path.

In this case, the control apparatus 17 may detect a timing at which the irradiation state of the validation light IL changes. As a result, the control apparatus 17 may estimate an outer edge of the workpiece W by monitoring the irradiation state of the validation light IL. Specifically, the control apparatus 17 may estimate the outer edge of the workpiece W by connecting positions at which the irradiation state of the validation light IL changes on a plurality of intersections paths. As a result, as illustrated in FIG. 30A and FIG. 30B, the control apparatus 17 may estimate a positional relationship between the workpiece W (specifically, the estimated outer edge of the workpiece W) and the processing path. In this case, in a case where the processing path is positioned inside the estimated outer edge of the workpiece W as illustrated in FIG. 30A, the control apparatus 17 may determine that the processing path information is appropriate. On the other hand, in a case where at least a part of the processing path is positioned outside the estimated outer edge of the workpiece W as illustrated in FIG. 30B, the control apparatus 17 may determine that the processing path information is not appropriate. In this case, the control apparatus 17 may correct the processing path information based on the positional relationship between the workpiece W (specifically, the outer edge of the estimated workpiece W) and the processing path.

Thus, even in a case where the validation movement path TR including the intersection path that intersects the processing path is generated, the processing system SYS can appropriately determine whether or not the processing path information is appropriate. Therefore, the processing system SYS can process the workpiece W accurately.

Incidentally, as illustrated in FIG. 31, the validation movement path TR may include a path that is acquired by shifting at least a part of the processing path by a predetermined distance. As one example, as illustrated in FIG. 31, the validation movement path TR may include a path that is acquired by shifting the outermost circumferential path PP of the processing path indicated by the processing path information by the predetermined distance. Even in this case, there is a high possibility that the irradiation state of the validation light IL changes in the period during which the control apparatus 17 monitors the irradiation state of the validation light IL. Therefore, the above-described effect can be achieved.

### (4-4) Modified Example of Holding Tool 5

A mark may be formed on the connecting member 53 of the holding tool 5. For example, a sticker indicating the mark may be pasted to the connecting member 53 of the holding tool 5. The mark formed on the connecting member 53 may be used for the measurement of the holding tool 5. For example, the processing path generation unit 3212 may calculate a position of the mark formed on the connecting member 53 in the processing coordinate system based on the transformation matrix, after the transformation matrix, which is for transforming the position in either one of the processing coordinate system and the measurement coordinate system to the position in the other one of the processing coordinate system or the measurement coordinate system, is generated. Then, the processing path generation unit 3212 may generate the processing path information based on the positions of the mark in the processing coordinate system.

A predetermined reading code may be formed on the holding tool 5. For example, the reading code may be formed on at least one of the bottom member 51, the support member 52, and the connecting member 53 of the holding tool 5. The reading code may include a one-dimensional code (for example, a bar code). The reading code may include a two-dimensional code (for example, a QR code). Incidentally, the reading code may be formed on the workpiece W in addition to or instead of the holding tool 5.

The reading code may include information for identifying the holding tool 5. For example, the reading code may include unique identification information of the holding tool 5. The processing apparatus 1 may identify the holding tool 5 placed in the processing apparatus 1 by acquiring the information included in the reading code. The measurement system 3 may identify the holding tool 5 placed in the measurement system 3 by acquiring the information included in the reading code. A control apparatus (for example, the control server 6) that is different from the processing apparatus 1 and the measurement system 3 may identify the holding tool 5 placed in the processing apparatus 1 or the measurement system 3 by acquiring the information included in the reading code. Incidentally, the information included in the reading code may be acquired by using a reading apparatus (for example, a code scanner) of at least one of the processing apparatus 1 and the measurement system 3. The information included in the reading code may be acquired by using a reading apparatus (for example, a handheld scanner) of the user.

At least one of the processing apparatus 1, the measurement system 3, and the control apparatus may acquire information that is usable for processing the workpiece W by using the holding tool 5 identified based on the information included in the reading code. As one example, in a case where the holding tool 5 placed in the processing apparatus 1 or the measurement system 3 is identified as the holding tool 5 to which an identification number "0001" is assigned based on the information included in the reading code, at least one of the processing apparatus 1, the measurement system 3, and the control apparatus may acquire information that is usable for processing the workpiece W by using the information related to the holding tool 5 to which the identification number "0001" is assigned. As another example, in a case where the holding tool 5 placed in the processing apparatus 1 or the measurement system 3 is identified as the holding tool 5 to which an identification number "0002" is assigned based on the information included in the reading code, at least one of the processing apparatus 1, the measurement system 3, and the control apparatus may acquire information that is usable for processing the workpiece W by using the information related to the holding tool 5 to which the identification number "0002" is assigned. In this case, the processing apparatus 1 may process the workpiece W by using the acquired information. The measurement system 3 may generate the processing path information by using the acquired information.

At least one of the calibration information, the processing path information, the unique information of the workpiece W, the three-dimensional model of the workpiece W (for example, the measurement model), the three-dimensional model having the three-dimensional shape of the processing part that should be processed by the processing apparatus 1 (namely, the processing model), and the three-dimensional model representing the shape of the workpiece W after repairing (for example, the target model, which may be referred to as the post-repair model) is one example of the information that is usable for processing the workpiece W by using the holding tool 5. The above-described batch information is one example of the information that is usable for processing the workpiece W by using the holding tool 5.

Thus, in a case where the batch information (alternatively, each information included in the batch information, the same may be applied in this paragraph below) is acquired by using the reading code, the batch information may be reused. Therefore, the processing system SYS may not generate the batch information again by reusing the batch information. For example, in a case where the calibration information 3222 can be reused, the measurement system 3 may determine the holding tool 5 by using the reading code and acquire the calibration information 3222 corresponding to the determined holding tool 5 at the step S205 in FIG. 20. The measurement system 3 may determine the holding tool 5 by using the reading code and acquire the processing model data corresponding to the determined holding tool 5 at the step S206 in FIG. 20. The measurement system 3 may determine the holding tool 5 by using the reading code and acquire the processing path information corresponding to the determined holding tool 5 at the step S207 in FIG. 20. Therefore the throughput of the processing system SYS improves.

The batch information acquired by using the reading code (alternatively, each information included in the batch information, the same may be applied in this paragraph below) may be displayed by a display apparatus. For example, the display apparatus of at least one of the above-described first computer of the processing apparatus 1, the above-described second computer of the processed portion measurement apparatus 2, the above-described third computer of the measurement system 3, and the control server 6 may display the batch information. The display apparatus of an information terminal (for example, a laptop computer, a smartphone, or a tablet terminal) of the user of the processing system SYS may display the batch information. As a result, the user can check the contents of the batch information.

Incidentally, in a case where the batch information is stored in at least one of the processing apparatus 1, the measurement system 3, and another apparatus as described above, the batch information may be stored in a state where the information included in the reading code (namely, the information for uniquely identifying the holding tool 5) is associated with the batch information.

### (4-5) Other Modified Example

In the above-described description, the processing apparatus 1 processes the workpiece W by using the processing light EL. However, the processing apparatus 1 may process the workpiece W by using any energy beam. At least one of a charged particle beam, an electromagnetic wave and the like is one example of any energy beam. A least one of an electron beam, an ion beam and the like is one example of the charged particle beam.

At least a part of the features of each example embodiment described above may be appropriately combined with at least another part of the features of each example embodiment described above. A part of the features of each example embodiment described above may not be used. Moreover, the disclosures of all publications and United States patents related to an apparatus and the like cited in each embodiment described above are incorporated in the disclosures of the present application by reference if it is legally permitted.

The present invention is not limited to the above described examples and is allowed to be changed, if desired, without departing from the essence or spirit of the invention which can be read from the claims and the entire specification, and a processing method, a processing system, and an information acquisition method, which involve such changes, are also intended to be within the technical scope of the present invention.

### Description of Reference Codes

- SYS: processing system
- 1: processing apparatus
- 12: processing unit
- 13: stage unit
- 14: imaging apparatus
- 17: control apparatus
- 2: processed portion measurement apparatus
- 3: measurement system
- 31: shape measurement apparatus
- 32: processing path generation apparatus
- 321: calculation apparatus
- 3211: calibration unit
- 3212: processing path generation unit
- 322: storage apparatus
- 3220: calibration information DB
- 3222: calibration information
- 4: transport apparatus
- 5: holding tool
- 50, 50A, 50B: base plate
- 509: reference part
- 51: bottom member
- 52: support member
- 521: plate fixing member
- 522: reference part
- 523: stopper
- W: workpiece
- EL: processing light
- IL: validation light
- MP: melt pool

## Claims

1. A processing method that processes a processing target object by using a processing apparatus configured to process the processing target object by irradiating the processing target object held by a holding tool with a processing beam, wherein
the processing method comprises:
acquiring holding tool information that includes information related to a position of a reference part of the holding tool, which is placed at a reference placement position of the processing apparatus, in a processing coordinate system of the processing apparatus;
setting the holding tool holding the processing target object in a measurement apparatus;
acquiring, by using the measurement apparatus, measurement information that includes information related to a three-dimensional shape of the processing target object on the holding tool in a measurement coordinate system of the measurement apparatus and information related to a position of the reference part in the measurement coordinate system;
taking the holding tool holding the processing target object out of the measurement apparatus;
generating processing path information indicating a target irradiation position, which should be irradiated with the processing beam to process the processing target object, in the processing coordinate system based on the measurement information and the holding tool information that has been acquired before setting the holding tool, which holds the processing target object and which has been taken out of the measurement apparatus, in the processing apparatus;
placing the holding tool, which holds the processing target object and which has been taken out of the measurement apparatus, at the reference placement position of the processing apparatus; and
processing the processing target object on the holding tool, which is placed at the reference placement position of the processing apparatus, based on the processing path information.

2. The processing method according to claim 1, wherein
a reference member is positioned in the holding tool to have a predetermined positional relationship with respect to the reference part,
the acquiring the holding tool information includes:
placing the holding tool at the reference placement position;
performing a processing on a surface of the reference member of the holding tool placed at the reference placement position by irradiating a specific coordinate in the processing coordinate system with the processing beam by using the processing beam; and
measuring a position of a processed part of the surface of the reference member.

3. The processing method according to claim 2, wherein
the measurement apparatus is a first measurement apparatus,
the measuring the position of the processed part of the surface of the reference member includes measuring the position of the processed part of the surface of the reference member by using a second measurement apparatus that is different from the first measurement apparatus.

4. The processing method according to claim 3, wherein
the measurement using the second measurement apparatus includes:
detaching the reference member, on which the processing has been performed, from the holding tool after the processing is performed on the surface of the reference member of the holding tool;
placing the reference member, which has been detached from the holding tool, in the second measurement apparatus; and
measuring the position of the processed part on the reference member by using the second measurement apparatus.

5. The processing method according to claim 4, wherein
the holding tool information is calculated based on a target position of the processed part on the reference member and the position of the processed part, which is measured by using the second measurement apparatus, on the reference member.

6. The processing method according to any one of claims 2 to 5, wherein
the measurement of the processed part of the reference member is performed after the holding tool is detached from the processing apparatus.

7. The processing method according to any one of claims 2 to 6, wherein
the acquiring the holding tool information includes acquiring position information of the reference member in the processing coordinate system in a state where the holding tool is placed at the reference placement position of the processing apparatus.

8. The processing method according to any one of claims 1 to 7 comprising:
detaching the holding tool from the processing apparatus after the processing of a first processing target object is completed, wherein the processing target object is the first processing target object;
detaching the first processing target object, which has been processed, from the holding tool;
placing the holding tool, to which a second processing target object different from the first processing target object is attached, in a measurement apparatus;
acquiring, by using the measurement apparatus, second measurement information that includes information related to a three-dimensional shape of the second processing target object on the holding tool in a measurement coordinate system of the measurement apparatus and information related to a position of the reference part in the measurement coordinate system, wherein the measurement information is first measurement information;
taking the holding tool holding the second processing target object out of the measurement apparatus;
generating second processing path information indicating a target irradiation position, which should be irradiated with the processing beam to process the second processing target object, in the processing coordinate system based on the second measurement information and the holding tool information, wherein the processing path information is first processing path information;
placing the holding tool, which holds the second processing target object and which has been taken out of the measurement apparatus, at the reference placement position of the processing apparatus; and
processing the second processing target object on the holding tool, which is placed at the reference placement position of the processing apparatus, based on the second processing path information.

9. The processing method according to any one of claims 1 to 8 comprising:
detaching a first holding tool from the processing apparatus after the processing of a first processing target object is completed, wherein the processing target object is the first processing target object and the holding tool is the first holding tool;
placing a second holding tool, which holds a third processing target object different from the first processing target object and which is different from the first holding tool, in a measurement apparatus;
acquiring, by using the measurement apparatus, third measurement information that includes information related to a three-dimensional shape of the third processing target object on the second holding tool in a measurement coordinate system of the measurement apparatus and information related to a position of a reference part of the second holding tool in the measurement coordinate system, wherein the measurement information is first measurement information;
taking the second holding tool holding the third processing target object out of the measurement apparatus;
generating third processing path information indicating a target irradiation position, which should be irradiated with the processing beam to process the third processing target object, in the processing coordinate system based on the third measurement information and second holding tool information that includes information related to a position of the reference part of the second holding tool in the processing coordinate system, wherein the holding tool information is first holding tool information and the processing path information is first processing path information;
placing the second holding tool, which holds the third processing target object and which has been taken out of the measurement apparatus, at the reference placement position of the processing apparatus; and
processing the third processing target object on the second holding tool, which is placed at the reference placement position of the processing apparatus, based on the third processing path information.

10. The processing method according to claim 9, wherein
the second holding tool information is acquired before placing the second holding tool, which holds the third processing target object and which has been taken out of the measurement apparatus, at the reference placement position of the processing apparatus.

11. The processing method according to claim 9 or 10, wherein
the second holding tool information includes information related to a position of the reference part of the second holding tool, which is placed at the reference placement position of the processing apparatus, in the processing coordinate system.

12. The processing method according to any one of claims 9 to 11, wherein
a second reference member is positioned in the second holding tool to have a predetermined positional relationship with respect to the reference part,
the acquiring the second holding tool information includes:
placing the second holding tool at the reference placement position;
performing a processing on a surface of the second reference member of the second holding tool placed at the reference placement position by irradiating a specific coordinate in the processing coordinate system with the processing beam by using the processing beam; and
measuring a position of a processed part of the surface of the second reference member.

13. The processing method according to any one of claims 1 to 12, wherein
the processing apparatus is an additive manufacturing apparatus or a subtractive manufacturing apparatus.

14. The processing method according to any one of claims 1 to 13, wherein
the processing method comprises processing a fourth processing target object, which is attached to the holding tool and which is different from a first processing target object, by using a second processing apparatus different from a first processing apparatus in a second processing coordinate system of the second processing apparatus, wherein the processing target object is the first processing target object, the processing apparatus is the first processing apparatus, and the processing coordinate system is a first coordinate system,
processing the fourth processing target object, which is attached to the holding tool, by using the second processing apparatus includes:
placing the holding tool, to which the fourth processing target object is attached, in a measurement apparatus;
acquiring, by using the measurement apparatus, fourth measurement information that includes information related to a three-dimensional shape of the fourth processing target object on the holding tool in a measurement coordinate system of the measurement apparatus and information related to a position of the reference part in the measurement coordinate system, wherein the measurement information is first measurement information;
taking the holding tool holding the fourth processing target object out of the measurement apparatus;
generating fourth processing path information indicating a target irradiation position, which should be irradiated with the processing beam to process the fourth processing target object, in the second processing coordinate system based on the fourth measurement information and third holding tool information that includes information related to a position of the reference part in the second processing coordinate system, wherein the holding tool information is first holding tool information and the processing path information is first processing path information;
placing the holding tool, which holds the fourth processing target object and which has been taken out of the measurement apparatus, at a reference placement position of the second processing apparatus; and
processing the fourth processing target object on the holding tool, which is placed at the reference placement position of the second processing apparatus, based on the fourth processing path information.

15. The processing method according to claim 14, wherein
the third holding tool information includes information related to a position of the reference part of the holding tool, which is placed at the reference placement position of the second processing apparatus, in the second processing coordinate system.

16. The processing method according to claim 14 or 15, wherein
the third holding tool information is acquired before placing the holding tool, which holds the fourth processing target object, at the reference placement position of the second processing apparatus.

17. The processing method according to any one of claims 14 to 16, wherein
a third reference member is positioned in a second holding tool to have a predetermined positional relationship with respect to the reference part,
the acquiring the third holding tool information includes:
placing the holding tool at the reference placement position of the second processing apparatus;
performing a processing on a surface of the third reference member of the holding tool placed at the reference placement position of the second processing apparatus by irradiating a specific coordinate in the second processing coordinate system with the processing beam by using the processing beam; and
measuring a position of a processed part of the surface of the third reference member.

18. The processing method according to any one of claims 14 to 17, wherein
one of the first processing apparatus and the second processing apparatus is an additive manufacturing apparatus, and
the other one of the first processing apparatus and the second processing apparatus is a subtractive manufacturing apparatus.

19. The processing method according to any one of claims 1 to 17, wherein
the processing method comprises:
placing the holding tool, which is detached from the processing apparatus while keeping holding a fifth processing target object, in a measurement apparatus and acquiring fifth measurement information that includes information related to a three-dimensional shape of the fifth processing target object, wherein the measurement information is first measurement information and the processing target object that has been processed based on the processing path information is the fifth processing target object; and
processing the fifth processing target object, which is held by the holding tool, by using a third processing apparatus different from a first processing apparatus in a third processing coordinate system of the third processing apparatus based on the fifth measurement information, wherein the processing apparatus is the first processing apparatus, and the processing coordinate system is a first coordinate system,

20. The processing method according to claim 19, wherein
the fifth measurement information includes information related to a three-dimensional shape of the fifth processing target object on the holding tool in a measurement coordinate system of the measurement apparatus and information related to a position of the reference part in the measurement coordinate system,
processing the fifth processing target object, which is held by the holding tool, by using the third processing apparatus includes:
generating fifth processing path information indicating a target irradiation position, which should be irradiated with the processing beam to process the fifth processing target object, in the third processing coordinate system based on the fifth measurement information and fourth holding tool information that includes information related to a position of the reference part in the third processing coordinate system, wherein the processing path information is first processing path information and the holding tool information is first holding tool information;
placing the holding tool, which holds the fifth processing target object and which has been taken out of the measurement apparatus, at a reference placement position of the third processing apparatus; and
processing the fifth processing target object on the holding tool, which is placed at the reference placement position of the third processing apparatus, based on the fifth processing path information.

21. The processing method according to claim 20, wherein
the fourth holding tool information includes information related to a position of the reference part of the holding tool, which is placed at the reference placement position of the third processing apparatus, in the third processing coordinate system.

22. The processing method according to claim 20 or 21, wherein
the fourth holding tool information is acquired before placing the holding tool, which holds the fifth processing target object, at the reference placement position of the third processing apparatus.

23. The processing method according to any one of claims 19 to 21, wherein
one of the first processing apparatus and the third processing apparatus is an additive manufacturing apparatus, and
the other one of the first processing apparatus and the third processing apparatus is a subtractive manufacturing apparatus.

24. The processing method according to claim 23, wherein
the first processing apparatus is an additive manufacturing apparatus, and
the third processing apparatus is a subtractive manufacturing apparatus.

25. The processing method according to any one of claims 1 to 24 comprising:
irradiating the processing target object with a beam based on the generated processing path information;
detecting an irradiation state of the beam to the processing target object;
correcting the generated processing path information in a case where it is determined based on a detected result of the irradiation state that an object different from the processing target object is irradiated with the processing beam; and
processing the processing target object by irradiating the processing target object with the processing beam based on the corrected processing path information.

26. A processing method that processes a processing target object by using a processing apparatus configured to process the processing target object by irradiating the processing target object held by a holding tool with a processing beam, wherein
the processing method comprises:
acquiring holding tool information that includes information related to a position of a reference part of the holding tool, which is placed at a reference placement position of the processing apparatus, in a processing coordinate system of the processing apparatus;
setting the holding tool holding the processing target object in a measurement apparatus;
acquiring, by using the measurement apparatus, measurement information that includes information related to a three-dimensional shape of the processing target object on the holding tool in a measurement coordinate system of the measurement apparatus and information related to a position of the reference part in the measurement coordinate system;
taking the holding tool holding the processing target object out of the measurement apparatus;
generating processing path information indicating a target irradiation position, which should be irradiated with the processing beam to process the processing target object, in the processing coordinate system based on the holding tool information and the measurement information;
placing the holding tool, which holds the processing target object and which has been taken out of the measurement apparatus, at the reference placement position of the processing apparatus;
irradiating the processing target object with a non-processing beam, which is different from the processing beam, based on the generated processing path information;
detecting an irradiation state of the non-processing beam to the processing target object; and
processing the processing target object on the holding tool, which is placed at the reference placement position of the processing apparatus, based on the generated processing path information and a detected result of the irradiation state.

27. The processing method according to claim 26, wherein
the processing method further comprises correcting the generated processing path information based on the detected result,
the processing of the processing target object is performed by irradiating the processing target object with the processing beam based on the corrected processing path information.

28. The processing method according to claim 26 or 27, wherein
the processing path information includes a target movement path of the target irradiation position.

29. The processing method according to claim 28, wherein
the irradiating the processing target object with the non-processing beam based on the generated processing path information includes irradiating the processing target object with the non-processing beam along the target movement path.

30. The processing method according to claim 28, wherein
the irradiating the processing target object with the non-processing beam based on the generated processing path information includes irradiating the processing target object with the non-processing beam along a validation movement path that includes a path different from the target movement path.

31. The processing method according to any one of claims 1 to 30, wherein
a reference member is positioned in the holding tool to have a predetermined positional relationship with respect to the reference part,
the acquiring the holding tool information includes:
placing the holding tool at the reference placement position;
performing a processing on a surface of the reference member of the holding tool placed at the reference placement position by irradiating a specific coordinate in the processing coordinate system with the processing beam by using the processing beam; and
measuring a position of a processed part of the surface of the reference member.

32. The processing method according to any one of claim 31, wherein
a reference member for measurement is positioned in the holding tool to have a predetermined positional relationship with respect to the reference part, wherein the reference member is a reference member for processing,
the information that is related to the position of the reference part in the measurement coordinate system and that is included in the measurement information is calculated based on information that is acquired by using the measurement apparatus and that is related to a three-dimensional shape of at least a part of the reference member for measurement in the measurement coordinate system.

33. The processing method according to claim 32, wherein
the reference member for measurement is attached to the holding tool instead of the reference member for processing.

34. The processing method according to claim 32 or 33, wherein
a three-dimensional shape of the reference member for measurement is different from a three-dimensional shape of the reference member for processing.

35. The processing method according to any one of claims 32 to 34, wherein
the reference member for measurement includes a first reference surface and a second reference surface whose height is different from that of the first reference surface.

36. The processing method according to any one of claims 32 to 34, wherein
the acquiring the holding tool information includes:
placing the holding tool, in which the reference member for measurement is positioned, at the reference placement position of the processing apparatus; and
acquiring position information of the reference member for measurement in the processing coordinate system in the processing apparatus.

37. The processing method according to claim 36, wherein
the reference member for measurement includes a first reference surface and a second reference surface whose height is different from that of the first reference surface,
the acquiring the position information of the reference member for measurement includes measuring a position of the second reference surface.

38. The processing method according to claim 37, wherein
the measuring the position of the second reference surface includes irradiating the second reference surface with a plurality of measurement beams from the processing apparatus.

39. The processing method according to claim 35, 37, or 38, wherein
a shape of the second reference surface in a planar view is a shape that is asymmetrical about a point.

40. The processing method according to any one of claims 32 to 39, wherein
a plurality of reference members for measurement are positioned in the holding tool,
acquiring position information of the reference member for measurement includes acquiring position information of each of the plurality of reference members for measurement,
generating the holding tool information includes generating the holding tool information based on a measured result of the position of the processed part and the position information of each of the plurality of reference members for measurement.

41. The processing method according to any one of claims 1 to 30, wherein
a reference member is positioned in the holding tool to have a predetermined positional relationship with respect to the reference part,

42. The processing method according to claim 41, wherein
the acquiring the holding tool information includes placing the holding tool at the reference placement position.

43. The processing method according to claim 42, wherein
the acquiring the holding tool information includes acquiring position information of the reference member in the processing coordinate system in a state where the holding tool is placed at the reference placement position.

44. The processing method according to claim 43, wherein
the holding tool information is calculated based on a target position information of the reference member in the processing coordinate system and the acquired position information.

45. The processing method according to claim 43 or 44, wherein
a mark is formed on a surface of the reference member,
the acquiring the position information of the reference member includes acquiring position information of the mark in the processing coordinate system.

46. The processing method according to claim 45, wherein
a reference member for measurement is positioned in the holding tool to have a predetermined positional relationship with respect to the reference part,
the information that is related to the position of the reference part in the measurement coordinate system and that is included in the measurement information is calculated based on information that is acquired by using the measurement apparatus and that is related to a three-dimensional shape of at least a part of the reference member for measurement in the measurement coordinate system.

47. The processing method according to claim 46, wherein
the reference member for measurement is attached to the holding tool instead of the reference member on which the mark is formed

48. The processing method according to claim 46 or 47, wherein
a three-dimensional shape of the reference member for measurement is different from a three-dimensional shape of the reference member on which the mark is formed.

49. The processing method according to any one of claims 41 to 48, wherein
the information that is related to the position of the reference part in the measurement coordinate system and that is included in the measurement information is calculated based on information that is acquired by using the measurement apparatus and that is related to a three-dimensional shape of at least a part of the reference member for measurement in the measurement coordinate system.

50. The processing method according to any one of claims 41 to 49, wherein
the reference member includes a first reference surface and a second reference surface whose height is different from that of the first reference surface.

51. The processing method according to any one of claims 1 to 50 further comprising placing the holding tool, which is detached from the processing apparatus while keeping holding the processing target object that has been processed based on the processing path information, in the measurement apparatus and acquiring information related to a three-dimensional shape of the processing target object that has been processed.

52. The processing method according to any one of claims 1 to 51, wherein
the generating the processing path information includes generating processing model data in the processing coordinate system based on the holding tool information, the measurement information, and information related to a target shape of the processing target object after the processing.

53. The processing method according to claim 52, wherein
the generating the processing model data includes:
generating, based on information that is included in the measurement information and that is related to a three-dimensional shape of the processing target object and information related to a target shape of the processing target object, difference model data related to a difference between the three-dimensional shape of the processing target object and the target shape in the measurement coordinate system;
transforming, based on the holding tool information and position information of the reference part in the measurement coordinate system included in the measurement information, the difference model data to difference model data in the processing coordinate system as the processing model data.

54. The processing method according to claim 52, wherein
the acquiring the information related to the three-dimensional shape of the processing target object includes generating first measurement model data of a three-dimensional shape of the processing target object in the measurement coordinate system,
the generating the processing model data includes:
transforming, based on the holding tool information and position information of the reference part in the measurement coordinate system included in the measurement information, the first measurement model data to second measurement model data in the processing coordinate system; and
transforming, based on the holding tool information and position information of the reference part in the measurement coordinate system included in the measurement information, first target model data related to the target shape in the measurement coordinate system to second target model data related to the target shape in the processing coordinate system,
the processing model data is generated based on the second measurement model data and the second target model data.

55. The processing method according to any one of claims 1 to 54, wherein
the generating the processing path information includes determining a positional relationship between the processing target object and the reference part in the measurement coordinate system based on position information of the reference part in the measurement coordinate system included in the measurement information,
the processing path information is generated based on the positional relationship between the processing target object and the reference part in the measurement coordinate system and the holding tool information.

56. The processing method according to any one of claims 1 to 55, wherein
the holding tool information is generated for each combination of a plurality of holding tools including the holding tool and a plurality of processing apparatuses including the processing apparatus.

57. The processing method according to any one of claims 1 to 56, wherein
the acquiring the holding tool information includes acquiring one piece of position information corresponding to an actual combination pattern of the processing apparatus and the holding tool that are used to actually process the processing target object from among a plurality of pieces of holding tool information that respectively correspond to different combination patterns of the processing apparatus and the holding tool.

58. The processing method according to any one of claims 1 to 57, wherein
the processing the processing target object includes:
processing a first directional surface of the processing target object; and
processing a second directional surface, whose direction is different from that of the first directional surface, after processing the first directional surface.

59. The processing method according to claim 58, wherein
the processing the processing target object includes changing a pose of an object placing apparatus, on which the holding tool is placed, before processing the second directional surface.

60. The processing method according to any one of claims 1 to 59, wherein
a plurality of reference parts and a plurality of support members, which support the plurality of reference parts, respectively, are positioned in the holding tool,
the plurality of support members are connected by connecting members, respectively.

61. The processing method according to claim 60, wherein
heights of the connecting members are different form each other.

62. The processing method according to any one of claims 1 to 61, wherein
at least a part of the holding tool information is acquired in the processing apparatus.

63. The processing method according to any one of claims 1 to 62, wherein
the processing method comprises inputting the processing path information to the processing apparatus after generating the processing path information.

64. The processing method according to any one of claims 1 to 63, wherein
a reference member is positioned in the holding tool to have a predetermined positional relationship with respect to the reference part,
the reference member is detachably fixed to the holding tool.

65. The processing method according to any one of claims 1 to 64, wherein
the processing by the processing apparatus includes building a build object on the processing target object by supplying a build material to a position that is irradiated with the processing beam toward the processing target object.

66. An information acquisition method that acquires holding tool information related to a holding tool, which is used to process a processing target object by a processing apparatus that is configured to process the processing target object by irradiating the processing target object held by the holding tool with a processing beam, wherein
the information acquisition method comprises:
placing the holding tool at a reference placement position of the processing apparatus;
performing a processing on a surface of a reference member, which is positioned in the holding tool to have a predetermined positional relationship with respect to a reference part of the holding tool placed at the reference placement position, by irradiating a specific coordinate in a processing coordinate system of the processing apparatus with the processing beam by using the processing beam;
measuring a position of a processed part of the surface of the reference member; and
acquiring, based on a result of the measuring, the holding tool information that includes information related to a position of the reference part of the holding tool, which is placed at the reference placement position, in the processing coordinate system.

67. The information acquisition method according to claim 66, wherein
the measuring the position of the processed part includes measuring the position of the processed part in each of a first direction that is along a surface of the reference member and a second direction that is along the surface and that intersects the first direction.

68. The information acquisition method according to claim 67, wherein
a plurality of reference surfaces are positioned in the holding tool,
one of the plurality of reference surfaces is a surface of the reference member,
each of the plurality of reference surfaces is processed by the processing beam
the position in the first direction of the processed part of each of the plurality of reference surfaces is measured, and
the holding tool information is acquired based on a measured result of the position in the first direction.

69. The information acquisition method according to claim 68, wherein
the position in the second direction of the processed part of each of the plurality of reference surfaces is measured, and
the holding tool information is acquired based on a measured result of the position in the second direction.

70. The information acquisition method according to claim 68 or 69, wherein
at least two of the plurality of reference surfaces are positioned at positions that are different along the first direction, and
at least two of the plurality of reference surfaces are positioned at positions that are different along the second direction.

71. The information acquisition method according to claim 70, wherein
at least two of the plurality of reference surfaces are positioned at positions that are different along a third direction intersecting both of the first direction and the second direction.

72. The information acquisition method according to any one of claims 66 to 71, wherein
the reference member is detachably fixed to the holding tool.

73. The information acquisition method according to any one of claims 66 to 72, wherein
the information acquisition method further comprises acquiring second holding tool information related to a second holding tool, which is used to process a processing target object held by the second holding tool different from a first holding tool by the processing apparatus, wherein the holding tool is the first holding tool and the holding tool information is the first holding tool information,
the acquiring the second holding tool information includes:
placing the second holding tool at the reference placement position;
performing a processing on a surface of a second reference member, which is positioned in the holding tool to have a predetermined positional relationship with respect to a reference part of the second holding tool placed at the reference placement position, by irradiating a specific coordinate in the processing coordinate system with the processing beam by using the processing beam, wherein the reference member is a first reference member;
measuring a position of a processed part of the surface of the second reference member; and
acquiring, based on a result of the measuring, the second holding tool information that includes information related to a position of the reference part of the second holding tool, which is placed at the reference placement position, in the processing coordinate system.

74. The information acquisition method according to claim 73, wherein
the first reference member is the same as the second reference member.

75. The information acquisition method according to any one of claims 66 to 74 further comprising acquiring third holding tool information related to the holding tool, which is used to process a processing target object held by the holding tool by a second processing apparatus different from a first processing apparatus, wherein the processing apparatus is the first processing apparatus and the holding tool information is the first holding tool information, wherein
the acquiring the third holding tool information includes:
placing the holding tool at a reference placement position of the second processing apparatus;
performing a processing on a surface of a third reference member, which is positioned in the holding tool to have a predetermined positional relationship with respect to the reference part of the holding tool placed at the reference placement position of the second processing apparatus, by irradiating a specific coordinate in a processing coordinate system of the second processing apparatus with the processing beam by using the processing beam, wherein the reference member is a first reference member;
measuring a position of a processed part of the surface of the third reference member; and
acquiring, based on a result of the measuring, the third holding tool information that includes information related to a position of the reference part of the holding tool in a processing coordinate system of the processing apparatus.

76. The information acquisition method according to claim 75, wherein
the first reference member is the same as the third reference member.

77. The information acquisition method according to any one of claims 66 to 76, wherein
the holding tool information is acquired for each combination of the holding tool and the processing apparatus.

78. The information acquisition method according to any one of claims 66 to 77, wherein
the holding tool information is acquired for each combination of a plurality of holding tools including the holding tool and a plurality of processing apparatuses including the processing apparatus.

79. A processing method that processes a processing target object by using a processing apparatus configured to process the processing target object by irradiating the processing target object with a processing beam, wherein
the processing method comprises:
acquiring processing path information indicating a target movement path of a target irradiation position, which should be irradiated with the processing beam to process the processing target object;
irradiating the processing target object with a beam from the processing apparatus based on the acquired processing path information;
detecting an irradiation state in which the processing target object is irradiated with the beam;
correcting the acquired processing path information in a case where it is determined based on a detected result of the irradiation state that an object different from the processing target object is irradiated with the processing beam; and
processing the processing target object by irradiating the processing target object with the processing beam based on the corrected processing path information.

80. The processing method according to claim 79, wherein
the irradiating the processing target object with the beam based on the acquired processing path information includes irradiating the processing target object with the beam along the target movement path.

81. The processing method according to claim 79, wherein
the irradiating the processing target object with the beam based on the acquired processing path information includes irradiating the processing target object with the beam along a validation movement path that includes a path different from the target movement path.

82. The processing method according to claim 81, wherein
the validation movement path includes a path intersecting the target movement path.

83. The processing method according to any one of claims 79 to 82, wherein
the correcting the acquired processing path information including correcting the acquired processing path information based on a positional relationship between the processing target object and an actual movement path of an actual irradiation position, which is actually irradiated with the beam, in at least a part of an irradiation period of the beam.

84. The processing method according to any one of claims 79 to 83, wherein
the correcting the acquired processing path information includes:
calculating, based on a positional relationship between the processing target object and an actual movement path of an actual irradiation position, which is actually irradiated with the beam, in at least a part of an irradiation period of the beam, an amount of a deviation between the target movement path and the actual movement path; and
correcting the acquired processing path information by moving the target movement path, which is indicated by the acquired processing path information, by the calculated amount of the deviation.

85. The processing method according to any one of claims 79 to 84, wherein
the correcting the acquired processing path information includes:
calculating, based on a positional relationship between the processing target object and an actual movement path of an actual irradiation position, which is actually irradiated with the beam, in at least a part of an irradiation period of the beam, a direction of a deviation of the actual movement path from the target movement path; and
correcting the acquired processing path information by moving the target movement path, which is indicated by the acquired processing path information, toward a direction that is opposite to the calculated direction of the deviation.

86. The processing method according to any one of claims 79 to 85, wherein
the irradiating the processing target object with the beam based on the acquired processing path information includes irradiating the processing target object with the beam so that an irradiation position of the beam moves along a partial path part, which is positioned at an outermost position on a surface of the processing target object, of the target movement path.

87. The processing method according to any one of claims 79 to 86, wherein
the irradiating the processing target object with the beam based on the acquired processing path information includes irradiating the processing target object with the beam so that an irradiation position of the beam moves along a path intersecting a partial path part, which is positioned at an outermost position on a surface of the processing target object, of the target movement path.

88. The processing method according to any one of claims 79 to 87, wherein
an intensity of the beam with which the processing target object is irradiated based on the acquired processing path information is lower than an intensity of the processing beam with which the processing target object is irradiated based on the corrected processing path information.

89. The processing method according to any one of claims 79 to 88 further comprising:
irradiating the processing target object with a non-processing beam, which is different from the processing beam, based on the acquired processing path information; and
detecting an irradiation state of the non-processing beam to the processing target object.

90. The processing method according to claim 89, wherein
the acquired processing path information is corrected based on the detected result,
the processing of the processing target object is performed by irradiating the processing target object with the processing beam based on the corrected processing path information.

91. The processing method according to any one of claims 1 to 65 and 79 to 90, wherein
the processing target object includes a turbine,
the turbine is restored by the processing.

92. A processing system that is configured to perform the processing method according to any one of claims 1 to 65 and 79 to 90.

93. The processing system according to claim 92 depending on any one of claims 1 to 65, wherein
the processing system comprises: the processing apparatus; the measurement apparatus; and a transport apparatus that transport the holding tool, which is detached from the measurement apparatus, to the processing apparatus.

94. The processing system according to claim 93, wherein
the transport apparatus is configured to transport the holding tool holding the processing target object, which has been processed by the processing apparatus, to the measurement apparatus.

95. A processing method that processes a processing target object by using a processing apparatus configured to process the processing target object by irradiating the processing target object held by a holding tool with a processing beam, wherein
the processing method comprises:
setting the holding tool holding the processing target object in a measurement apparatus;
acquiring, by using the measurement apparatus, measurement information that includes information related to a three-dimensional shape of the processing target object on the holding tool in a measurement coordinate system of the measurement apparatus;
taking the holding tool holding the processing target object out of the measurement apparatus;
generating processing path information indicating a target irradiation position, which should be irradiated with the processing beam to process the processing target object, in a processing coordinate system of the processing apparatus based on the measurement information;
placing the holding tool, which holds the processing target object and which has been taken out of the measurement apparatus, at a reference placement position of the processing apparatus; and
processing the processing target object on the holding tool, which is placed at the reference placement position of the processing apparatus, based on the processing path information.

96. The processing method according to claim 95, wherein
the processing method further comprises:
placing the holding tool at the reference placement position;
performing a processing on a reference member, which is positioned in the holding tool placed at the reference placement position, by irradiating a specific coordinate in the processing coordinate system with the processing beam by using the processing beam; and
measuring a position of a processed part of the reference member,
the generating the processing path information includes generating the processing path information based on the measurement information and a measured result of the position of the processed part of the reference member.

97. The processing method according to any one of claim 95 or 96, wherein
the processing apparatus performs an additive manufacturing on the processing target object by supplying a material to a melt pool that is formed on the processing target object by an irradiation of the processing beam.

98. The processing method according to claim 95, wherein
the processing apparatus performs an additive manufacturing on the processing target object by supplying a material to a melt pool that is formed on the processing target object by an irradiation of the processing beam,
the processing method comprises acquiring position information of at least one of at least a part of the processing target object and a reference member of the holding tool in the processing coordinate system after starting the additive manufacturing.

99. The processing method according to claim 97 or 98 comprising:
correcting the processing path information based on position information, which is acquired after starting the additive manufacturing, of at least one of at least a part of the processing target object and a reference member of the holding tool in the processing coordinate system; and
resuming the additive manufacturing on the processing target object based on the corrected processing path information.

100. The processing method according to claim 98 or 99, wherein
the holding tool holds a plurality of processing target objects including the processing target object,
a part of each of the plurality of processing target object, on which the additive manufacturing has been performed by the processing apparatus, includes a plurality of layers,
the additive manufacturing of the plurality of layers of another processing target object is started after completing the additive manufacturing of the plurality of layers of one processing target object among the plurality of processing target objects.

101. The processing method according to any one of claims 95 to 100 further comprising calibration information that is unique to a combination of the processing apparatus and the holding tool before setting the holding tool, which holds the processing target object and which has been taken out of the measurement apparatus, in the processing apparatus,
the processing path information is generated based on the measurement information and the calibration information.
